# EUROPÄISCHE PATENTSCHRIFT

(11) **EP 2 147 079 B1**
(45) Veröffentlichungstag und Bekanntmachung des Hinweises auf die Patenterteilung: **10.10.2012**
(21) Anmeldenummer: 08734936.1
(22) Anmeldetag: 01.04.2008
(51) Int. Cl.: C09K 19/34, C09K 19/42

(54) **FLÜSSIGKRISTALLINES MEDIUM UND FLÜSSIGKRISTALLANZEIGE**
LIQUID CRYSTALLINE MEDIUM AND LIQUID CRYSTAL DISPLAY
MILIEUX DE CRISTAUX LIQUIDES ET ÉCRANS À CRISTAUX LIQUIDES

(30) Priorität: 24.04.2007 DE 102007019671
(43) Veröffentlichungstag der Anmeldung: 27.01.2010
(73) Patentinhaber: Merck Patent GmbH, 64293 Darmstadt (DE)
(72) Erfinder: CZANTA, Markus, 64289 Darmstadt (DE); TAUGERBECK, Andreas, 64285 Darmstadt (DE); BENDER, Renate, 64291 Darmstadt (DE); LIETZAU, Lars, 64295 Darmstadt (DE)
(86) Internationale Anmeldenummer: PCT/EP2008/002584
(87) Internationale Veröffentlichungsnummer: WO 2008/128623

(56) Entgegenhaltungen:
- EP-A- 1 006 109
- EP-A- 1 454 975
- DE-A1- 19 528 107

## Beschreibung

### Gebiet der Erfindung

Die vorliegende Erfindung betrifft flüssigkristalline Medien und diese Medien enthaltende Flüssigkristallanzeigen, speziell Anzeigen, die durch eine Aktivmatrix adressiert werden und insbesondere Anzeigen des Typs Twisted Nematic (TN), In Plane Switching (IPS) oder Fringe Field Switching (FFS).

### Stand der Technik und zu lösendes Problem

Flüssigkristallanzeigen (Liquid Crystal Displays - LCDs) werden in vielen Bereichen genutzt, um Informationen anzuzeigen. LCDs werden sowohl für Direktsichtanzeigen als auch für Anzeigen des Projektionstyps verwendet. Als elektrooptische Modi werden beispielsweise Twisted Nematic (TN), Super Twisted Nematic (STN), Optically Compensated Bend (OCB) und Electrically Controlled Birefringence (ECB) zusammen mit ihren verschiedenen Modifikationen sowie andere verwendet. Alle diese Modi nutzen ein elektrisches Feld, das im Wesentlichen rechtwinklig zu den Substraten beziehungsweise zur Flüssigkristallschicht verläuft. Neben diesen Modi gibt es auch elektrooptische Modi, die ein elektrisches Feld nutzen, das im Wesentlichen parallel zu den Substraten beziehungsweise der Flüssigkristallschicht verläuft, wie etwa der In-Plane Switching (IPS) Modus (wie z.B. in DE 40 00 451 und EP 0 588 568 offenbart) und im Fringe Field Switching (FFS) Modus, in dem ein starkes sogenanntes "fringe field" vorliegt, also ein starkes elektrisches Feld nahe am Rande der Elektronen und in der gesamten Zelle ein elektrisches Feld, welches sowohl eine starke vertikale Komponente als auch eine starke horizontale Komponente aufweist. Vor allem diese beiden letzteren elektrooptischen Modi werden für LCDs in modernen Tischmonitoren verwendet und sind für die Nutzung in Anzeigen für Fernseher und Multimedia-Anwendungen vorgesehen. Die Flüssigkristalle gemäß der vorliegenden Erfindung werden vorzugsweise in Anzeigen dieser Art verwendet. Generell werden in FFS-Displays dielektrisch positive, flüssigkristalline Medien mit eher kleineren Werten der dielektrischen Anisotropie verwendet, aber auch bei IPS-Displays werden teilweise flüssigkristalline Medien mit einer dielektrischen Anisotropie von nur ca. 3 oder sogar darunter verwendet.

Für diese Anzeigen sind neue flüssigkristalline Medien mit verbesserten Eigenschaften erforderlich. Insbesondere müssen die Ansprechzeiten für viele Arten von Anwendungen verbessert werden. Es sind daher flüssigkristalline Medien mit geringeren Viskositäten (η), speziell mit geringeren Rotationsviskositäten (γ1) erforderlich. Die Rotationsviskosität sollte 80 mPa·s oder weniger, vorzugsweise 60 mPa·s oder weniger und speziell 55 mPa·s oder weniger betragen. Neben diesem Parameter müssen die Medien über einen Bereich der nematischen Phase mit geeigneter Breite und Lage, sowie eine geeignete Doppelbrechung (Δn) verfügen und dielektrische Anisotropie (Δε) sollte hoch genug sein, um eine einigermaßen niedrige Betriebsspannung zu ermöglichen. Vorzugsweise sollte Δε höher als 3 und sehr bevorzugt höher als 3, vorzugsweise jedoch nicht höher als 15 und insbesondere nicht-höher als 12 liegen, da dies einem zumindest einigermaßen hohen spezifischen Widerstand entgegenstehen würde.

Vorzugsweise werden die Anzeigen gemäß der vorliegenden Erfindung durch eine Aktivmatrix (active matrix LCDs, kurz AMDs), bevorzugt durch eine Matrix aus Dünnschichttransistoren (TFTs), adressiert. Die erfindungsgemäßen Flüssigkristalle können jedoch in vorteilhafter Weise auch in Anzeigen mit anderen bekannten Adressierungsmitteln verwendet werden.

Es gibt zahlreiche unterschiedliche Anzeigemodi, die Verbundsysteme aus niedrigmolekularen Flüssigkristallmaterialien zusammen mit Polymermaterialien verwenden. Es sind dies z.B. PDLC- (polymer dispersed liquid crystal), NCAP- (nematic curvilinearily aligned phase) und PN-Systeme (polymer network), wie beispielsweise in WO 91/05 029 offenbart, oder ASM-Systeme (axially symmetric microdomain) und andere. Im Gegensatz hierzu verwenden die gemäß der vorliegenden Erfindung speziell bevorzugten Modi das Flüssigkristallmedium als solches, auf Oberflächen ausgerichtet. Diese Oberflächen werden typischerweise vorbehandelt, um eine uniforme Orientierung des Flüssigkristallmaterials zu erzielen. Die Anzeigemodi gemäß der vorliegenden Erfindung verwenden vorzugsweise ein elektrisches Feld, das im Wesentlichen parallel zur Verbundschicht verläuft.

Flüssigkristallzusammensetzungen für TN- oder STN-Anzeigen sind aus EP 1 006 109 A und EP 1 454 975 A bekannt, wobei Flüssigkristallzusammensetzungen, die sich speziell für IPS-Anzeigen eignen, z.B. aus JP 07-181 439 (A), EP 0 667 555, EP 0 673 986, DE 195 09 410, DE 195 28 106, DE 195 28 107, WO 96/23 851 und WO 96/28 521 bekannt sind. Diese Zusammensetzungen sind jedoch mit gravierenden Nachteilen behaftet. Die meisten von ihnen führen, neben anderen Mängeln, zu unvorteilhaft langen Ansprechzeiten, weisen zu geringe Werte für den spezifischen Widerstand auf und/oder erfordern Betriebsspannungen, die zu hoch sind.

Es besteht daher ein erheblicher Bedarf an flüssigkristallinen Medien mit geeigneten Eigenschaften für praktische Anwendungen, wie einem breiten nematischen Phasenbereich, geeigneter optischer Anisotropie Δn entsprechend dem verwendeten Anzeigetyp, einem hohen Δε und speziell geringen Viskositäten.

### Vorliegende Erfindung

Überraschenderweise wurde nun gefunden, dass flüssigkristalline Medien mit einem geeignet hohen Δε, einem geeigneten Phasenbereich und Δn verwirklicht werden können, welche die Nachteile der Materialien des Standes der Technik nicht oder zumindest nur in erheblich geringerem Maße aufweisen.

Diese verbesserten flüssigkristallinen Medien gemäß der vorliegenden Anmeldung enthalten mindestens die folgenden Komponenten:
- eine erste dielektrisch positive Komponente, Komponente A, enthaltend eine oder mehrere dielektrisch positive Verbindungen der Formel l'A-1d 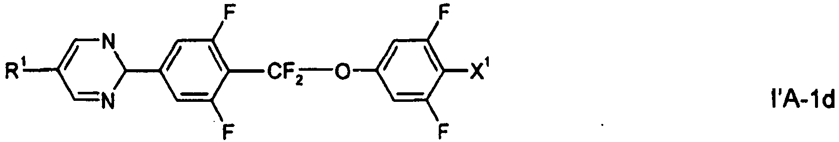
worin
- R¹: Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen und vorzugsweise Alkyl oder Alkenyl bedeutet,
- X¹: -CN, Halogen, halogeniertes Alkyl oder halogeniertes Alkoxy mit 1 bis 3 C-Atomen oder halogeniertes Alkenyl oder halogeniertes Alkenyloxy mit 2 oder 3 C-Atomen, vorzugsweise F, Cl, -OCF₃, -CF₃ oder -O-CH=CF₂, stärker bevorzugt F, Cl oder -OCF₃ und ganz bevorzugt F bedeutet.

Gegebenenfalls eine zweite dielektrisch positive Komponente, Komponente B, enthaltend eine oder mehrere dielektrisch positive Verbindungen, vorzugsweise mit einer dielektrischen Anisotropie von mehr als 3, vorzugsweise ausgewählt aus der Gruppe der Verbindungen der Formeln II und III 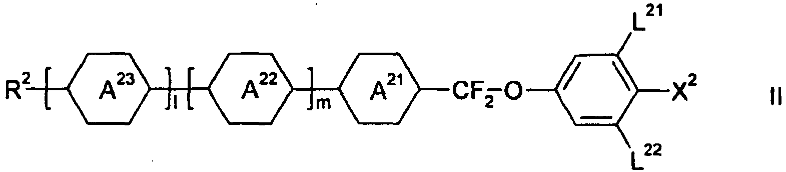 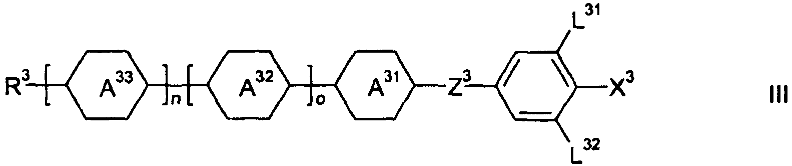 worin
- R² und R³: unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen und vorzugsweise R² und R³ Alkyl oder Alkenyl bedeuten, 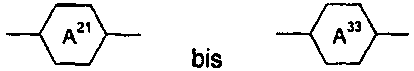 unabhängig voneinander 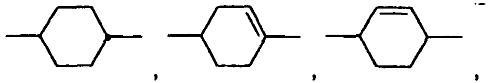 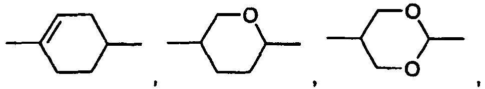 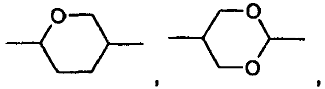 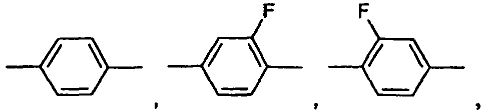 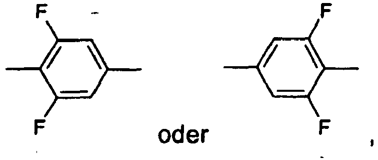 vorzugsweise 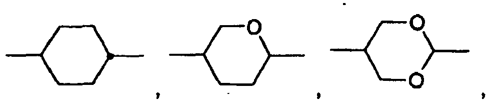 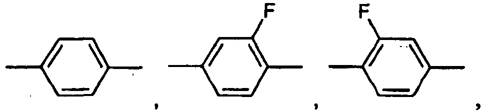 oder 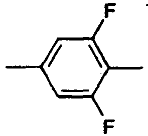 bedeuten,
- L²¹, L²², L³¹ und L³²: unabhängig voneinander H oder F, vorzugsweise
- L²¹: und/oder L³¹ F bedeuten,
- X² und X³: unabhängig voneinander Halogen, halogeniertes Alkyl oder Alkoxy mit 1 bis 3 C-Atomen oder halogeniertes Alkenyl oder Alkenyloxy mit 2 oder 3 C-Atomen, vorzugsweise F, Cl, -OCF₃ oder -CF₃, ganz bevorzugt F, Cl oder -OCF₃ bedeuten,
- Z³: -CH₂CH₂-, -CF₂CF₂-, -COO-, *trans-* -CH=CH-, *trans-*-CF=CF-, -CH₂O- oder eine Einfachbindung, vorzugsweise -CH₂CH₂-, -COO-, *trans-* -CH=CH- oder eine Einfachbindung und ganz bevorzugt-COO-, *trans-*-CH=CH- oder eine Einfachbindung bedeutet und
- I, m, n und o: unabhängig voneinander 0 oder 1 bedeuten, und

Gegebenenfalls eine dielektrisch neutrale Komponente, Komponente C, enthaltend eine oder mehrere dielektrisch neutrale Verbindungen der Formel IV 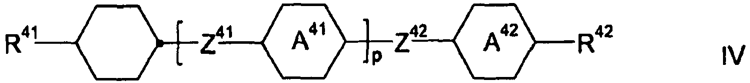 worin
- R⁴¹ und R⁴²: unabhängig voneinander die oben unter Formel II für R² angegebene Bedeutung besitzen, vorzugsweise R⁴¹ Alkyl und R⁴² Alkyl oder Alkoxy oder R⁴¹ Alkenyl und R⁴² Alkyl bedeutet, 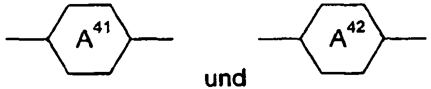 unabhängig voneinander und bei zweifachem Auftreten von 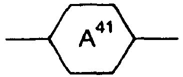 auch diese unabhängig voneinander 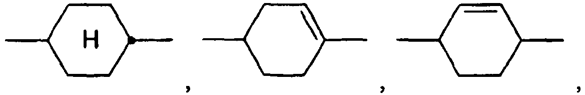 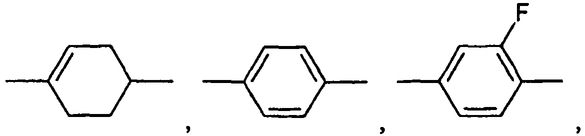 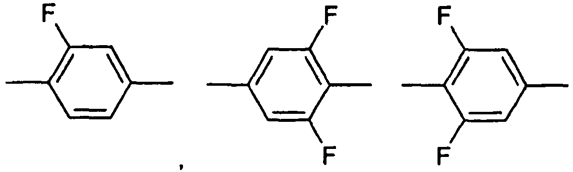 oder 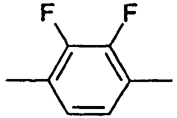 bedeuten,
vorzugsweise eines oder mehrere von 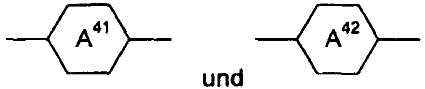 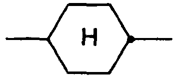 bedeutet/bedeuten,
- Z⁴¹ und Z⁴²: unabhängig voneinander und bei zweifachem Auftreten von Z⁴¹ auch diese unabhängig voneinander -CH₂CH₂-, -COO-, *trans-* -CH=CH-, *trans-* -CF=CF-, -CH₂O-, -CF₂O-, -C=C- oder eine Einfachbindung bedeuten, vorzugsweise eines oder mehrere von ihnen eine Einfachbindung bedeutet/bedeuten und
- p: 0, 1 oder 2, vorzugsweise 0 oder 1 bedeutet.

In einer bevorzugten Ausführungsform der vorliegenden Erfindung enthält die Komponente A eine oder mehrere dielektrisch positive Verbindungen mit einer dielektrischen Anisotropie von mehr als 3, der Formeln I" und I"', stärker bevorzugt besteht sie überwiegend, noch stärker bevorzugt besteht sie im Wesentlichen und ganz bevorzugt besteht sie vollständig daraus: 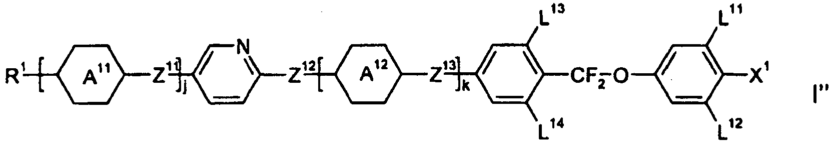 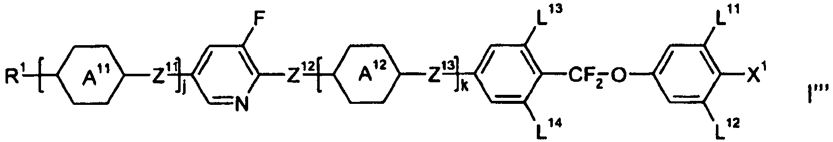 worin die Parameter R¹ und X¹ die oben unter Formel l'A-1d gegebenen Bedeutungen haben, und 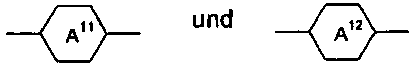 unabhängig voneinander und, falls die Ringe A¹¹ bzw. A¹² mehrfach vorhanden sind, auch diese unabhängig voneinander, 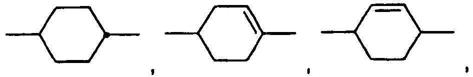 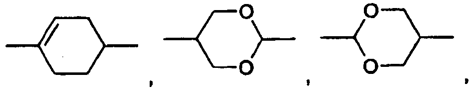 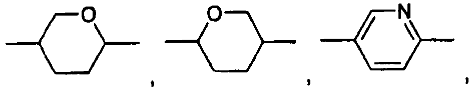 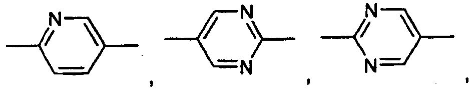 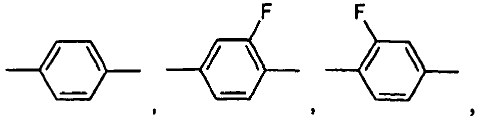 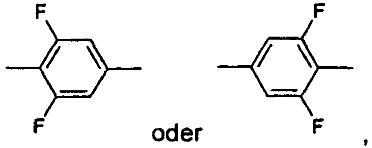 vorzugsweise 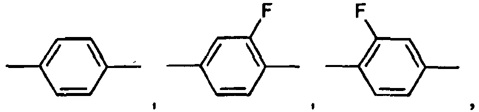 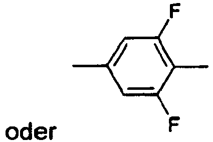 bedeutet, und 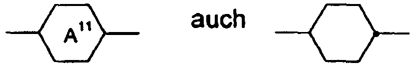 bedeutet,
- Z¹¹ bis Z¹³: unabhängig voneinander und, falls Z¹¹ bzw. Z¹³ mehrfach vorhanden sind, auch diese unabhängig voneinander, -CH₂CH₂-, -CF₂CF₂-, -COO-, *trans-*-CH=CH-, *trans-* -CF=CF-, -CH₂O-, -CF₂O-, oder eine Einfachbindung, vorzugsweise -CH₂CH₂-, -COO-, *trans-*-CH=CH- oder eine Einfachbindung und ganz bevorzugt eine Einfachbindung bedeuten,
- L¹¹ bis L¹⁴: unabhängig voneinander H oder F, vorzugsweise zwei oder mehr von L¹¹ bis L¹⁴ F, vorzugsweise L¹¹ und/oder L¹³ F und ganz bevorzugt alle von ihnen F bedeuten und
- j und k: unabhängig voneinander 0, 1 oder 2 bedeuten, wobei jedoch
- (j + k): 0, 1 oder 2, bevorzugt 0 oder 1 bedeutet.

In einer ersten besonders bevorzugten Ausführungsform der vorliegenden Erfindung enthält die Komponente A eine oder mehrere dielektrisch positive Verbindungen mit einer dielektrischen Anisotropie von mehr als 3, der Formel l'A-1d, stärker bevorzugt besteht sie überwiegend, noch stärker bevorzugt besteht sie im Wesentlichen und ganz bevorzugt besteht sie vollständig daraus.

In einer weiteren besonders bevorzugten Ausführungsform der vorliegenden Erfindung enthält die Komponente A eine oder mehrere dielektrisch positive Verbindungen mit einer dielektrischen Anisotropie von mehr als 3, der Formel I", stärker bevorzugt besteht sie überwiegend, noch stärker bevorzugt besteht sie im Wesentlichen und ganz bevorzugt besteht sie vollständig daraus.

In noch einer weiteren besonders bevorzugten Ausführungsform der vorliegenden Erfindung enthält die Komponente A eine oder mehrere dielektrisch positive Verbindungen mit einer dielektrischen Anisotropie von mehr als 3, der Formel I'A-1d und eine oder mehrere dielektrisch positive Verbindungen mit einer dielektrischen Anisotropie von mehr als 3, der Formel I", stärker bevorzugt besteht sie überwiegend, noch stärker bevorzugt besteht sie im Wesentlichen und ganz bevorzugt besteht sie vollständig daraus.

In einer bevorzugten Ausführungsform der vorliegenden Erfindung enthält die Komponente A eine oder mehrere Verbindungen der Formel I'A-2. Vorzugsweise sind die Verbindungen der Formel l'A-2 ausgewählt aus der Gruppe der Verbindungen der Formeln l'A-2a bis l'A-2n, vorzugsweise ausgewählt aus der Gruppe der Verbindungen der Formeln l'A-2e bis I'A-2I und ganz bevorzugt der Formel I'A-2I 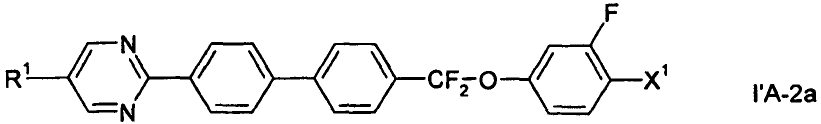 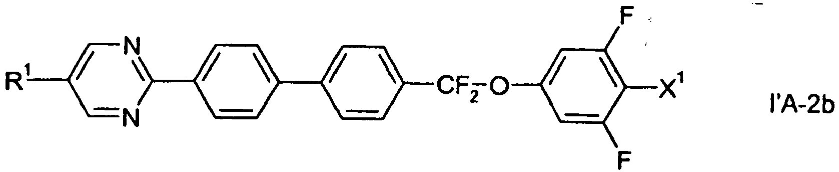 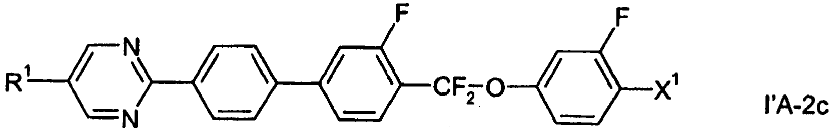 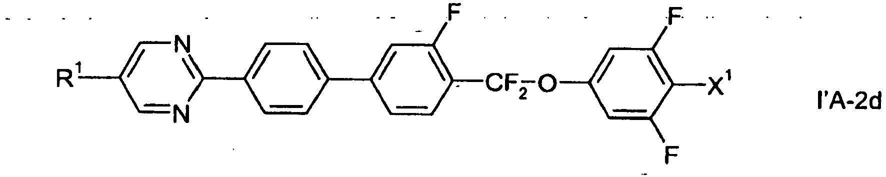 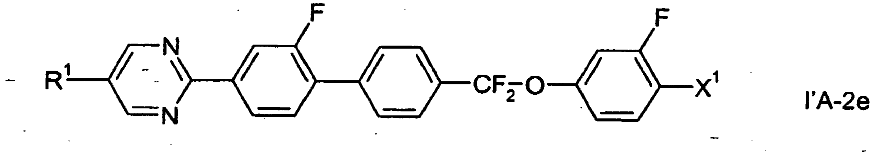 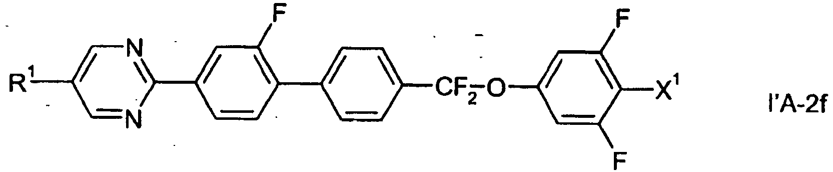 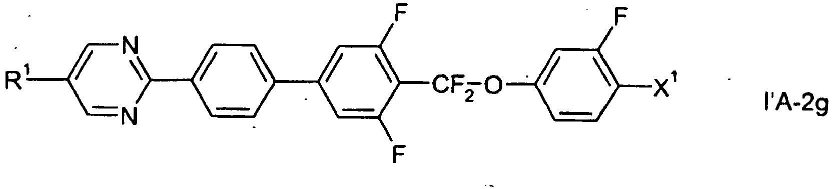 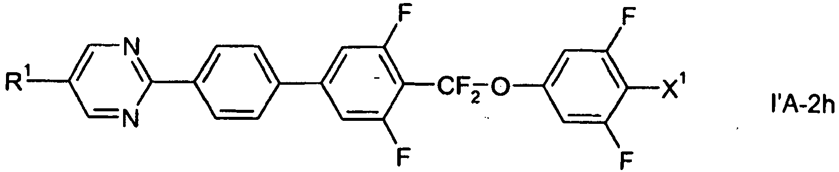 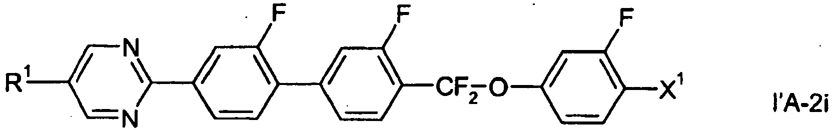 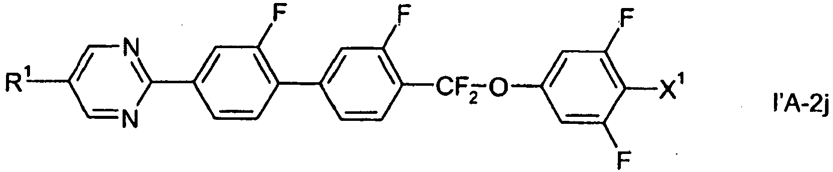 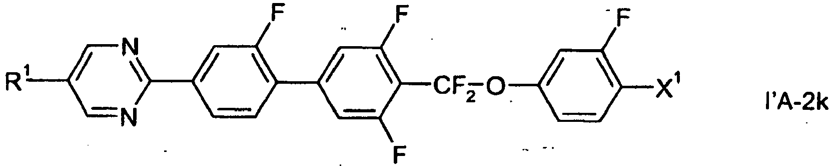 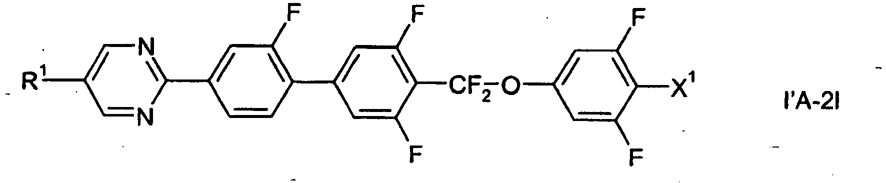 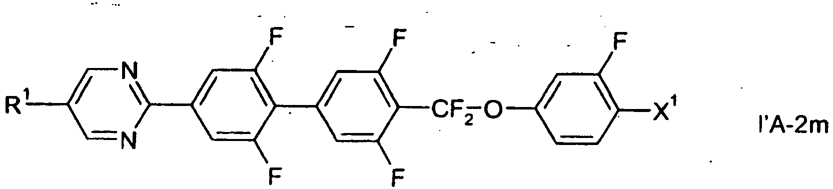 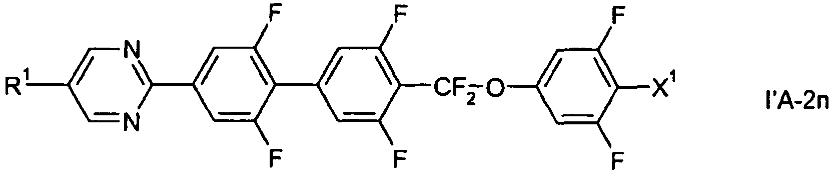 worin R¹ und X¹ die jeweiligen oben unter Formel l'A-2 angegebenen Bedeutungen besitzen und X¹ vorzugsweise F, CF₃ oder OCF₃ und besonders bevorzugt F.

In einer weiteren besonders bevorzugten Ausführungsform der vorliegenden Erfindung enthält die Komponente A eine oder mehrere dielektrisch positive Verbindungen mit einer dielektrischen Anisotropie von mehr als 3, ausgewählt aus der Gruppe der Verbindungen der Formeln l"A, I"B und l"C, bevorzugt der Formel I"A und I"B, stärker bevorzugt besteht sie überwiegend, noch stärker bevorzugt besteht sie im Wesentlichen und ganz bevorzugt besteht sie vollständig daraus: 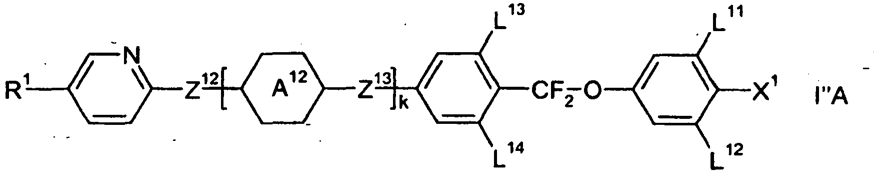 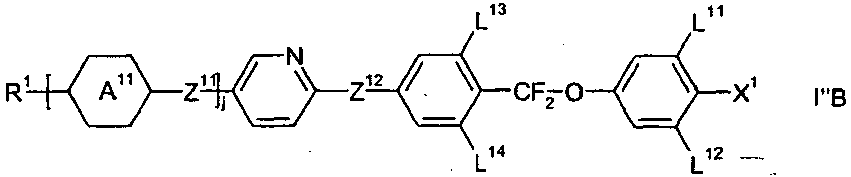 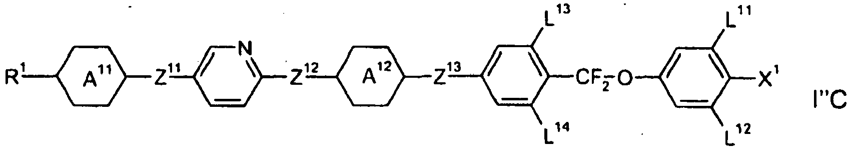 worin die Parameter die oben unter Formel II gegebenen Bedeutungen haben, in Formel I"B j jedoch nicht 0 bedeutet.

In einer bevorzugten Ausführungsform der vorliegenden Erfindung enthält die Komponente A eine oder mehrere dielektrisch positive Verbindungen mit einer dielektrischen Anisotropie von mehr als 3, ausgewählt aus der Gruppe der Verbindungen der Formeln I"A-1 und I"A-2, stärker bevorzugt besteht sie überwiegend, noch stärker bevorzugt besteht sie im Wesentlichen und ganz bevorzugt besteht sie vollständig daraus: 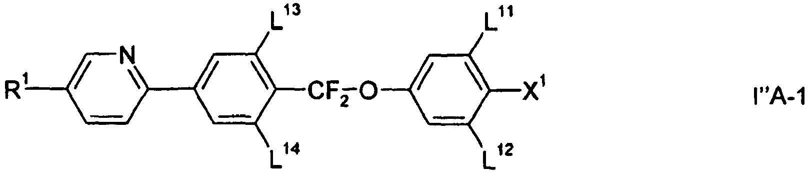 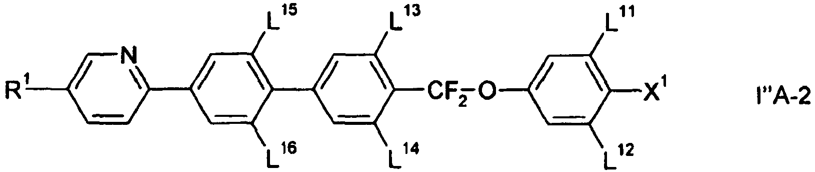 worin die Parameter die jeweiligen oben unter Formel II angegebenen Bedeutungen besitzen und in Formel I"A-2 die Parameter L¹⁵ und L¹⁶ unabhängig voneinander und von den anderen Parametern H oder F bedeuten und vorzugsweise L¹⁵ F bedeutet.

In einer bevorzugten Ausführungsform der vorliegenden Erfindung enthält die Komponente A eine oder mehrere Verbindungen der Formel I"A-1. Vorzugsweise sind die Verbindungen der Formel I"A-1 ausgewählt aus der Gruppe der Verbindungen der Formeln I"A-1a bis I"A-1d, besonders bevorzugt der Formel I"A-1d, 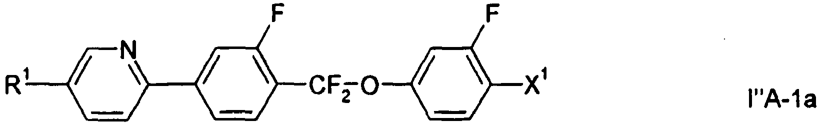 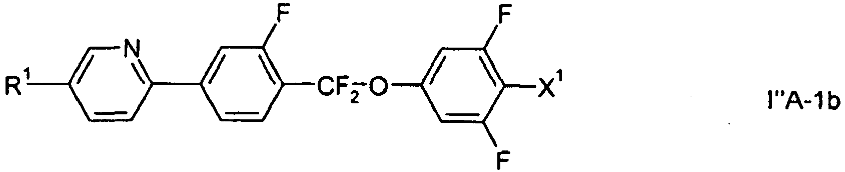 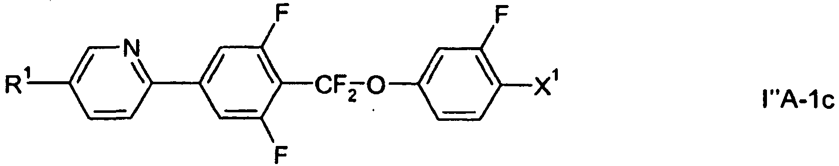 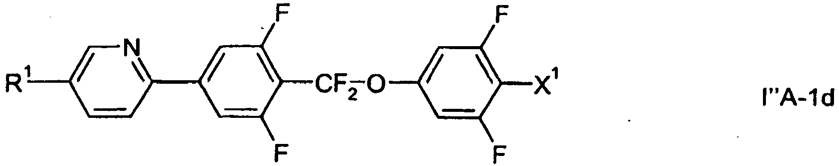 worin R¹ und X¹ die jeweiligen oben unter Formel I''A-1 angegebenen Bedeutungen besitzen und X¹ vorzugsweise F, CF₃ oder OCF₃ und besonders bevorzugt F bedeutet. -

In einer bevorzugten Ausführungsform der vorliegenden Erfindung enthält die Komponente A eine oder mehrere Verbindungen der Formel I"A-2. Vorzugsweise sind die Verbindungen der Formel I"A-2 ausgewählt aus der Gruppe der Verbindungen der Formeln I"A-2a bis I"A-2n, vorzugsweise ausgewählt aus der Gruppe der Verbindungen der Formeln I"A-2e bis I"A-21 und ganz bevorzugt der Formel I"A-21 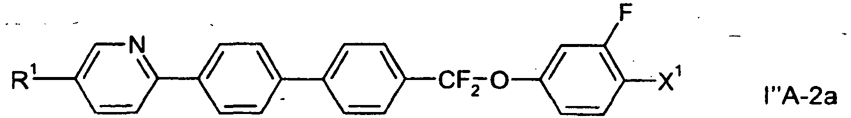 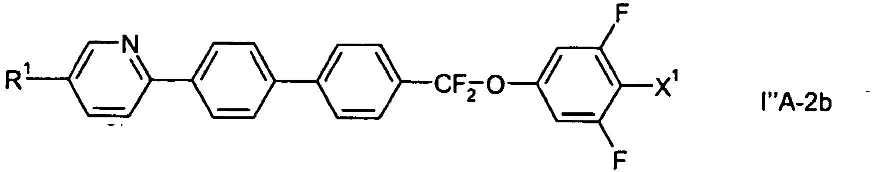 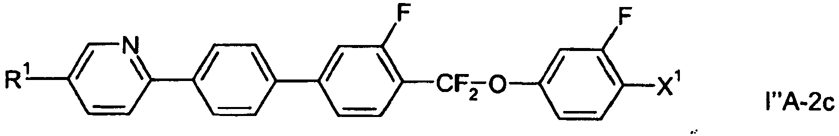 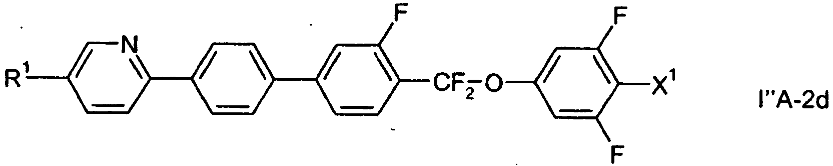 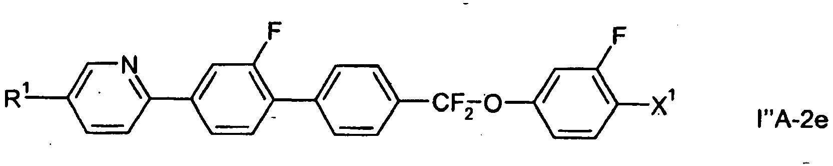 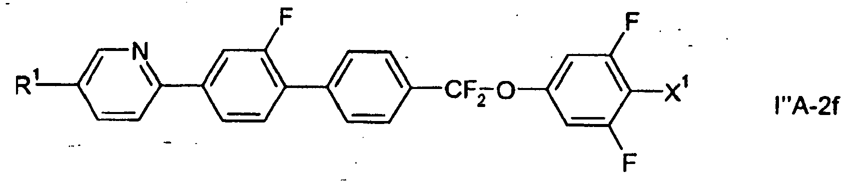 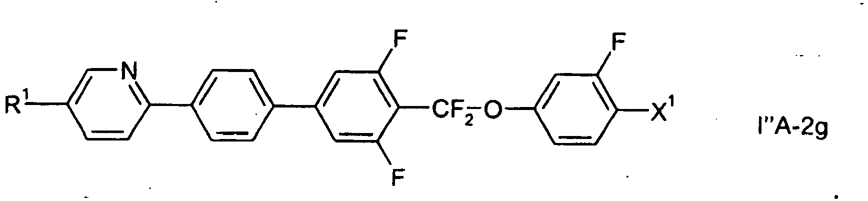 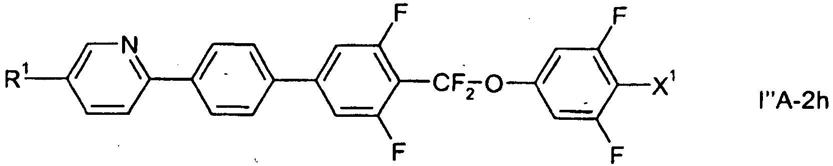 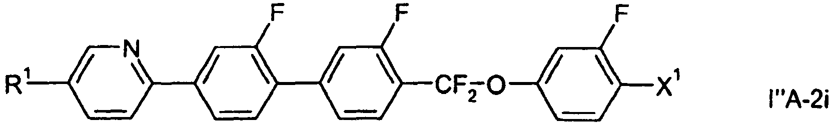 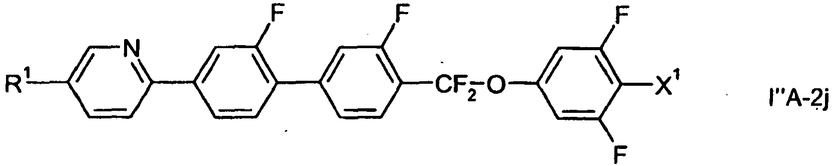 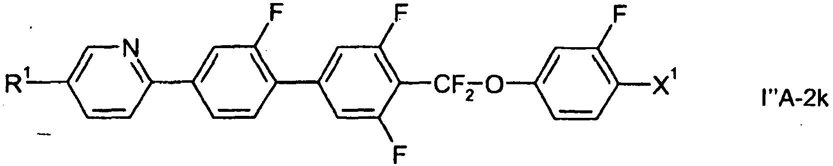 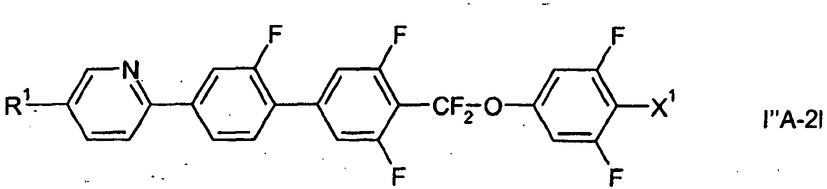 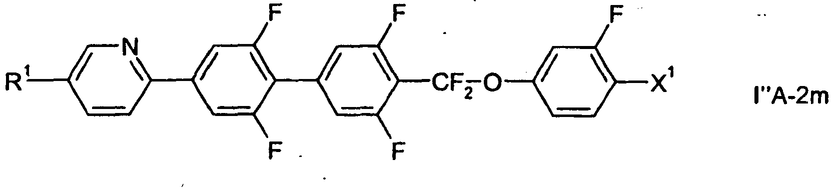 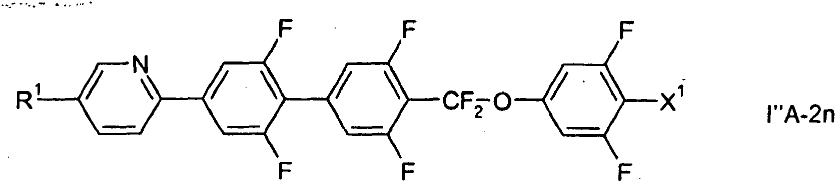 worin R¹ und X¹ die jeweiligen oben unter Formel I"A-2 angegebenen Bedeutungen besitzen und X¹ vorzugsweise F, CF₃ oder OCF₃ und besonders bevorzugt F bedeutet.

In einer bevorzugten Ausführungsform der vorliegenden Erfindung enthält die Komponente A eine oder mehrere Verbindungen ausgewählt aus der Gruppe der Verbindungen der Formeln I"B-1 bis I"B-3, bevorzugt der Formel I"B-2, 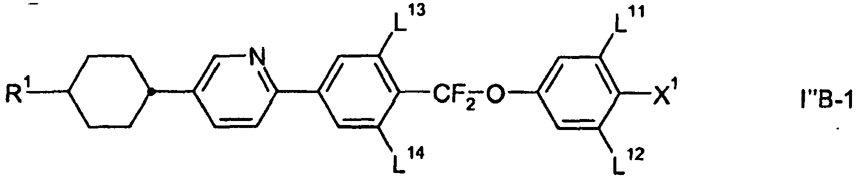 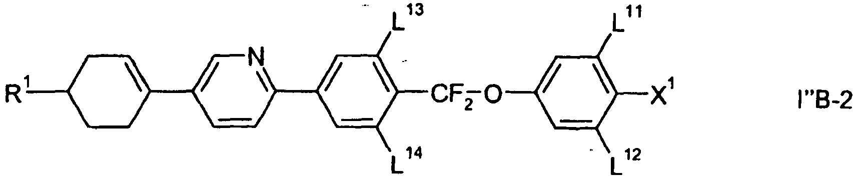 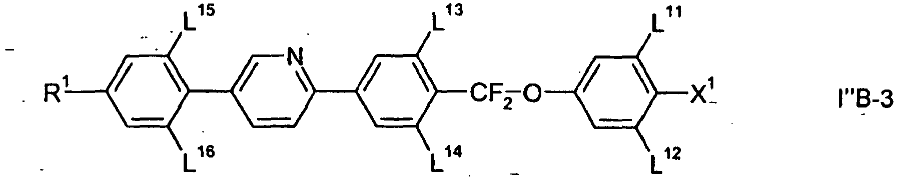 worin R¹ und X¹ die jeweiligen oben unter Formel I"B angegebenen Bedeutungen besitzen und in Formel I"B-3 die Parameter L¹⁵ und L¹⁶ unabhängig voneinander und von den anderen Parametern H oder F bedeuten und vorzugsweise L¹⁵ F bedeutet und X¹ vorzugsweise F, CF₃ oder OCF₃ und besonders bevorzugt F bedeutet.

In einer weiteren besonders bevorzugten Ausführungsform der vorliegenden Erfindung enthält die Komponente A eine oder mehrere dielektrisch positive Verbindungen mit einer dielektrischen Anisotropie von mehr als 3, ausgewählt aus der Gruppe der Verbindungen der Formeln I"'A, I"'B und I"'C, bevorzugt der Formeln I"'A und I"'B, stärker bevorzugt besteht sie überwiegend, noch stärker bevorzugt besteht sie im Wesentlichen und ganz bevorzugt besteht sie vollständig daraus: 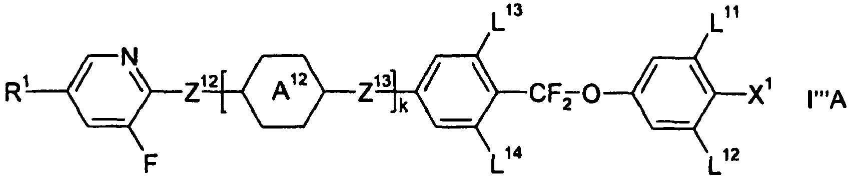 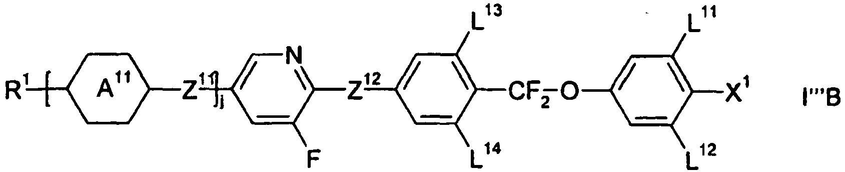 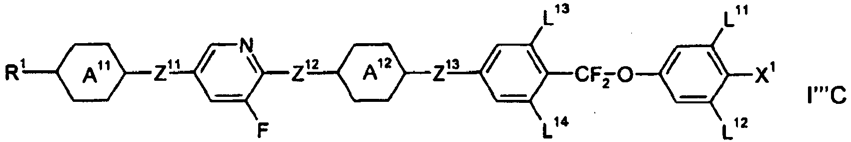 worin die Parameter die oben unter Formel II gegebenen Bedeutungen haben, in Formel I"'B j jedoch nicht 0 bedeutet.

In einer bevorzugten Ausführungsform der vorliegenden Erfindung enthält die Komponente A eine oder mehrere dielektrisch positive Verbindungen mit einer dielektrischen Anisotropie von mehr als 3, ausgewählt aus der Gruppe der Verbindungen der Formeln I"'A-1 und I"'A-2, stärker bevorzugt besteht sie überwiegend, noch stärker bevorzugt besteht sie im Wesentlichen und ganz bevorzugt besteht sie vollständig daraus: 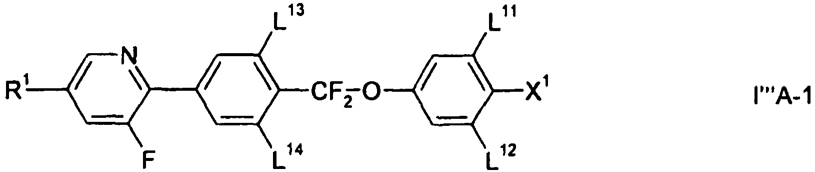 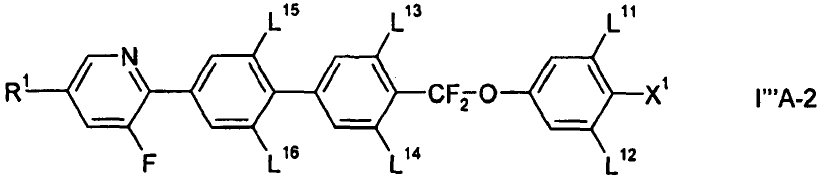 worin die Parameter die jeweiligen oben unter Formel II angegebenen Bedeutungen besitzen und in Formel I"'A-2 die Parameter L¹⁵ und L¹⁶ unabhängig voneinander und von den anderen Parametern H oder F bedeuten und vorzugsweise L¹⁵ F bedeutet.

In einer bevorzugten Ausführungsform der vorliegenden Erfindung enthält die Komponente A eine oder mehrere Verbindungen der Formel I"'A-1. Vorzugsweise sind die Verbindungen der Formel I"'A-1 ausgewählt aus der Gruppe der Verbindungen der Formeln I"'A-1a bis I"'A-1d, besonders bevorzugt der Formel I"'A-1d, 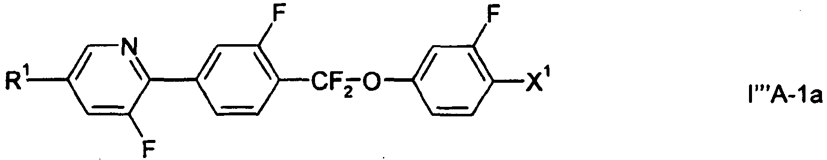 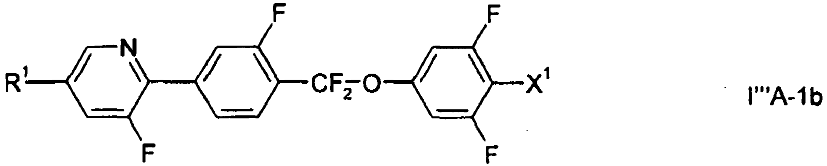 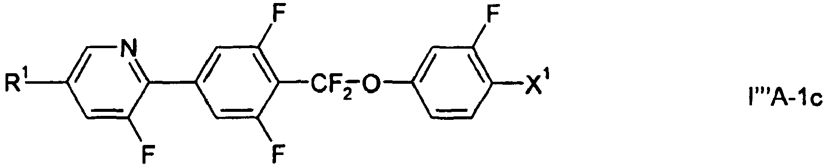 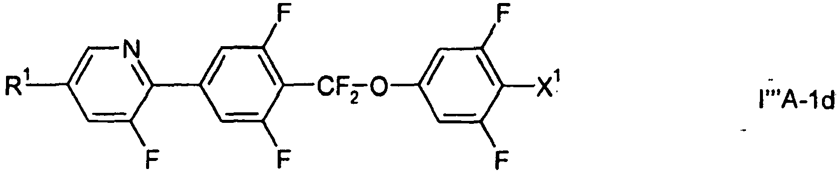 worin R¹ und X¹ die jeweiligen oben unter Formel I"A-1 angegebenen Bedeutungen besitzen und X¹ vorzugsweise F, CF₃ oder OCF₃ und besonders bevorzugt F bedeutet.

In einer bevorzugten Ausführungsform der vorliegenden Erfindung enthält die Komponente A eine oder mehrere Verbindungen ausgewählt aus der Gruppe der Verbindungen der Formeln I"'B-1 bis I"'B-3, bevorzugt der Formel I"'B-3 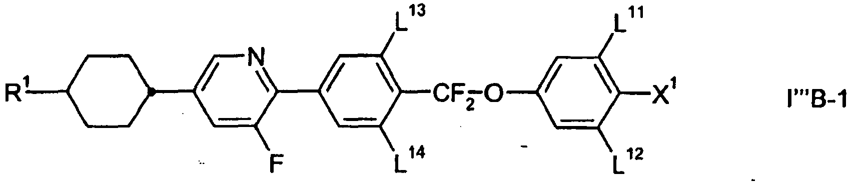 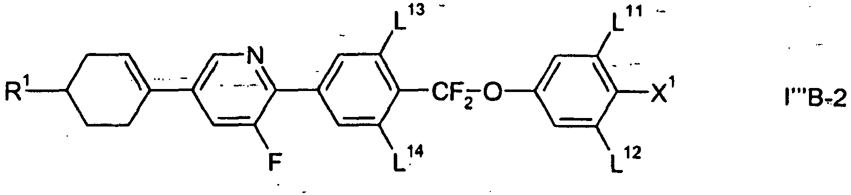 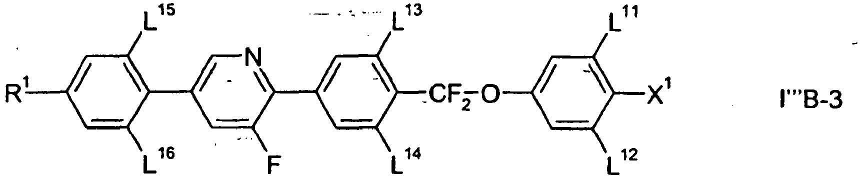 worin R¹ und X¹ die jeweiligen oben unter Formel I"'B angegebenen Bedeutungen besitzen und in Formel I"'B-3 die Parameter L¹⁵ und L¹⁶ unabhängig voneinander und von den anderen Parametern H oder F bedeuten und vorzugsweise L¹⁵ F bedeutet und X¹ vorzugsweise F, CF₃ oder OCF₃ und besonders bevorzugt F bedeutet.

Vorzugsweise liegt die Konzentration der Komponente A im Medium im Bereich von 1 % bis 50 %, stärker bevorzugt von 2 % bis 40 %, noch stärker bevorzugt von 4 % bis 35 % und ganz bevorzugt von 5 % von 30%.

Vorzugsweise enthalten die Medien gemäß der vorliegenden Erfindung eine zweite dielektrisch positive Komponente, Komponente B. Vorzugsweise enthält diese zweite dielektrisch Komponente, Komponente B, dielektrisch positive Verbindungen mit einer dielektrischen Anisotropie von mehr als 3, stärker bevorzugt besteht sie überwiegend, noch stärker bevorzugt besteht sie im Wesentlichen und ganz bevorzugt besteht sie vollständig daraus.

Vorzugsweise enthält diese Komponente, Komponente B, eine oder mehrere dielektrisch positive Verbindungen mit einer dielektrischen Anisotropie von mehr als 3, ausgewählt aus der Gruppe der Formeln II und III, stärker bevorzugt besteht sie überwiegend, noch stärker bevorzugt besteht sie im Wesentlichen und ganz bevorzugt besteht sie vollständig daraus.

In einer bevorzugten Ausführungsform der vorliegenden Erfindung enthält die Komponente B eine oder mehrere dielektrisch positive Verbindungen mit einer dielektrischen Anisotropie von mehr als 3, ausgewählt aus der Gruppe der Verbindungen der Formeln II-1 bis II-3, stärker bevorzugt besteht sie überwiegend, noch stärker bevorzugt besteht sie im Wesentlichen und ganz bevorzugt besteht sie vollständig daraus: 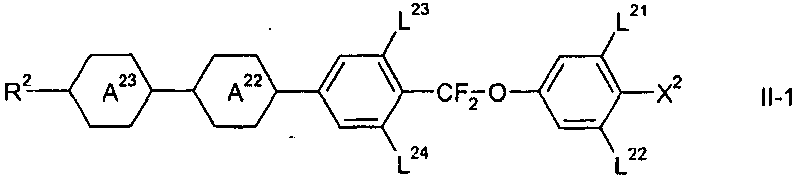 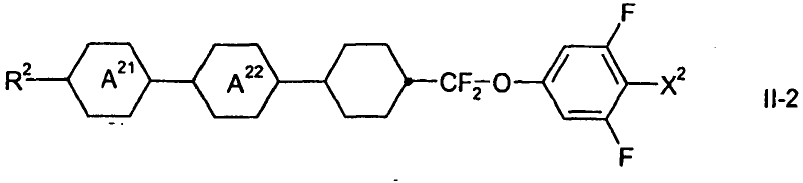 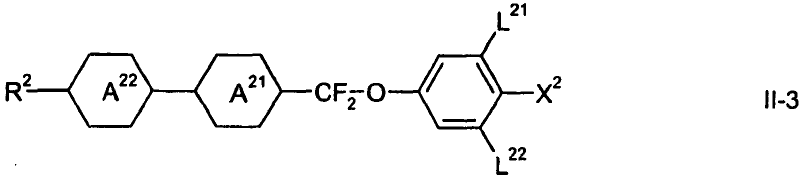 worin die Parameter die jeweiligen oben unter Formel II angegebenen Bedeutungen besitzen und in Formel II-1 die Parameter L²³ und L²⁴ unabhängig voneinander und von den anderen Parametern H oder F bedeuten und in Formel II-2 vorzugsweise 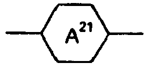 und 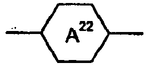 unabhängig voneinander 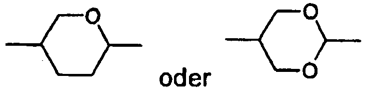 bedeuten.

Vorzugsweise enthält die Komponente B Verbindungen, die ausgewählt sind aus der Gruppe der Verbindungen der Formeln II-1 bis II-3, worin L²¹ und L²² oder L²³ und L²⁴ beide F bedeuten.

In einer bevorzugten Ausführungsform enthält die Komponente B Verbindungen, die ausgewählt sind aus der Gruppe der Verbindungen der Formeln II-1 und II-2, worin L²¹, L²², L²³ und L²⁴ alle F bedeuten.

Vorzugsweise enthält die Komponente B eine oder mehrere Verbindungen der Formel II-1. Vorzugsweise sind die Verbindungen der Formel II-1 ausgewählt aus der Gruppe der Verbindungen der Formeln II-1a bis II-1j 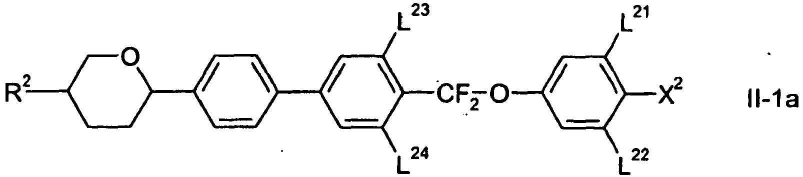 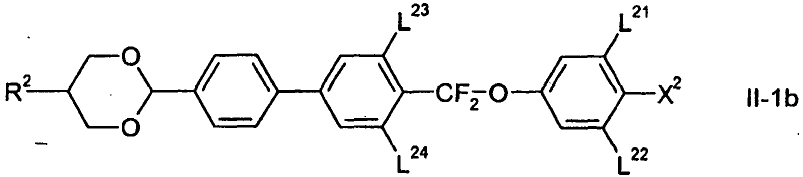 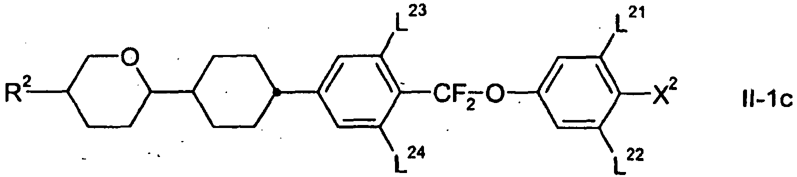 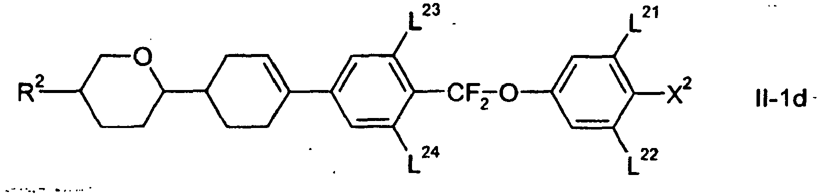 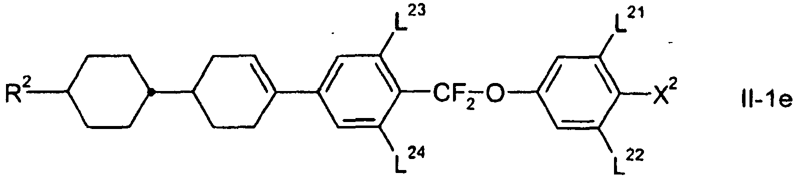 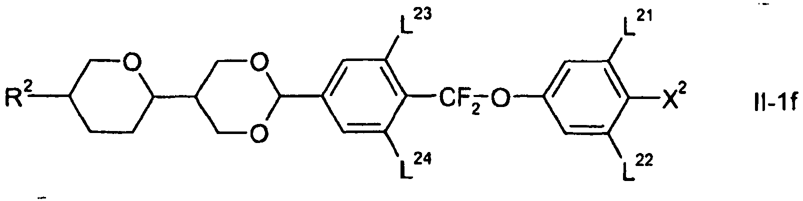 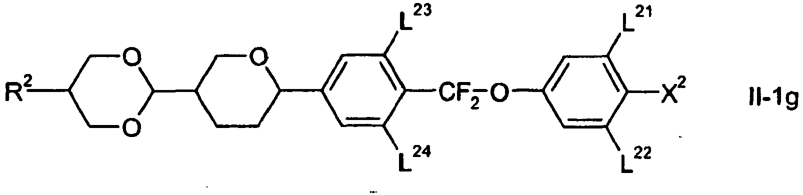 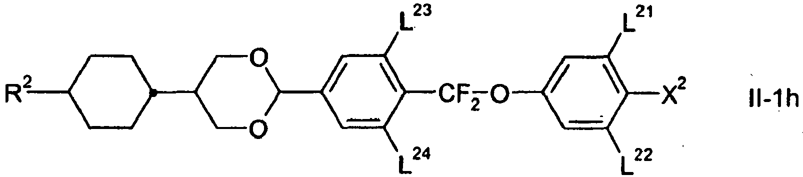 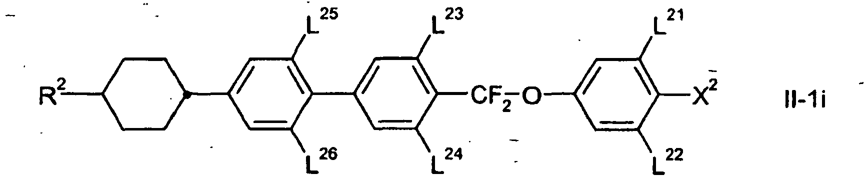 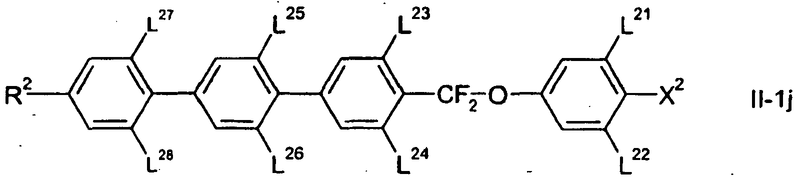 worin die Parameter die jeweiligen oben angegebenen Bedeutungen besitzen und L²⁵ bis L²⁸ unabhängig voneinander H oder F, bevorzugt L²⁷ und L²⁸ beide H, besonders bevorzugt L²⁶ H bedeuten.

Vorzugsweise enthält die Komponente B Verbindungen, die ausgewählt sind aus der Gruppe der Verbindungen der Formeln II-1a bis II-1e, worin L²¹ und L²² beide F und/oder L²³ und L²⁴ beide F bedeuten.

In einer bevorzugten Ausführungsform enthält die Komponente B Verbindungen, die ausgewählt sind aus der Gruppe der Verbindungen der Formeln II-1a bis 11-1h, worin L²¹, L²², L²³ und L²⁴ alle F bedeuten.

Speziell bevorzugte Verbindungen der Formel II-1 sind 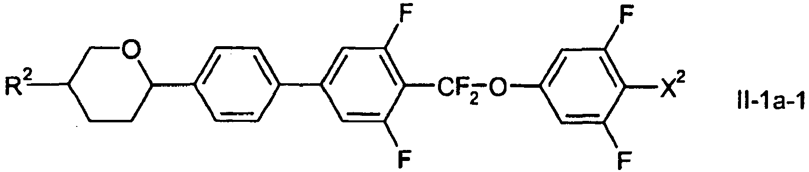 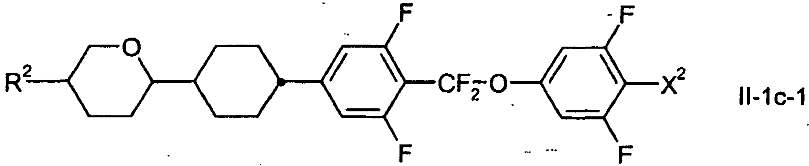 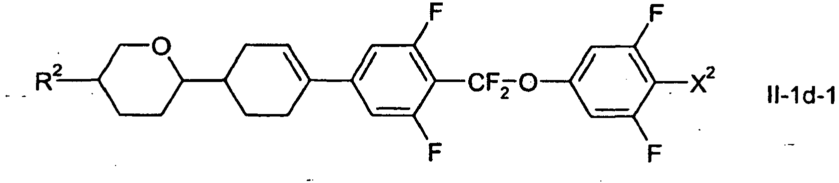 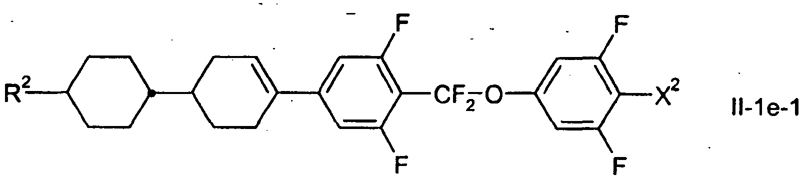 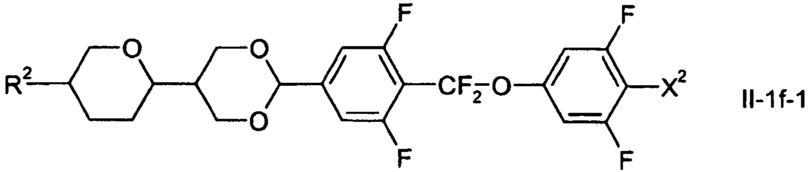 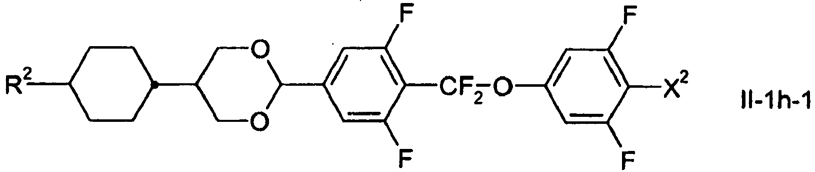 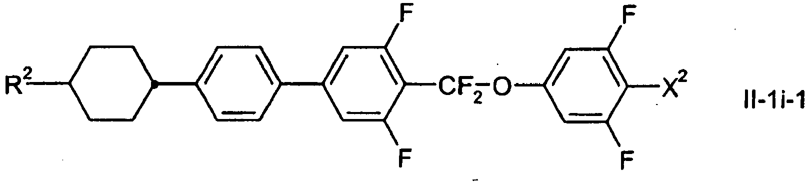 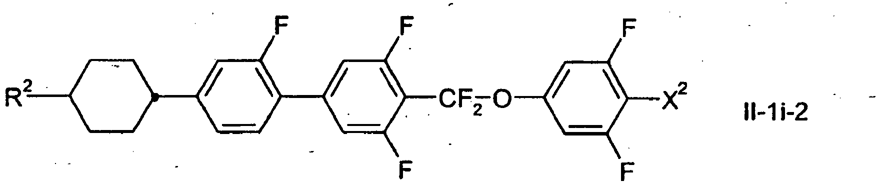 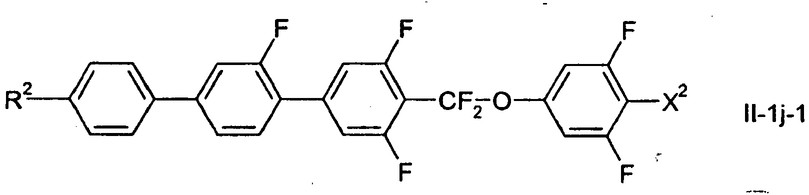 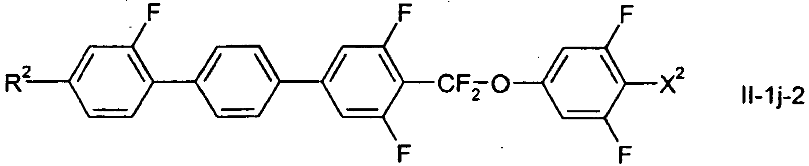 worin R² und X² die oben angegebene Bedeutungen besitzen und X² bevorzugt F bedeutet.

Vorzugsweise enthält die Komponente B eine oder mehrere Verbindungen der Formel 11-2. Vorzugsweise sind die Verbindungen der Formel II-2 ausgewählt aus der Gruppe der Verbindungen der Formeln II-2a bis II-2c 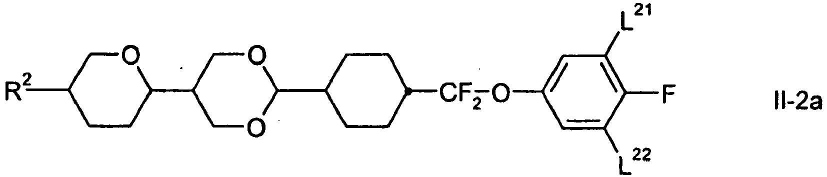 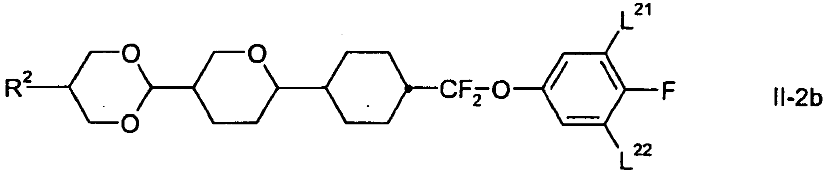 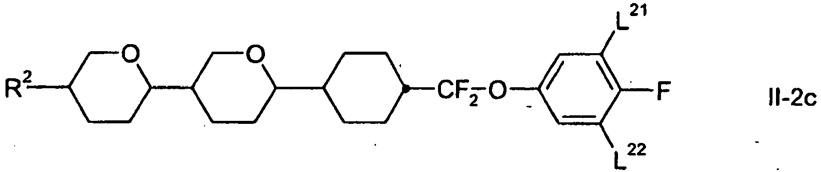 worin die Parameter die jeweiligen oben angegebenen Bedeutungen besitzen und L²¹ und L²² vorzugsweise beide F bedeuten.

Vorzugsweise enthält die Komponente B eine oder mehrere Verbindungen der Formel II-3. Vorzugsweise sind die Verbindungen der Formel II-3 ausgewählt aus der Gruppe der Verbindungen der Formeln II-3a bis II-3e 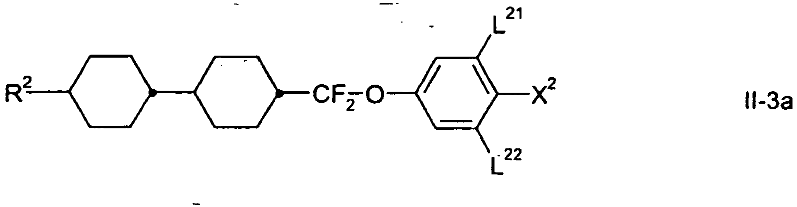 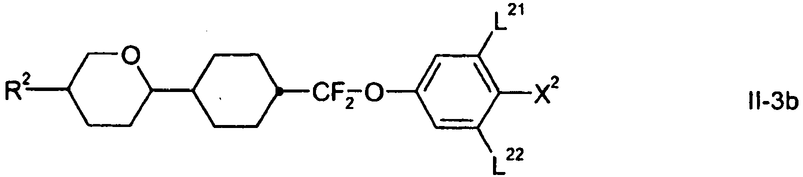 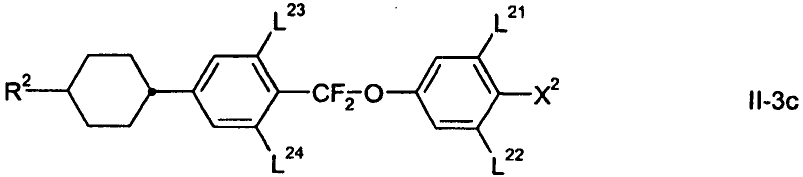 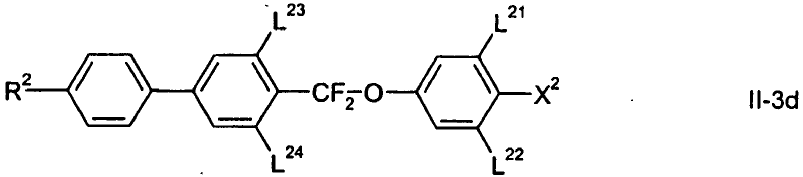 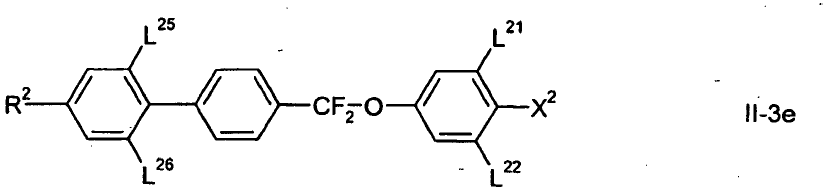 worin die Parameter die jeweiligen oben angegebenen Bedeutungen besitzen und L²⁵ und L²⁶ unabhängig voneinander und von den anderen Parametern H oder F bedeuten und vorzugsweise
in den Formeln II-3a und II-3b
L²¹ und L²² beide F bedeuten,
in den Formeln II-3c und II-3d
L²¹ und L²² beide F und/oder L²³ und L²⁴ beide F bedeuten und
in Formel II-3e
L²¹, L²² und L²³ F bedeuten.

Speziell bevorzugte Verbindungen der Formel II-3 sind 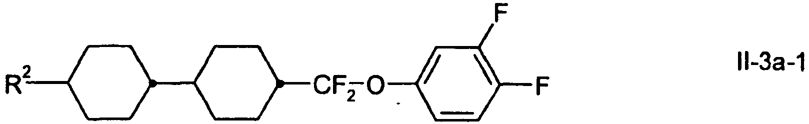 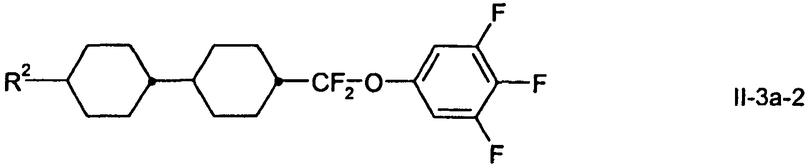 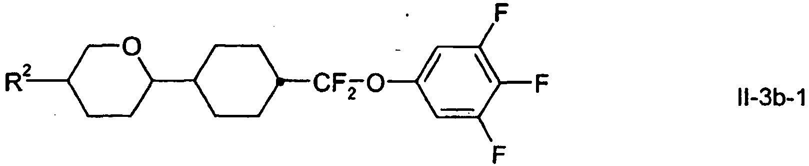 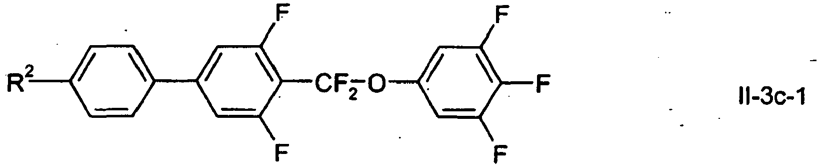 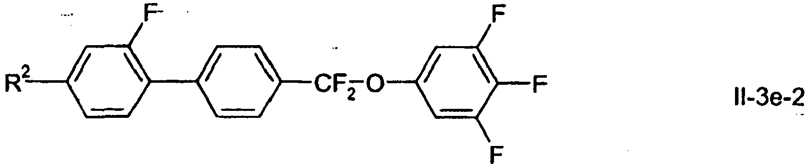 worin R² die oben angegebene Bedeutung besitzt.

In einer weiteren bevorzugten Ausführungsform der vorliegenden Erfindung enthält die Komponente B eine oder mehrere dielektrisch positive Verbindungen mit einer dielektrischen Anisotropie von mehr als 3, ausgewählt aus der Gruppe der Formeln III-1 und III-2, stärker bevorzugt besteht sie überwiegend, noch stärker bevorzugt besteht sie im Wesentlichen und ganz bevorzugt besteht sie vollständig daraus: 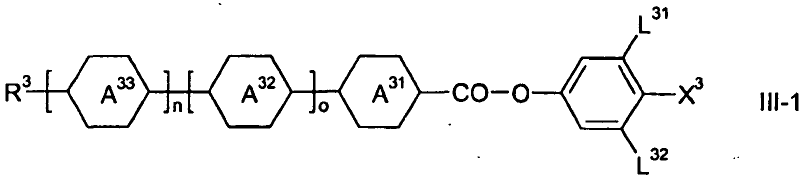 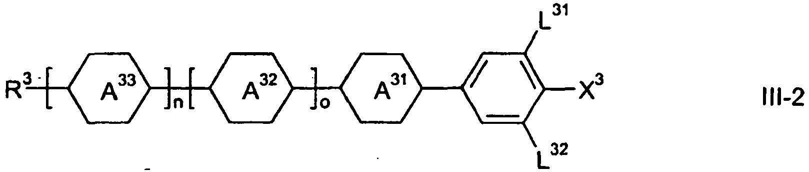 worin die Parameter die jeweiligen oben unter Formeln III angegebenen Bedeutungen besitzen.

Vorzugsweise enthält die Komponente B eine oder mehrere Verbindungen der Formel III-1. Vorzugsweise sind die Verbindungen der Formel III-1 ausgewählt aus der Gruppe der Verbindungen der Formeln III-1a und III-1b 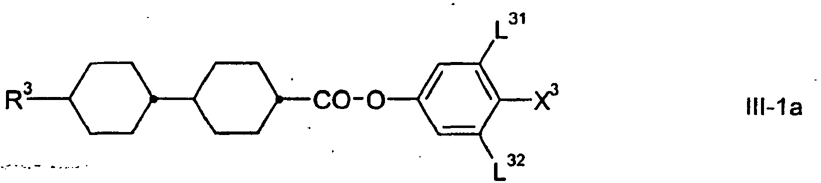 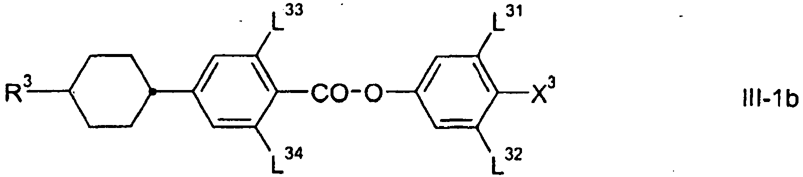 worin die Parameter die jeweiligen oben angegebenen Bedeutungen besitzen und die Parameter L³³ und L³⁴ unabhängig voneinander und von den anderen Parametern H oder F bedeuten.

Vorzugsweise enthält die Komponente B eine oder mehrere Verbindungen der Formel III-2. Vorzugsweise sind die Verbindungen der Formel III-2 ausgewählt aus der Gruppe der Verbindungen der Formeln III-2a bis III-2h 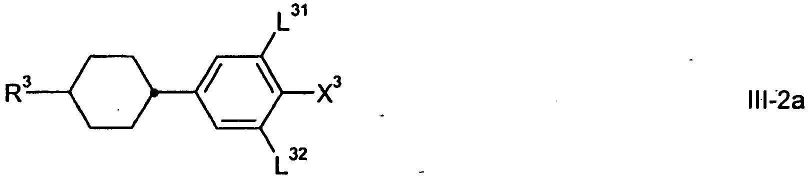 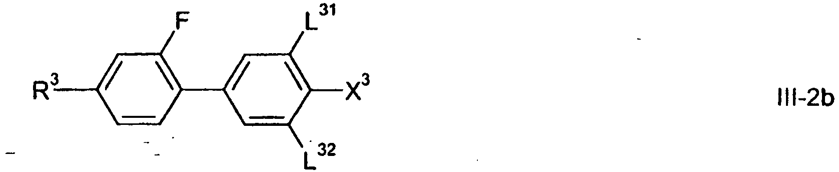 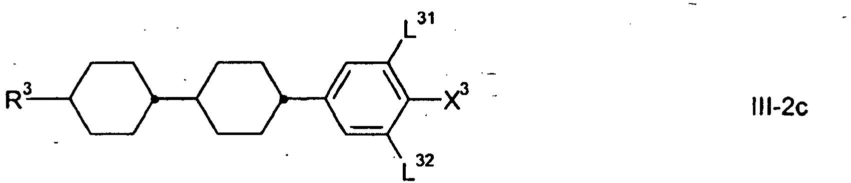 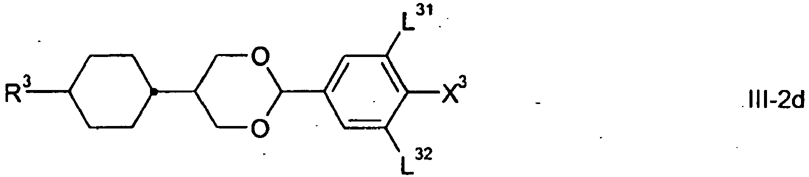 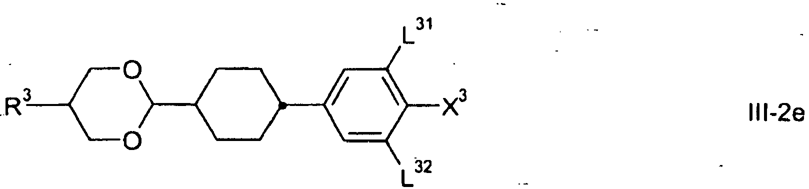 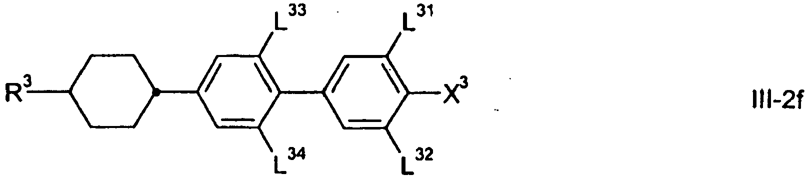 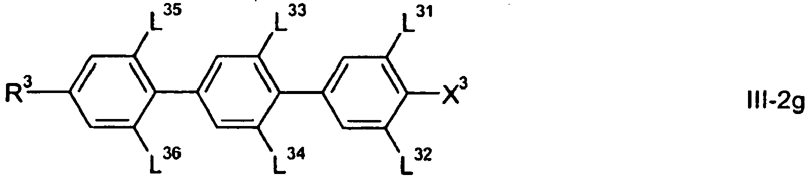 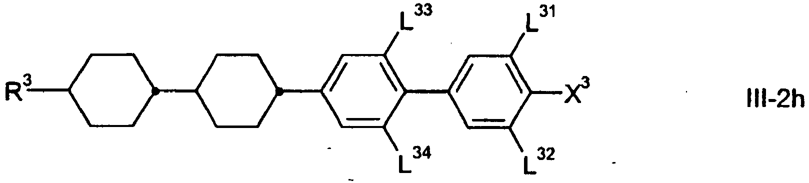 worin die Parameter die jeweiligen oben angegebenen Bedeutungen besitzen und die Parameter L³⁵ und L³⁶ unabhängig voneinander und von den anderen Parametern H oder F bedeuten.

Vorzugsweise enthält die Komponente B eine oder mehrere Verbindungen der Formel III-1a, die vorzugsweise aus der Gruppe der Verbindungen der Formeln III-1a-1 bis III-1a-6 ausgewählt sind 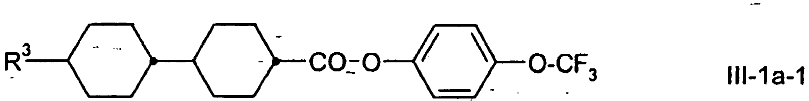 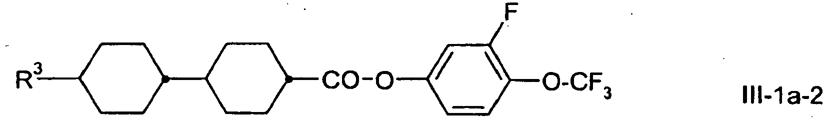 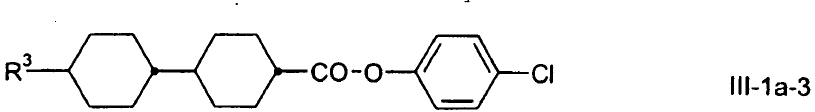 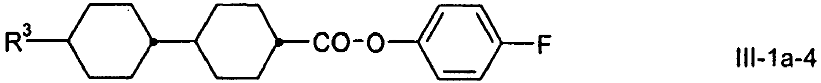 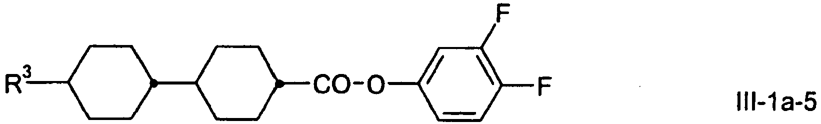 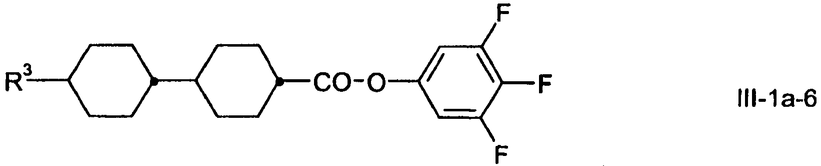 worin R³ die oben angegebene Bedeutung besitzt.

Vorzugsweise enthält die Komponente B eine oder mehrere Verbindungen der Formel III-1 b, die vorzugsweise ausgewählt sind aus der Gruppe der Verbindungen der Formeln III-1b-1 bis III-1b-4, vorzugsweise III-1b4 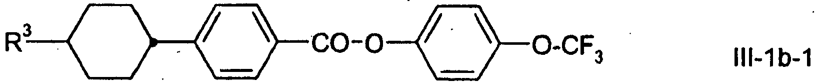 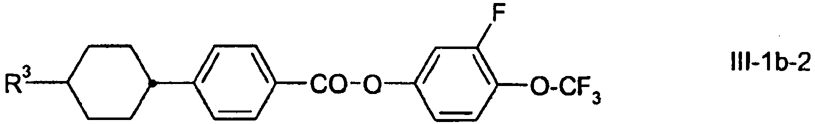 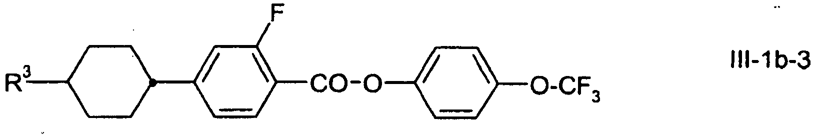 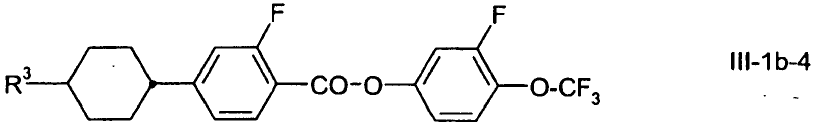 worin R³ die oben angegebene Bedeutung besitzt.

Vorzugsweise enthält die Komponente B eine oder mehrere Verbindungen der Formel II-2a, die vorzugsweise ausgewählt sind aus der Gruppe der Verbindungen der Formeln II-2a-1 bis II-2a-4 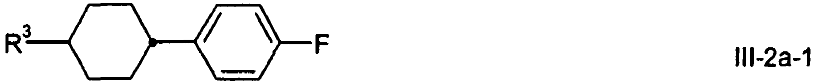 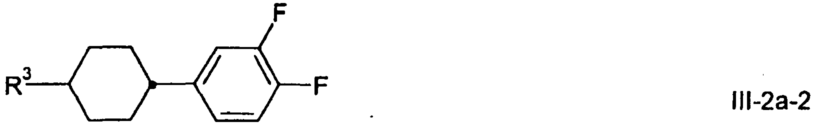 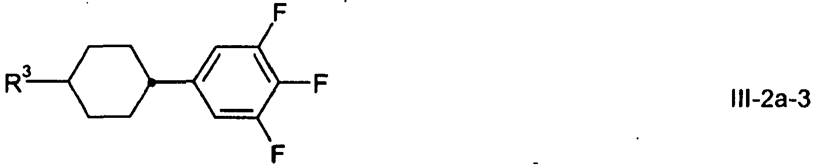 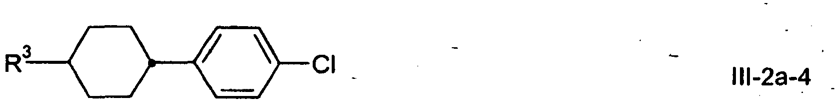 worin R³ die oben angegebene Bedeutung besitzt.

Vorzugsweise enthält die Komponente B eine oder mehrere Verbindungen der Formel III-2b, die vorzugsweiseausgewählt sind aus der Gruppe der Verbindungen der Formeln III-2b-1 und III-2b-2, vorzugsweise III-2b-2 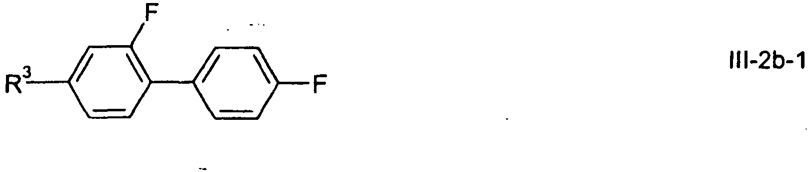 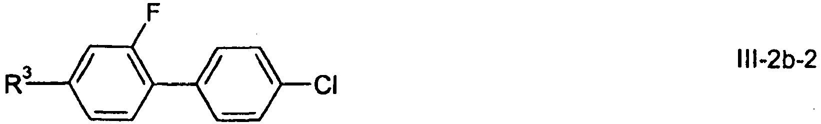 worin R³ die oben angegebene Bedeutung besitzt.

Vorzugsweise enthält die Komponente B eine oder mehrere Verbindungen der Formel III-2c, die vorzugsweise ausgewählt sind aus der Gruppe der Verbindungen der Formeln III-2c-1 bis III-2c-5 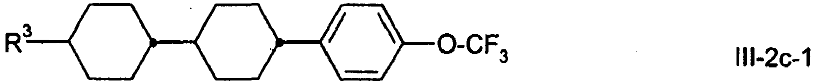 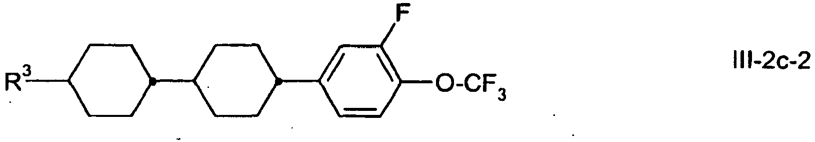 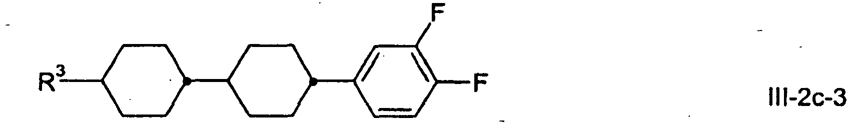 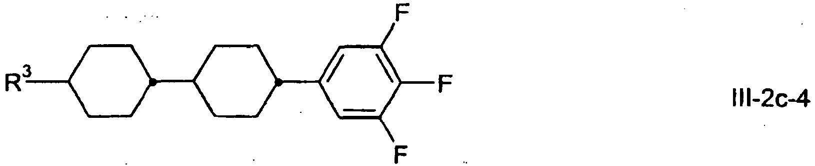 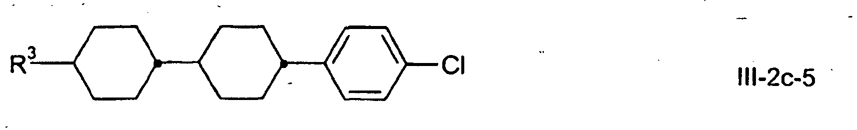 worin R³ die oben angegebene Bedeutung besitzt.

Vorzugsweise enthält die Komponente B eine oder mehrere Verbindungen ausgewählt aus der Gruppe der Verbindungen der Formeln III-2d und III-2e, die vorzugsweise ausgewählt sind aus der Gruppe der Verbindungen der Formeln III-2d-1 und III-2e-1 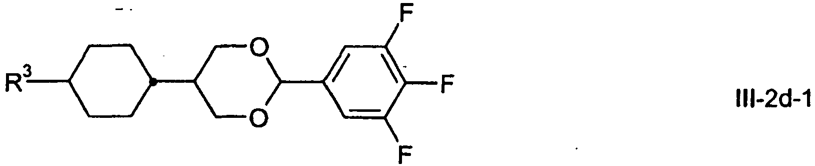 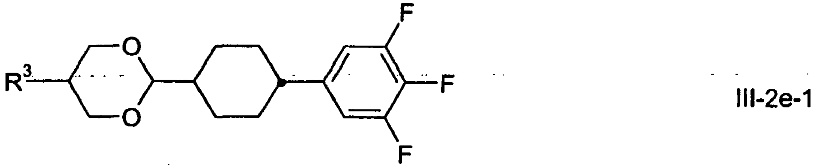 worin R³ die oben angegebene Bedeutung besitzt.

Vorzugsweise enthält die Komponente B eine oder mehrere Verbindungen der Formel III-2f, die vorzugsweise ausgewählt sind aus der Gruppe der Verbindungen der Formeln III-2f-1 bis III-2f-5 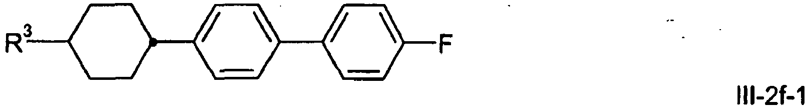 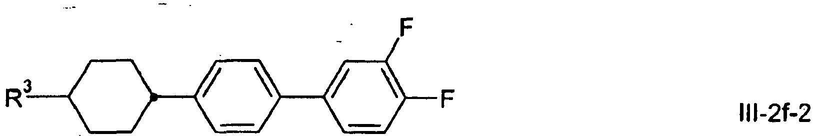 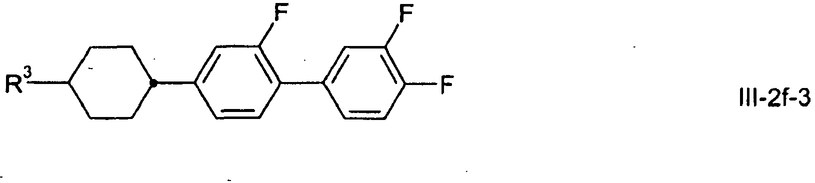 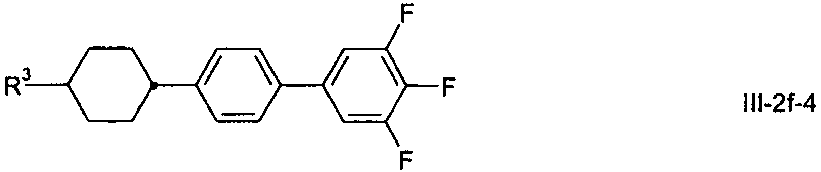 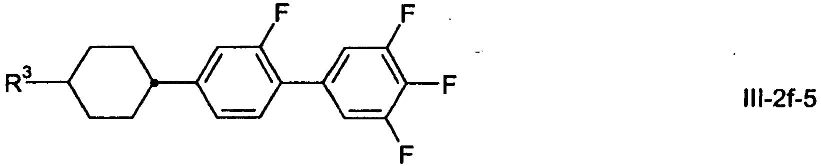 worin R³ die oben angegebene Bedeutung besitzt.

Vorzugsweise enthält die Komponente B eine oder mehrere Verbindungen der Formel III-2g, die vorzugsweise ausgewählt sind aus der Gruppe der Verbindungen der Formeln III-2g-1 bis III-2g-5 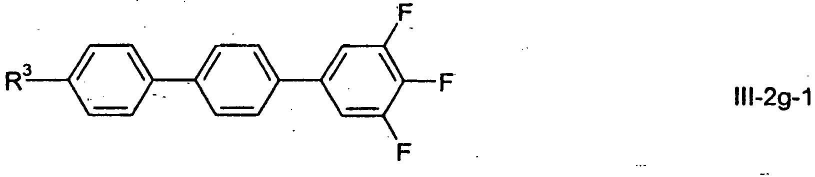 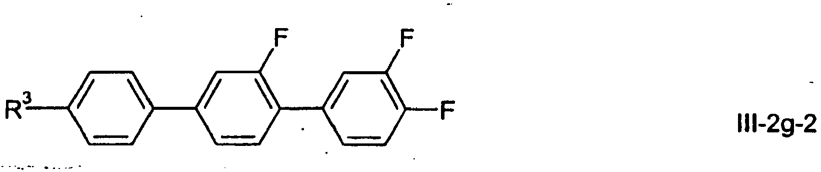 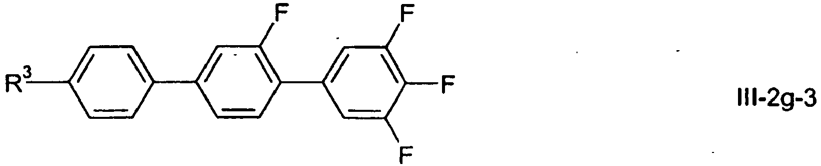 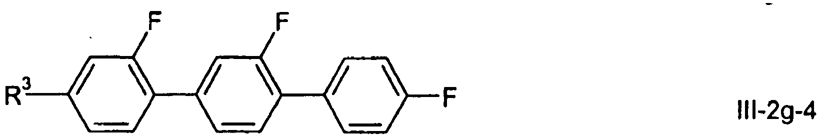 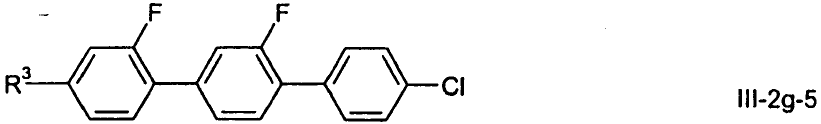 worin R³ die oben angegebene Bedeutung besitzt.

Vorzugsweise enthält die Komponente B eine oder mehrere Verbindungen der Formel III-2h, die vorzugsweise ausgewählt sind aus der Gruppe der Verbindungen der Formeln III-2h-1 bis III-2h-5 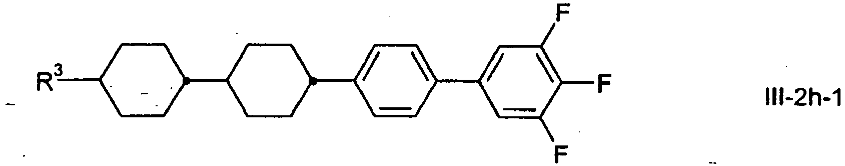 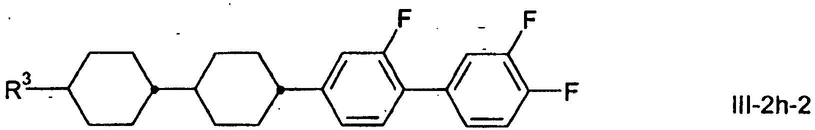 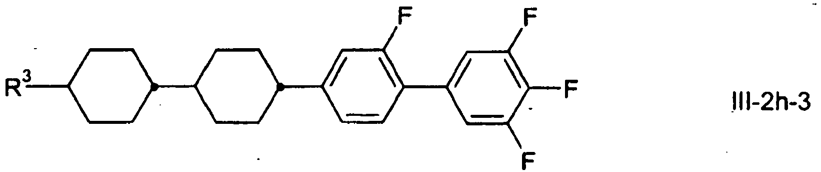 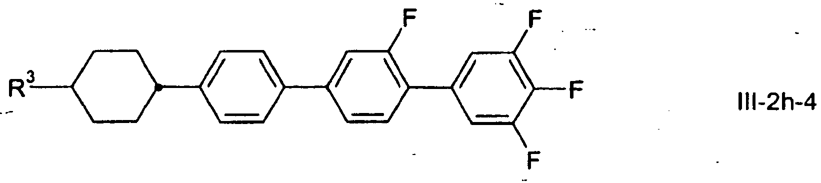 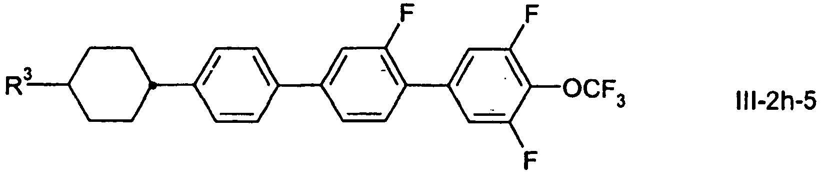 worin R³ die oben angegebene Bedeutung besitzt.

Alternativ oder zusätzlich zu den Verbindungen der Formeln III-1 und/oder III-2 können die Medien gemäß der vorliegenden Erfindung eine oder mehrere Verbindungen der Formel III-3 enthalten 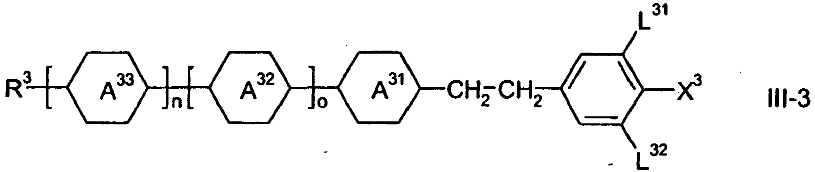 worin die Parameter die jeweiligen oben unter Formel III angegebenen Bedeutungen besitzen und vorzugsweise ausgewählt sind aus der Gruppe der Formeln III-3a und III-3b 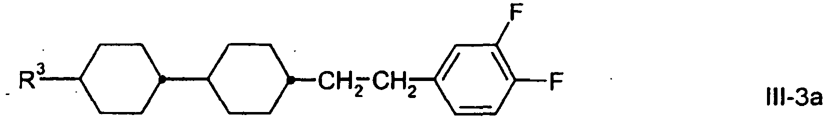 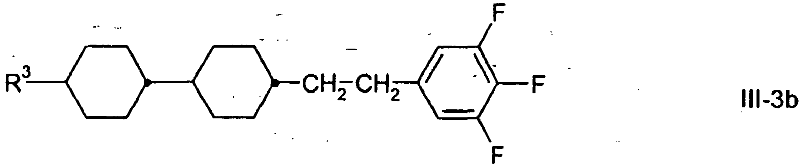 worin R³ die oben angegebene Bedeutung besitzt.

Vorzugsweise enthalten die flüssigkristallinen Medien gemäß der vorliegenden Erfindung eine dielektrisch neutrale Komponente, Komponente C. Diese Komponente weist eine dielektrische Anisotropie im Bereich von -1,5 bis 3 auf. Vorzugsweise enthält sie dielektrisch neutrale Verbindungen mit einer dielektrischen Anisotropie im Bereich von -1,5 bis 3, stärker bevorzugt besteht sie überwiegend, noch stärker bevorzugt besteht sie im Wesentlichen und speziell bevorzugt besteht sie vollständig daraus. Vorzugsweise enthält diese Komponente eine oder mehrere, stärker bevorzugt besteht sie überwiegend, noch stärker bevorzugt besteht sie im Wesentlichen und ganz bevorzugt besteht sie vollständig aus dielektrisch neutralen Verbindungen mit einer dielektrischen Anisotropie im Bereich von -1,5 bis 3, der Formel IV.

Vorzugsweise enthält die dielektrisch neutrale Komponente, Komponente C, eine oder mehrere Verbindungen ausgewählt aus der Gruppe der Verbindungen der Formeln IV-1 bis IV-6 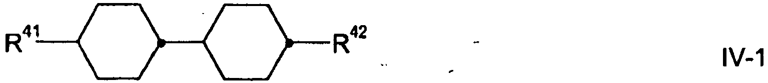 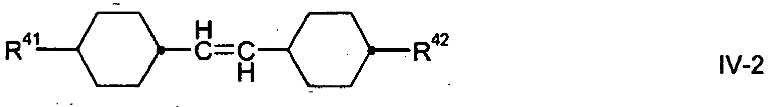 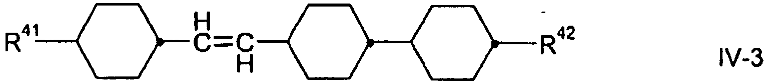 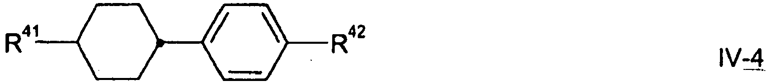 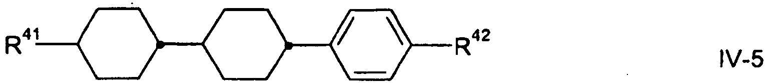 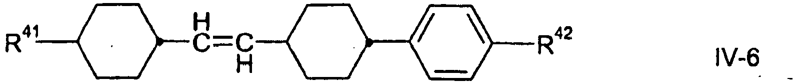 worin R⁴¹ und R⁴² die jeweiligen oben unter Formel IV angegebenen Bedeutungen besitzen und in den Formeln IV-1, IV-5 und IV-6 R⁴¹ vorzugsweise Alkyl oder Alkenyl, vorzugsweise Alkenyl, und R⁴² vorzugsweise Alkyl oder Alkenyl, vorzugsweise Alkyl bedeutet, in Formel IV-2 R⁴¹ und R⁴² vorzugsweise Alkyl bedeuten und in Formel IV-4 R⁴¹ vorzugsweise Alkyl oder Alkenyl, stärker bevorzugt Alkyl, und R⁴² vorzugsweise Alkyl oder Alkoxy, stärker bevorzugt Alkoxy bedeutet.

Vorzugsweise enthält die dielektrisch neutrale Komponente, Komponente C, eine oder mehrere Verbindungen ausgewählt aus der Gruppe der Verbindungen der Formeln IV-1, IV-4, IV-5 und IV-6, vorzugsweise eine oder mehrere Verbindungen der Formel IV-1 und eine oder mehrere Verbindungen ausgewählt aus der Gruppe der Formeln IV-4 und IV-5, stärker bevorzugt jeweils eine oder mehrere Verbindungen der Formeln IV-1, IV-4 und IV-5 und ganz bevorzugt jeweils eine oder mehrere Verbindungen Formeln IV-1, IV-4, IV-5 und IV-6.

In einer bevorzugten Ausführungsform enthält die Komponente C vorzugsweise eine oder mehrere Verbindungen der Formel IV-5, stärker bevorzugt ausgewählt aus ihren jeweiligen Unterformeln der Formel CCP-V-n und/oder CCP-nV-m und/oder CCP-Vn-m, stärker bevorzugt der Formel CCP-V-n und/oder CCP-V2-n und ganz bevorzugt ausgewählt aus der Gruppe der Formeln CCP-V-1 und CCP-V2-1. Die Definitionen dieser Abkürzungen (Akronyme) sind unten in Tabelle D angegeben, bzw. aus den Tabellen A bis C zu ersehen.

In einer ebenfalls bevorzugten Ausführungsform enthält die Komponente C vorzugsweise eine oder mehrere Verbindungen der Formel IV-1, stärker bevorzugt ausgewählt aus ihren jeweilige Unterformeln der Formel CC-n-m, CC-n-V und/ oder CC-n-Vm, stärker bevorzugt der Formeln CC-n-V und/ oder CC-n-Vm und ganz bevorzugt ausgewählt aus der Gruppe der Formeln CC-3-V, CC-4-V, CC-5-V CC-3-V1, CC-4V1, CC-5-V1 und CC-3-V2. Die Definitionen dieser Abkürzungen (Akronyme) sind ebenfalls unten in Tabelle D angegeben, bzw. aus den Tabellen A bis C zu ersehen.

In einer weiteren bevorzugten Ausführungsform der vorliegenden Erfindung, bei der es sich um dieselbe wie die vorhergehende oder um eine andere handeln kann, enthalten die Flüssigkristallmischungen gemäß der vorliegenden Erfindung die Komponente C, die Verbindungen der Formel IV ausgewählt aus der Gruppe der Verbindungen der Formeln IV-1 bis IV-6 wie oben gezeigt und gegebenenfalls der Formeln IV-7 bis IV-14 enthält, vorzugsweise überwiegend daraus besteht und ganz bevorzugt vollständig daraus besteht: 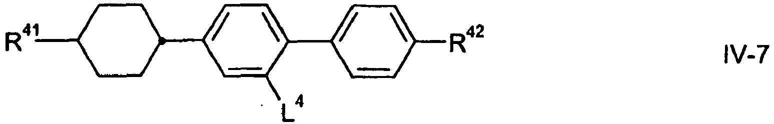 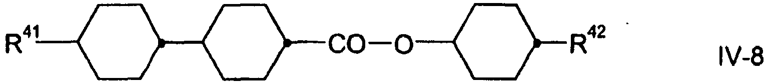 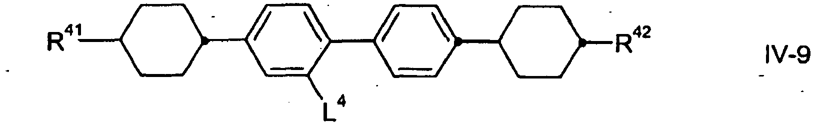 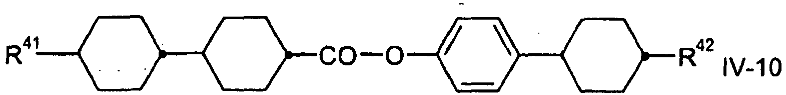 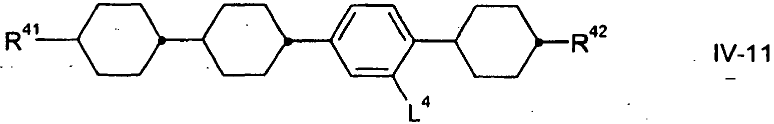 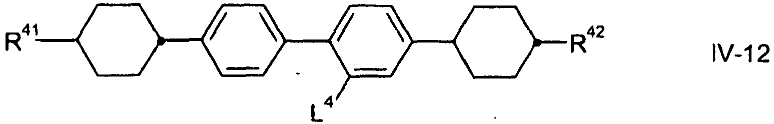 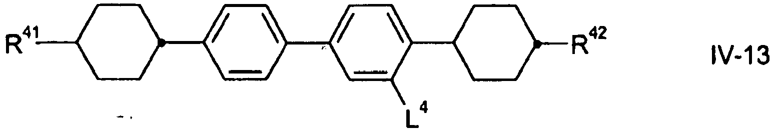 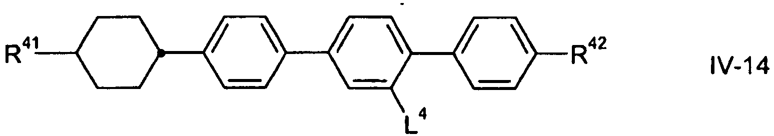 worin
- R⁴¹ und R⁴²: unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten und
- L⁴: H oder F bedeutet.

In einer bevorzugten Ausführungsform enthält die Komponente C vorzugsweise eine oder mehrere Verbindungen der Formel IV-7, stärker bevorzugt ausgewählt aus ihren jeweiligen Unterformeln der Formel CPP-3-2, CPP-5-2 und CGP-3-2, stärker bevorzugt der Formel CPP-3-2 und/oder CGP-3-2 und ganz besonders bevorzugt der Formel CPP-3-2. Die Definitionen dieser Abkürzungen (Akronyme) sind unten in Tabelle D angegeben, bzw. aus den Tabellen A bis C zu ersehen.

Alternativ oder zusätzlich zu den Verbindungen der Formeln II und/oder III können die Medien gemäß der vorliegenden Erfindung in Komponente B eine oder mehrere dielektrisch positive Verbindungen der Formel V enthalten 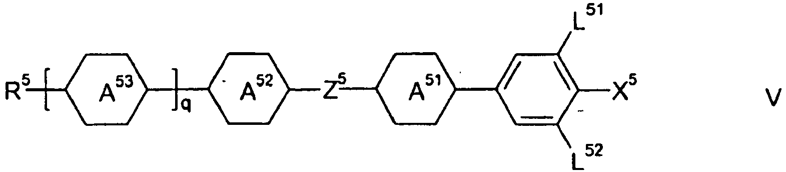 worin
- R⁵: Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen und vorzugsweise Alkyl oder Alkenyl bedeutet, 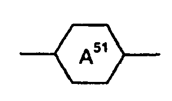 bis 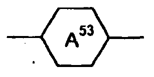 unabhängig voneinander 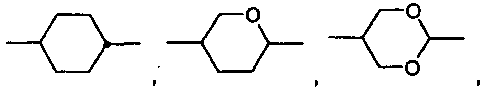 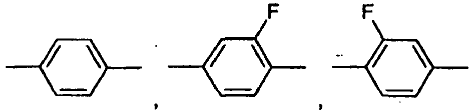 oder 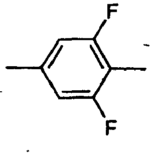 bedeuten,
- L⁵¹ und L⁵²: unabhängig voneinander H oder F bedeuten, vorzugsweise L⁵¹ F bedeutet, und
- X⁵: Halogen, halogeniertes Alkyl oder Alkoxy mit 1 bis 3 C-Atomen oder halogeniertes Alkenyl oder Alkenyloxy mit 2 oder 3 C-Atomen, vorzugsweise F, Cl, -OCF₃ oder -CF₃, ganz bevorzugt F, Cl oder -OCF₃ bedeutet,
- Z⁵: -CH₂CH₂-, -CF₂CF₂-, -COO-, *trans-* -CH=CH-, *trans-*-CF=CF- oder -CH₂O-, vorzugsweise -CH₂CH₂-, -COO- oder *trans-* -CH=CH- und ganz bevorzugt -COO- oder *trans-* -CH=CH- bedeutet und
- q: 0 oder 1 bedeutet.

Vorzugsweise enthalten die Medien gemäß der vorliegenden Erfindung eine oder mehrere Verbindungen der Formel V, vorzugsweise ausgewählt aus der Gruppe der Verbindungen der Formeln V-1 und V-2 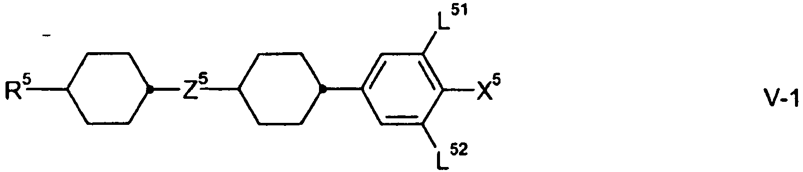 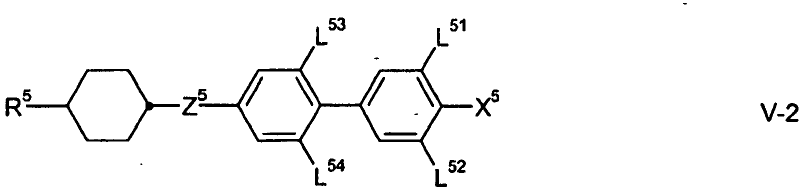 worin die Parameter die jeweiligen oben angegebenen Bedeutungen besitzen und die Parameter L⁵³ und L⁵⁴ unabhängig voneinander und von den anderen Parametern H oder F bedeuten und Z⁵ vorzugsweise -CH₂-CH₂- bedeutet.

Vorzugsweise sind die Verbindungen der Formel V-1 ausgewählt aus der Gruppe der Verbindungen der Formeln V-1a und V-1b 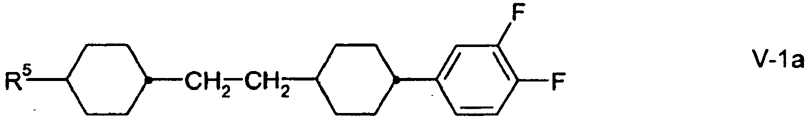 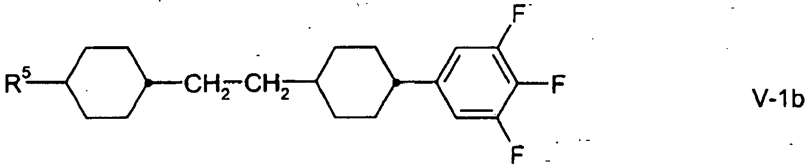 worin R⁵ die oben angegebene Bedeutung besitzt.

Vorzugsweise sind die Verbindungen der Formel V-2 ausgewählt aus der Gruppe der Verbindungen der Formeln V-2a bis V-2d 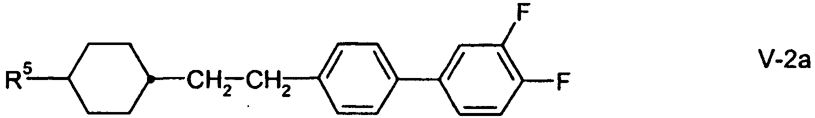 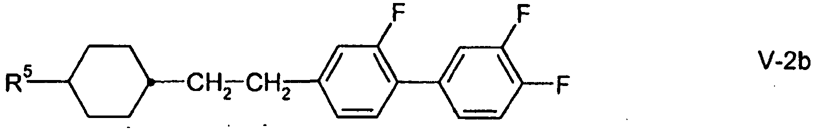 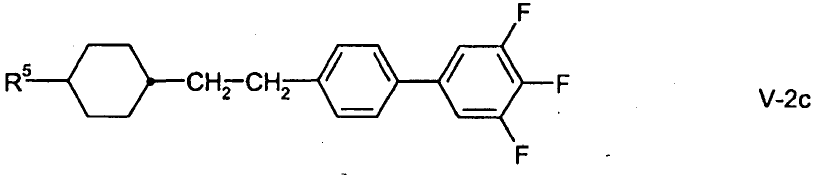 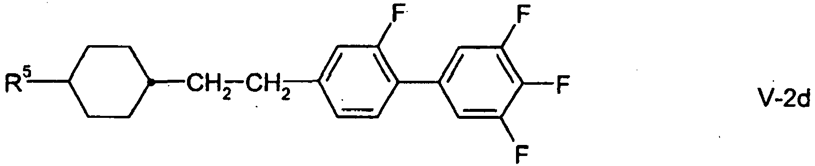 worin R⁵ die oben angegebene Bedeutung besitzt.

Vorzugsweise enthalten die flüssigkristallinen Medien gemäß der vorliegenden Erfindung eine zusätzliche dielektrisch neutrale Komponente, Komponente D. Diese Komponente weist eine dielektrische Anisotropie im Bereich von -1,5 bis 3 auf. Vorzugsweise enthält sie dielektrisch neutrale Verbindungen mit einer dielektrischen Anisotropie im Bereich von -1,5 bis 3, stärker bevorzugt besteht sie überwiegend, noch stärker bevorzugt besteht sie im Wesentlichen und speziell bevorzugt besteht sie vollständig daraus. Vorzugsweise enthält diese Komponente eine oder mehrere dielektrisch neutrale Verbindungen mit einer dielektrischen Anisotropie im Bereich von -1,5 bis 3, stärker bevorzugt besteht sie überwiegend, noch stärker bevorzugt besteht sie im Wesentlichen und ganz bevorzugt besteht sie vollständig daraus, der Formel VI 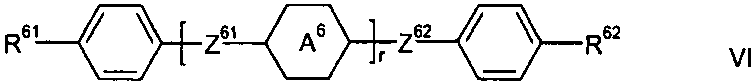 worin
- R⁶¹ und R⁶²: unabhängig voneinander die oben unter Formel II für R² angegebene Bedeutung besitzen, vorzugsweise R⁶¹ Alkyl und R⁶² Alkyl oder Alkenyl bedeutet, 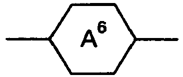 und bei zweifachem Auftreten bei jedem Auftreten unabhängig voneinander 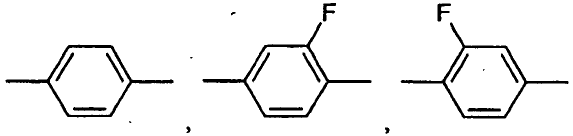 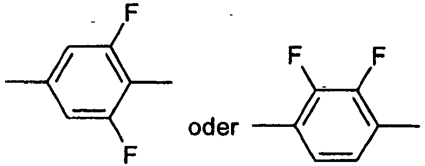 bedeutet,
vorzugsweise eines oder mehrere von 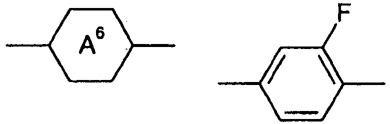 bedeuten,
- Z⁶¹ und Z⁶²: unabhängig voneinander und bei zweifachem Auftreten von Z⁶¹ auch diese unabhängig voneinander -CH₂CH₂-, -COO-, *trans-* -CH=CH-, *trans-* -CF=CF-, -CH₂O-, -CF₂O- oder eine Einfachbindung bedeuten, vorzugsweise eines oder mehrere von ihnen eine Einfachbindung bedeutet/bedeuten, und
- r: 0, 1 oder 2, vorzugsweise 0 oder 1 bedeutet.

Vorzugsweise enthält die dielektrisch neutrale Komponente, Komponente D, eine oder mehrere Verbindungen ausgewählt aus der Gruppe der Verbindungen der Formeln VI-1 und VI-2 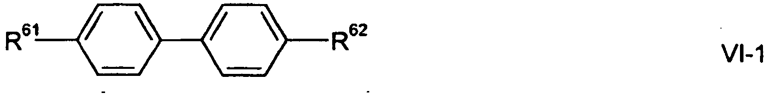 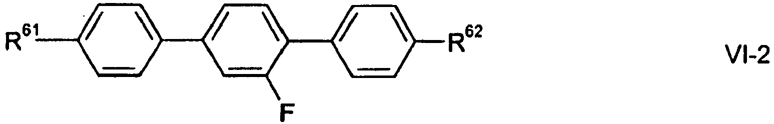 worin R⁶¹ und R⁶² die jeweiligen oben unter Formel VI angegebenen Bedeutungen besitzen und R⁶¹ vorzugsweise Alkyl bedeutet und in Formel VI-1 R⁶² vorzugsweise Alkenyl, vorzugsweise -(CH₂)₂-CH=CH-CH₃, und in Formel VI-2 R⁶² vorzugsweise Alkyl bedeutet.

Vorzugsweise enthält die dielektrisch neutrale Komponente, Komponente D, eine oder mehrere Verbindungen ausgewählt aus der Gruppe der Verbindungen der Formeln VI-1 und VI-2, worin R⁶¹ vorzugsweise n-Alkyl, bedeutet und in Formel VI-1 R⁶² vorzugsweise Alkenyl und in Formel VI-2 R⁶² vorzugsweise n-Alkyl bedeutet.

In einer bevorzugten Ausführungsform enthält die Komponente D vorzugsweise eine oder mehrere Verbindungen der Formel VI-1, stärker bevorzugt ihrer Unterformel PP-n-2Vm, noch stärker bevorzugt der Formel PP-1-2V1. Die Definitionen dieser Abkürzungen (Akronyme) sind unten in Tabelle D angegeben, bzw. aus den Tabellen A bis C zu ersehen.

In einer bevorzugten Ausführungsform enthält die Komponente D vorzugsweise eine oder mehrere Verbindungen der Formel VI-2, stärker bevorzugt ihrer Unterformel PGP-n-m, noch stärker bevorzugt ihrer Unterformel PGP-3-m, ganz bevorzugt ausgewählt aus den Formeln PGP-3-2, PGP-3-3, PGP-3-4 und PGP-3-5. Die Definitionen dieser Abkürzungen (Akronyme) sind ebenfalls unten in Tabelle D angegeben, bzw. aus den Tabellen A bis C zu ersehen.

Vorzugsweise enthalten die Flüssigkristallmischungen gemäß der vorliegenden Erfindung neben den Komponenten A und B mindestens eine weitere Komponente. Diese dritte Komponente kann eine der Komponenten C und D sein, vorzugsweise ist die dritte vorliegende Komponente die Komponente C.

Selbstverständlich können die Mischungen gemäß der vorliegenden Erfindung auch alle vier Komponenten A, B, C und D enthalten.

Zusätzlich können die Flüssigkristallmischungen gemäß der vorliegenden Erfindung eine weitere optionale Komponente, Komponente E, enthalten, die eine negative dielektrische Anisotropie aufweist und dielektrisch negative Verbindungen enthält, vorzugsweise überwiegend daraus besteht, stärker bevorzugt im Wesentlichen daraus besteht und ganz bevorzugt vollständig daraus besteht, vorzugsweise der Formel VII 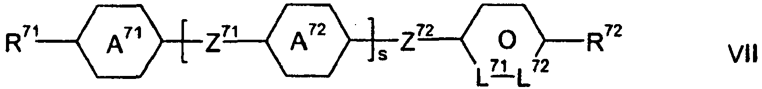 worin -
- R⁷¹ und R⁷²: unabhängig voneinander die oben unter Formel II für R² angegebene Bedeutung besitzen, 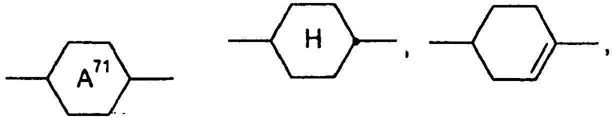 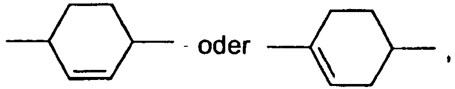 vorzugsweise 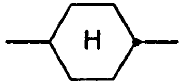 bedeutet, 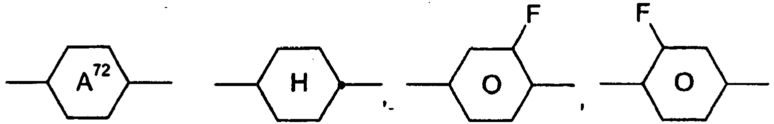 oder 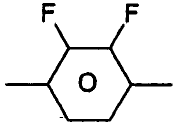 bedeutet,
- Z⁷¹ und Z⁷²: unabhängig voneinander -CH₂CH₂-, -COO-, *trans-*-CH=CH-, *trans-* -CF=CF-, -CH₂O-, -CF₂O- oder eine Einfachbindung bedeuten, vorzugsweise eines oder mehrere von ihnen eine Einfachbindung bedeutet/bedeuten und ganz bevorzugt beide eine Einfachbindung bedeuten,
- L⁷¹ und L⁷² -: unabhängig voneinander C-F oder N bedeuten, vorzugsweise eines oder mehrere von ihnen C-F bedeutet/bedeuten und ganz bevorzugt beide C-F bedeuten, und
- s: 0 oder 1 bedeutet.

Zusätzlich können die Flüssigkristallmischungen gemäß der vorliegenden Erfindung eine weitere optionale Komponente, Komponente F, enthalten, die eine positive dielektrische Anisotropie aufweist und dielektrisch positive Verbindungen enthält, vorzugsweise überwiegend daraus besteht, stärker bevorzugt im Wesentlichen daraus besteht und ganz bevorzugt vollständig daraus besteht, vorzugsweise der Formel VIII 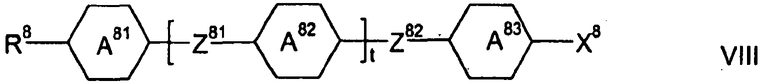 worin
- R⁸: die oben unter Formel II für R² angegebene Bedeutung besitzt,
eines von 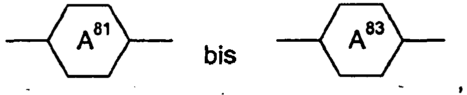 das vorhanden ist, 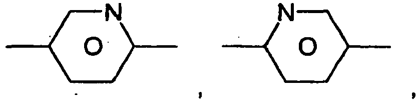 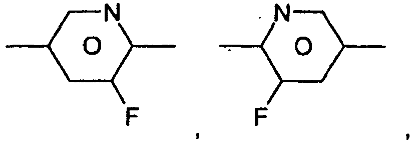 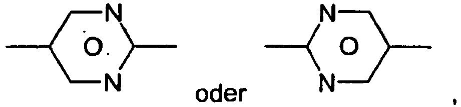 Vorzugsweise 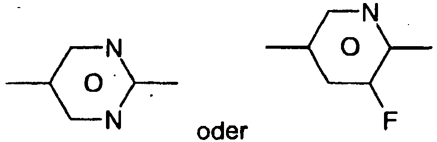 bedeutet,
vorzugsweise 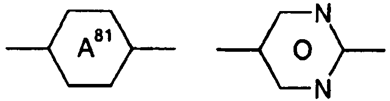 oder 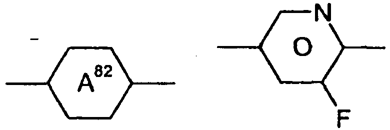 bedeutet,
und die anderen dieselbe Bedeutung besitzen oder unabhängig voneinander 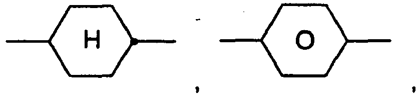 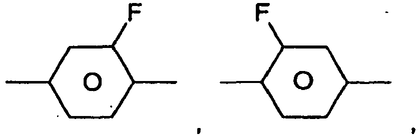 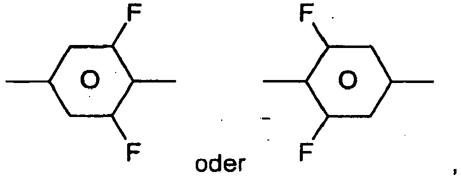 vorzugweise 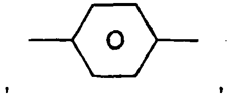 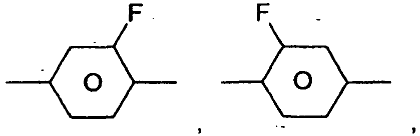 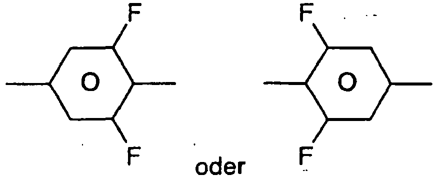 bedeuten,
- Z⁸¹ und Z⁸²: unabhängig voneinander -CH₂CH₂-, -COO-, *trans-*-CH=CH-, *trans-* -CF=CF-, -CH₂O-, -CF₂O- oder eine Einfachbindung bedeuten, vorzugsweise eines oder mehrere von ihnen eine Einfachbindung bedeutet/bedeuten und ganz bevorzugt beide eine Einfachbindung bedeuten,
- t: 0, 1 oder 2, vorzugsweise 0 oder 1, stärker bevorzugt 1 bedeutet, und
- X⁸: die oben unter Formel II für X² angegebene Bedeutung besitzt oder alternativ unabhängig von R⁸ die für R⁸ angegebene Bedeutung besitzen kann und

wovon die Verbindungen der Formel I ausgenommen sind.

Vorzugsweise enthalten die flüssigkristallinen Medien gemäß der vorliegenden Erfindung die Komponenten A bis E, vorzugsweise A bis D und ganz bevorzugt A bis C, und insbesondere Verbindungen ausgewählt aus der Gruppe der Verbindungen der Formeln l'A-1d bis VIII, vorzugsweise I bis V und ganz bevorzugt l'A-1d bis III und/oder IV, stärker bevorzugt bestehen sie überwiegend, noch stärker bevorzugt bestehen sie im Wesentlichen und ganz bevorzugt bestehen sie vollständig daraus.

In dieser Anmeldung bedeutet enthalten im Zusammenhang mit Zusammensetzungen, dass die betreffende Entität, d.h. das Medium oder die Komponente, die angegebene Komponente oder Komponenten oder Verbindung oder Verbindungen enthält, vorzugsweise in einer Gesamtkonzentration von 10 % oder mehr und ganz bevorzugt von 20 % oder mehr.

Überwiegend bestehen bedeutet in diesem Zusammenhang, dass die betreffende Entität 55 % oder mehr, vorzugsweise 60 % oder mehr und ganz bevorzugt 70 % oder mehr der angegebenen Komponente oder Komponenten oder Verbindung oder Verbindungen enthält.

Im Wesentlichen bestehen bedeutet in diesem Zusammenhang, dass die betreffende Entität 80 % oder mehr, vorzugsweise 90 % oder mehr und ganz bevorzugt 95 % oder mehr der angegebenen Komponente oder Komponenten oder Verbindung oder Verbindungen enthält.

Vollständig bestehen bedeutet in diesem Zusammenhang, dass die betreffende Entität 98 % oder mehr, vorzugsweise 99 % oder mehr und ganz bevorzugt 100,0 % der angegebenen Komponente oder Komponenten oder Verbindung oder Verbindungen enthält.

Vorzugsweise enthält die Komponente E, stärker bevorzugt besteht sie überwiegend und ganz bevorzugt besteht sie vollständig aus einer oder mehreren Verbindungen der Formel VII, vorzugsweise ausgewählt aus der Gruppe der Verbindungen der Formeln VII-1 bis VII-3 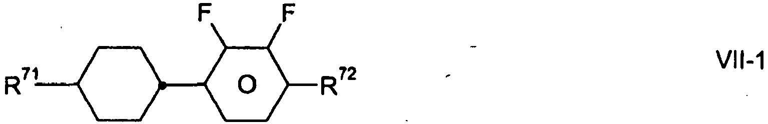 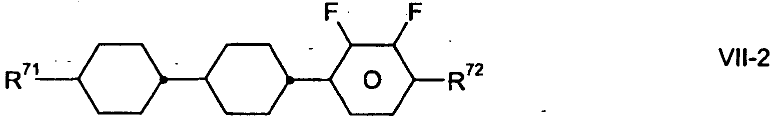 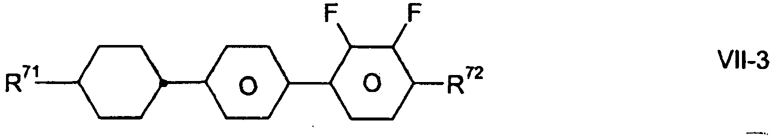 worin
- R⁷¹ und R⁷²: die jeweiligen oben unter Formel VII angegebenen Bedeutungen besitzen.

In den Formeln VII-1 bis VII-3 bedeutet R⁷¹ vorzugsweise n-Alkyl oder 1-*E*-Alkenyl und R⁷² vorzugsweise n-Alkyl oder Alkoxy.

Auch andere mesogene Verbindungen, die oben nicht explizit genannt sind, können gegebenenfalls und in vorteilhafter Weise in den Medien gemäß der vorliegenden Erfindung verwendet werden. Solche Verbindungen sind dem Fachmann bekannt.

Die Flüssigkristallmedien gemäß der vorliegenden Erfindung weisen bevorzugt einen Klärpunkt von 60 °C oder mehr, besonders bevorzugt von 70 °C oder mehr und ganz besonders bevorzugt von 75 °C oder mehr, auf.

Das Δn der Flüssigkristallmedien gemäß der vorliegenden Erfindung liegt bei 589 nm (Na^{D}) und 20 °C vorzugsweise im Bereich von 0,060 oder mehr bis 0,140 oder weniger, stärker bevorzugt im Bereich von 0,070 oder mehr bis 0,130 oder weniger, noch stärker bevorzugt im Bereich von 0,080 oder mehr bis 0,125 oder weniger und ganz bevorzugt im Bereich von 0,090 oder mehr bis 0,122 oder weniger.

In einer bevorzugten Ausführungsform der vorliegenden Anmeldung beträgt das Δn der Flüssigkristallmedien gemäß der vorliegenden Erfindung vorzugsweise 0,080 oder mehr, stärker bevorzugt 0,090 oder mehr.

Das Δε des Flüssigkristallmediums gemäß der Erfindung bei 1 kHz und 20 °C beträgt vorzugsweise 2 oder mehr, stärker bevorzugt 4 oder mehr und ganz bevorzugt 6 oder mehr. Insbesondere beträgt Δε 15 oder weniger.

Vorzugsweise erstreckt sich die nematische Phase der erfindunggemäßen Medien mindestens von 0 °C oder weniger bis 65 °C oder mehr, stärker bevorzugt mindestens von -20 °C oder weniger bis 70 °C oder - mehr, ganz bevorzugt mindestens von -30 °C oder weniger bis 75 °C oder mehr und insbesondere mindestens von -40 °C oder weniger bis 75 °C oder mehr.

In einer ersten bevorzugten Ausführungsform der vorliegenden Erfindung liegt das Δn der Flüssigkristallmedien im Bereich von 0,090 oder mehr bis 0,130 oder weniger, stärker bevorzugt im Bereich von 0,095 oder mehr bis 0,120 oder weniger und ganz bevorzugt im Bereich von 0,100 oder mehr bis 0,115 oder weniger, während Δε vorzugsweise im Bereich von 2 oder mehr bis 12 oder weniger, vorzugsweise 10 oder weniger liegt.

In einer zweiten bevorzugten Ausführungsform der vorliegenden Erfindung liegt das Δn der Flüssigkristallmedien im Bereich von 0,085 oder mehr bis 0,130 oder weniger, stärker bevorzugt im Bereich von 0,090 oder mehr bis 0,125 oder weniger und ganz bevorzugt im Bereich von 0,095 oder mehr bis 0,120 oder weniger, während Δε vorzugsweise 4 oder mehr, stärker bevorzugt 6 oder mehr, noch stärker bevorzugt 8,0 oder mehr beträgt und ganz bevorzugt im Bereich von 8,0 oder mehr bis 10,0 oder weniger liegt.

In dieser Ausführungsform erstreckt sich die nematische Phase der erfindungsgemäßen Medien vorzugsweise mindestens von -20 °C oder weniger bis 65 °C oder mehr, stärker bevorzugt mindestens von -20 °C oder weniger bis 70 °C oder mehr, ganz bevorzugt mindestens von -30 °C oder weniger bis 70 °C oder mehr und insbesondere mindestens von -40 °C oder weniger bis 70 °C oder mehr.

In einer dritten bevorzugten Ausführungsform der vorliegenden Erfindung liegt das Δn der Flüssigkristallmedien im Bereich von 0,070 oder mehr bis 0,120 oder weniger, stärker bevorzugt im Bereich von 0,075 oder mehr bis 0,115 oder weniger und ganz bevorzugt im Bereich von 0,080 oder mehr bis 0,110 oder weniger, während Δε vorzugsweise 2,0 oder mehr beträgt, stärker bevorzugt im Bereich von 3,0 oder mehr bis 14,0 oder weniger und ganz bevorzugt entweder im Bereich von 4,0 oder mehr bis 6,0 oder weniger oder besonders bevorzugt im Bereich von 6,0 oder mehr bis 11,0 oder weniger liegt.

In dieser Ausführungsform erstreckt sich die nematische Phase der erfindungsgemäßen Medien vorzugsweise mindestens von -20°C oder weniger bis 75°C oder mehr, stärker bevorzugt mindestens von -30 °C oder weniger bis 70 °C oder mehr, ganz bevorzugt mindestens von -30 °C oder weniger bis 75 °C oder mehr und insbesondere mindestens von -30 °C oder weniger bis 80 °C oder mehr.

In einer vierten bevorzugten Ausführungsform der vorliegenden Erfindung liegt das Δn der Flüssigkristallmedien im Bereich von 0,080 oder mehr bis 0,120 oder weniger, stärker bevorzugt im Bereich von 0,085 oder mehr bis 0,115 oder weniger und ganz bevorzugt im Bereich von 0,090 oder mehr bis 0,110 oder weniger, während Δε vorzugsweise 1,5 oder mehr beträgt, stärker bevorzugt im Bereich von 2,0 oder mehr bis 8,0 oder weniger und ganz bevorzugt entweder im Bereich von 2,0 oder mehr bis 6,0 oder weniger oder besonders bevorzugt im Bereich von 2,0 oder mehr bis 4,0 oder weniger liegt.

In dieser Ausführungsform erstreckt sich die nematische Phase der erfindungsgemäßen Medien vorzugsweise mindestens von -20°C oder weniger bis 65°C oder mehr, stärker bevorzugt mindestens von -30 °C oder weniger bis 70 °C oder mehr, ganz bevorzugt mindestens von -30 °C oder weniger bis 75 °C oder mehr und insbesondere mindestens von -30 °C oder weniger bis 80 °C oder mehr.

In einer fünften bevorzugten Ausführungsform der vorliegenden Erfindung liegt das Δn der Flüssigkristallmedien im Bereich von 0,090 oder mehr bis 0,140 oder weniger, während Δε im Bereich von 2,0 oder mehr bis 14,0 oder weniger liegt.

Gemäß der vorliegenden Erfindung wird die Komponente A wird vorzugsweise in einer Konzentration von 1 % bis 50 %, stärker bevorzugt von 1 % bis 30 %, stärker bevorzugt von 2 % bis 30 % und ganz bevorzugt von 3 % bis 30 % der Gesamtmischung verwendet.

Die Komponente B wird vorzugsweise in einer Konzentration von 2 % bis 60 %, stärker bevorzugt von 3 % bis 55 %, noch stärker bevorzugt von 15 % bis 50 % und ganz bevorzugt von 20 % bis 45 % der Gesamtmischung verwendet.

Die Komponente C wird vorzugsweise in einer Konzentration von 0 % bis 70 %, stärker bevorzugt von 10 % bis 65 %, noch stärker bevorzugt von 20 % bis 60 % und ganz bevorzugt von 15 % bis 55 % der Gesamtmischung verwendet.

Die Komponente D wird vorzugsweise in einer Konzentration von 0 % bis 50 %, stärker bevorzugt von 1 % bis 40 %, noch stärker bevorzugt von 5 % bis 30 % und ganz bevorzugt von 10 % bis 20 % der Gesamtmischung verwendet.

Die Komponente E wird vorzugsweise in einer Konzentration von 0 % bis 30 %, stärker bevorzugt von 0 % bis 15 % und ganz bevorzugt von 1 % bis 10 % der Gesamtmischung verwendet.

Gegebenenfalls können die erfindungsgemäßen Medien weitere Flüssigkristallverbindungen enthalten, um die physikalischen Eigenschaften einzustellen. Solche Verbindungen sind dem Fachmann bekannt. Ihre Konzentration in den Medien gemäß der vorliegenden Erfindung beträgt vorzugsweise 0 % bis 30 %, stärker bevorzugt 0,1 % bis 20 % und ganz bevorzugt 1 % bis 15 %.

In der ersten bevorzugten Ausführungsform der vorliegenden Erfindung wie oben genannt wird die Komponente A vorzugsweise in einer Konzentration von 1 % bis 65 %, stärker bevorzugt von 3 % bis 60 % und ganz bevorzugt von 5 % bis 57 % der Gesamtmischung verwendet, während die Komponente D vorzugsweise in einer Konzentration von 5 % bis 40 %, stärker bevorzugt von 10 % bis 35 % und ganz bevorzugt von 10 % bis 30 % der Gesamtmischung verwendet wird.

In dieser bevorzugten Ausführungsform enthalten die Medien vorzugsweise eine oder mehrere Verbindungen der Formel VI und ganz bevorzugt der Formel VI-2.

Speziell in der zweiten bevorzugten Ausführungsform der vorliegenden Erfindung wie oben genannt enthält die Komponente C vorzugsweise eine oder mehrere Verbindungen der Formel IV, stärker bevorzugt der Formel IV-1, noch stärker bevorzugt ausgewählt aus ihren jeweiligen Unterformeln der Formel CC-n-V und/oder CC-n-Vm, stärker bevorzugt der Formel CCn-V1 und/ oder CC-n-V und ganz bevorzugt ausgewählt aus der Gruppe der Formeln CC-3-V, CC-4-V, CC-5-V und CC-3-V1. Die Definitionen dieser Abkürzungen (Akronyme) sind unten in Tabelle D angegeben.

Die Flüssigkristallmedien enthalten vorzugsweise insgesamt 50 % bis 100 %, stärker bevorzugt 70 % bis 100 % und ganz bevorzugt 80 % bis 100 % und insbesondere 90 % bis 100 % der Komponenten A, B, C und D, vorzugsweise der Komponenten A, B und C, die wiederum eine oder mehrere der Verbindungen der Formeln l'A-1d, II, III, IV, V, VI und VII, vorzugsweise der Formeln l'A-1d, II, III, IV, V bzw. VI enthalten, vorzugsweise überwiegend daraus bestehen und ganz bevorzugt vollständig daraus bestehen.

In der vorliegenden Anmeldung beschreibt der Ausdruck dielektrisch positiv Verbindungen oder Komponenten mit Δε > 3,0, dielektrisch neutral mit - 1,5 ≤ Δε ≤ 3,0 und dielektrisch negativ mit Δε < -1,5. Δε wird bei einer Frequenz von 1 kHz und 20°C bestimmt. Die dielektrische Anisotropie der jeweiligen Verbindung wird aus den Ergebnissen einer Lösung von 10 % der jeweiligen einzelnen Verbindung in einer nematischen Host-Mischung bestimmt. Wenn die Löslichkeit der jeweiligen Verbindung in der Host-Mischung weniger als 10 % beträgt, wird die Konzentration auf 5 % reduziert. Die Kapazitäten der Testmischungen werden sowohl in einer Zelle mit homöotroper als auch mit homogener Orientierung bestimmt. Die Schichtdicke beträgt bei beiden Zelltypen ca. 20 µm. Die angelegte Spannung ist eine Rechteckwelle mit einer Frequenz von 1 kHz und einem Effektivwert von typischerweise 0,5 V bis 1,0 V, wird jedoch stets so ausgewählt, dass sie unterhalb der kapazitiven Schwelle für die jeweilige Testmischung liegt.

Δε ist als (ε_{∥} - ε_{⊥}) definiert, während ε_{Drchschn.} (ε_{∥} + 2ε_{⊥})/3 ist.

Als Host-Mischung wird für dielektrisch positive Verbindungen die Mischung ZLI-4792 und für dielektrisch neutrale sowie für dielektrisch negative Verbindungen die Mischung ZLI-3086 verwendet, beide von Merck KGaA, Deutschland. Die absoluten Dielektrizitätskonstanten der Verbindungen werden aus der Änderung der jeweiligen Werte der Host-Mischung bei Zugabe der interessierenden Verbindungen bestimmt. Die Werte werden auf eine Konzentration der interessierenden Verbindungen von 100 % extrapoliert.

Komponenten, die bei der Messtemperatur von 20 °C eine nematische Phase aufweisen, werden als solche gemessen, alle anderen werden wie Verbindungen behandelt.

Der Ausdruck Schwellenspannung bezeichnet in der vorliegenden Anmeldung die optische Schwelle und ist für 10 % relativen Kontrast (V₁₀) angegeben, der Ausdruck Sättigungsspannung bezeichnet die optische Sättigung und ist für 90 % relativen Kontrast (V₉₀) angegeben, in beiden Fällen, soweit nicht ausdrücklich etwas anderes angegeben ist. Die kapazitive Schwellenspannung (V₀), auch Freedericksz-Schwelle V_{Fr} genannt, wird nur verwendet, wenn dies ausdrücklich genannt ist.

Die in dieser Anmeldung angegebenen Parameterbereiche schließen sämtlich die Grenzwerte ein, wenn nicht ausdrücklich etwas anderes angegeben ist.

Die unterschiedlichen für verschiedene Bereiche von Eigenschaften angegebenen oberen und unteren Grenzwerte ergeben in Kombination miteinander zusätzliche bevorzugte Bereiche.

In der gesamten Anmeldung gelten, wenn nicht ausdrücklich anders angegeben, die folgenden Bedingungen und Definitionen. Alle Konzentrationen sind in Massenprozent angegeben und beziehen sich jeweils auf die Gesamtmischung, alle Temperaturen und alle Temperaturunterschiede sind in Grad Celsius bzw. Differenzgrad angegeben. Alle physikalischen Eigenschaften werden nach "Merck Liquid Crystals, Physical Properties of Liquid Crystals", Stand Nov. 1997, Merck KGaA, Deutschland, bestimmt und sind für eine Temperatur von 20 °C aufgeführt, wenn nicht ausdrücklich anders angegeben. Die optische Anisotropie (Δn) wird bei einer Wellenlänge von 589,3 nm bestimmt. Die dielektrische Anisotropie (Δε) wird bei einer Frequenz von 1 kHz bestimmt. Die Schwellenspannungen sowie alle anderen elektrooptischen Eigenschaften werden mit bei Merck KGaA, Deutschland, hergestellten Testzellen bestimmt. Die Testzellen für die Bestimmung vorn Δε besitzen eine Schichtdicke von circa 20 µm. Bei der Elektrode handelt es sich um eine kreisförmige ITO-Elektrode mit einer Fläche von 1,13 cm² und einem Schutzring. Die Ausrichtungsschichten sind SE-1211 von Nissan Chemicals, Japan, für homöotrope Ausrichtung (ε_{||}) und Polyimid AL-1054 von Japan Synthetic Rubber, Japan, für homogene Ausrichtung (ε_{⊥}). Die Bestimmung der Kapazitäten erfolgt mit einem Frequenzgang-Analysegerät Solatron 1260 unter Verwendung einer Sinuswelle mit einer Spannung von 0,3 Vᵣₘₛ. Als Licht wird bei den elektrooptischen Messungen weißes Licht verwendet. Dabei wird ein Aufbau mit einem im Handel erhältlichen Gerät DSM der Fa. Autronic-Melchers, Germany verwendet. Die charakteristischen Spannungen wurden unter senkrechter Beobachtung bestimmt. Die Schwellenspannung (V₁₀), Mittgrauspannung (V₅₀) und Sättigungsspannung (V₉₀) wurden für 10 %, 50 % bzw. 90 % relativen Kontrast bestimmt.

Die Flüssigkristallmedien gemäß der vorliegenden Erfindung können weitere Zusatzstoffe und chirale Dotierstoffe in den üblichen Konzentrationen beinhalten. Die Gesamtkonzentration dieser weiteren Bestandteile liegt im Bereich von 0 % bis 10 %, vorzugsweise 0,1 % bis 6 %, bezogen auf die Gesamtmischung. Die Konzentrationen der einzelnen verwendeten Verbindungen liegen vorzugsweise jeweils im Bereich von 0,1 % bis 3 %. Die Konzentration dieser und ähnlicher Zusatzstoffe wird bei der Angabe der Werte und Konzentrationsbereiche der Flüssigkristallkomponenten und -verbindungen der Flüssigkristallmedien- in dieser Anmeldung nicht berücksichtigt.

Die erfindungsgemäßen Flüssigkristallmedien bestehen aus mehreren Verbindungen, vorzugsweise aus 3 bis 30, stärker bevorzugt aus 4 bis 20 und ganz bevorzugt aus 4 bis 16 Verbindungen. Diese Verbindungen werden auf herkömmliche Weise gemischt. In der Regel wird die gewünschte Menge der in der geringeren Menge verwendeten Verbindung in der in der größeren Menge verwendeten Verbindung gelöst. Liegt die Temperatur über dem Klärpunkt der in der höheren Konzentration verwendeten Verbindung, ist die Vervollständigung des Lösungsvorgangs besonders leicht zu beobachten. Es ist jedoch auch möglich, die Medien auf anderen üblichen Wegen, beispielsweise unter Verwendung von so genannten Vormischungen, bei denen es sich z.B. um homologe oder eutektische Mischungen von Verbindungen handeln kann, oder unter Verwendung von so genannten "Multi-Bottle"-Systemen, deren Bestandteile selbst gebrauchsfertige Mischungen sind, herzustellen.

Durch Zugabe geeigneter Zusatzstoffe können die Flüssigkristallmedien gemäß der vorliegenden Erfindung so modifiziert werden, dass sie in allen bekannten Arten von Flüssigkristallanzeigen verwendbar sind, entweder durch Verwendung der Flüssigkristallmedien als solcher, wie TN-, TN-AMD, ECB-AMD, VAN-AMD, IPS-AMD, FFS-AMD LCDs oder in Verbundsystemen, wie PDLC, NCAP, PN LCDs und speziell in ASM-PA LCDs.

Alle Temperaturen, wie z.B. der Schmelzpunkt T(K,N) bzw. T(K,S), der Übergang von der smektischen (S) zur nematischen (N) Phase T(S,N) und der Klärpunkt T (N,I) der Flüssigkristalle sind in Grad Celsius angegeben. Alle Temperaturdifferenzen sind in Differenzgraden angegeben.

In der vorliegenden Erfindung und insbesondere in den folgenden Beispielen sind die Strukturen der mesogenen Verbindungen durch Abkürzungen angegeben, die auch als Akronyme bezeichnet werden. In diesen Akronymen sind die chemischen Formeln unter Verwendung der folgenden Tabellen A bis C wie folgt abgekürzt. Alle Gruppen CₙH₂ₙ₊₁, CₘH₂ₘ₊₁ und CₗH₂ₗ₊₁ bzw. CₙH₂ₙ₋₁, CₘH₂ₘ₋₁ und CₗH₂ₗ₋₁ bedeuten geradkettiges Alkyl bzw. Alkenyl, vorzugsweise 1-E-Alkenyl, jeweils mit n, m bzw. I C-Atomen. In der Tabelle A werden die für die Ringelemente der Kemstrukturen der Verbindungen verwendeten Codes aufgeführt, während in der Tabelle B die Verknüpfungsgruppen gezeigt sind. Tabelle C gibt die Bedeutungen der Codes für die Endgruppen der linken bzw. rechten Seite. In Tabelle D sind Beispielstrukturen von Verbindungen mit ihren jeweiligen Abkürzungen zusammengestellt.

**Tabelle A: Ringelemente**

| | | | |
|---|---|---|---|
| **C** | 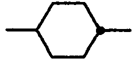 | **P** | 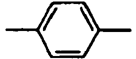 |
| **L** | 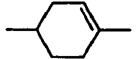 | **LI** | 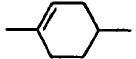 |
| **F** | 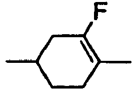 | **FI** | 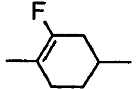 |
| **A** | 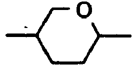 | **AI** | 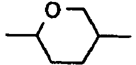 |
| **D** | 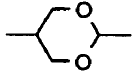 | **DI** | 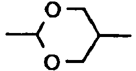 |
| **M** | 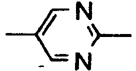 | **MI** | 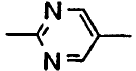 |
| **N** | 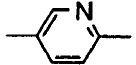 | **Ni** | 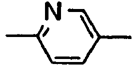 |
| **nf** | 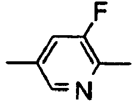 | **nfl** | 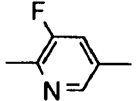 |
| **G** | 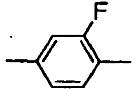 | **GI** | 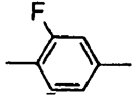 |
| **U** | 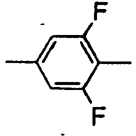 | **UI** | 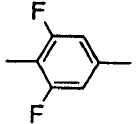 |
| **np** | 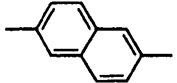 | **dh** | 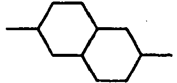 |
| **th** | 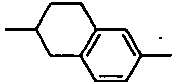 | **thl** | 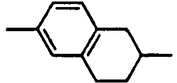 |
| **Y** | 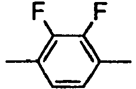 | | |

**Tabelle B: Verknüpfungsgruppen**

| | | | |
|---|---|---|---|
| **E** | -CH₂CH₂- | **Z** | -CO-O- |
| **V** | -CH=CH- | **ZI** | -O-CO- |
| **X** | -CF=CH- | **O** | -CH₂-O- |
| **XI** | -CH=CF- | **OI** | -O-CH₂- |
| **B** | -CF=CF- | **Q** | -CF₂-O- |
| **T** | -C=C- | **QI** | -O-CF₂- |
| **W** | -CF₂CF₂- | **T** | -C≡C- |

**Tabelle C: Endgruppen**

| **Linke Seite** | **Rechte Seite,** | | |
|---|---|---|---|
| | **Verwendung allein** | | |
| **-n-** | CnH₂ₙ₊₁- | **-n** | -CₙH₂ₙ₊₁ |
| **-nO-** | CₙH₂ₙ₊₁-O- | **-nO** | -O-CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ₊₁- | **-Vn** | -CH=CH-CₙH₂ₙ₊₁ |
| **-nVm-** | CₙH₂ₙ₊₁-CH=CH-CₘH₂ₘ- | **-nVm** | -CₙH₂ₙ-CH=CH-CₘH₂ₘ₊₁ |
| **-N-** | N≡C- | **-N** | -C=N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O - | **-OM** | -OCFH₂ |
| **-DO-** | CF₂HO - | **-OD** | -OCF₂H |
| **-TO-** | CF₃O - | **-OT** | -OCF₃ |
| **-OXF-** | CF₂=CH-O- | **-OXF** | -O-CH=CF₂ |
| **-A-** | H-C≡C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |

| | **Verwendung zusammen** | | |
|---|---|---|---|
| **-...A...-** | -C≡C- | **-...A...** | -C≡C- |
| **-...V...-** | CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

worin n und m jeweils ganze Zahlen bedeuten und die drei Punkte "..." Platzhalter für andere Abkürzungen aus dieser Tabelle sind.
In der folgenden Tabelle werden Beispielstrukturen zusammen mit ihren jeweiligen Abkürzungen angegeben. Diese werden gezeigt, um die Bedeutung der Regeln für die Abkürzungen zu demonstrieren. Weiterhin stellen sie Verbindungen dar, die vorzugsweise verwendet werden.

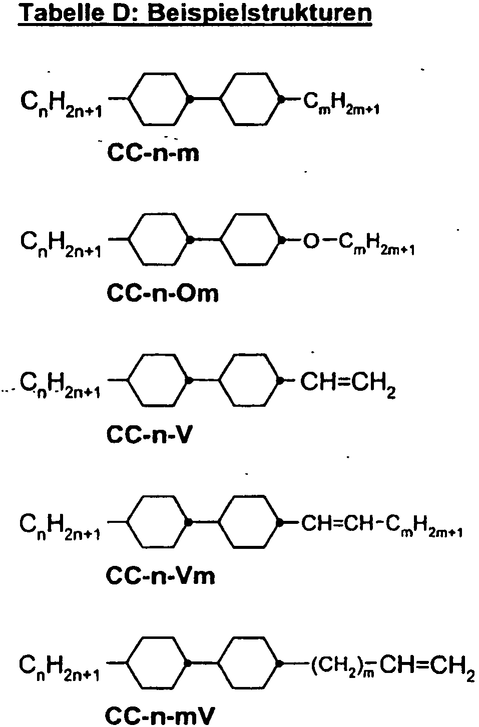

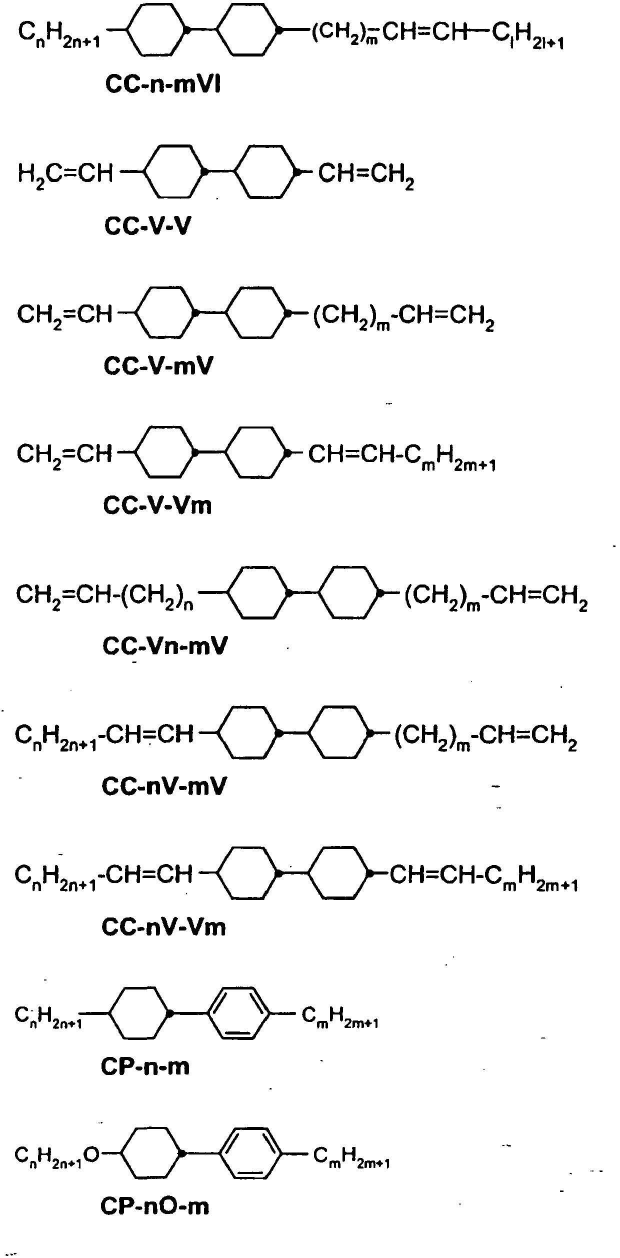

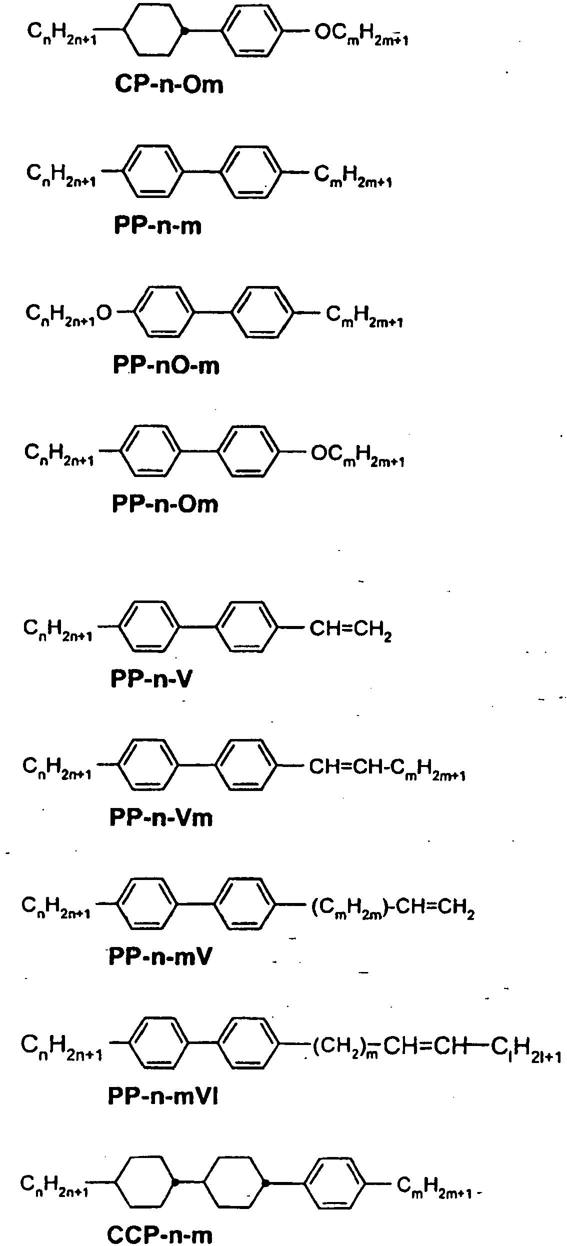

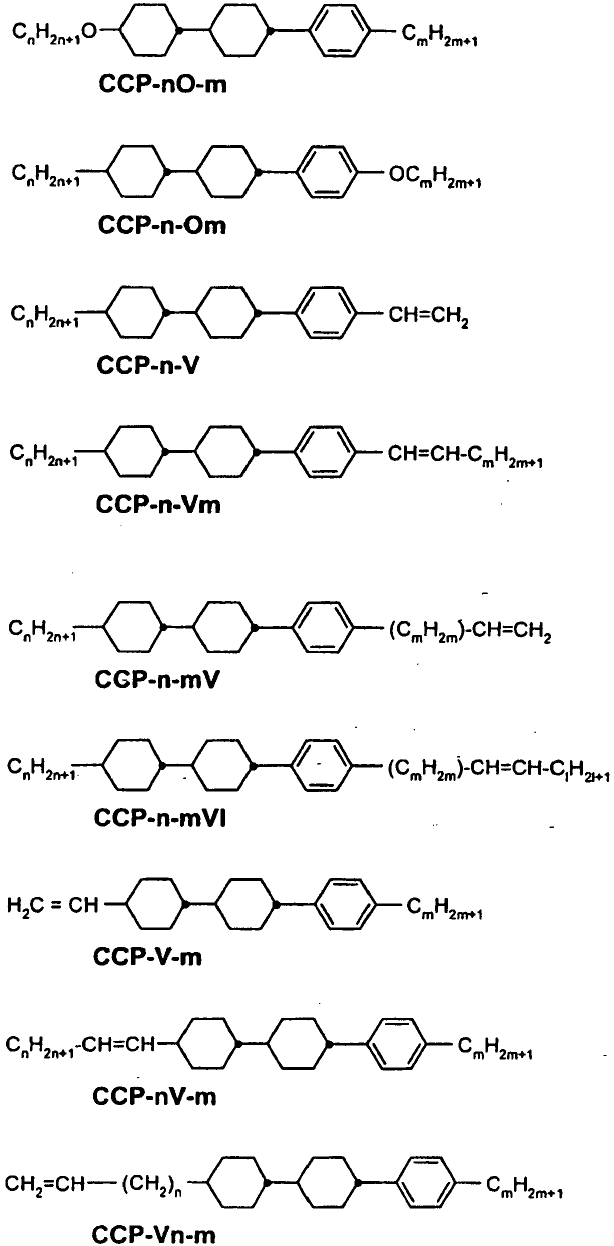

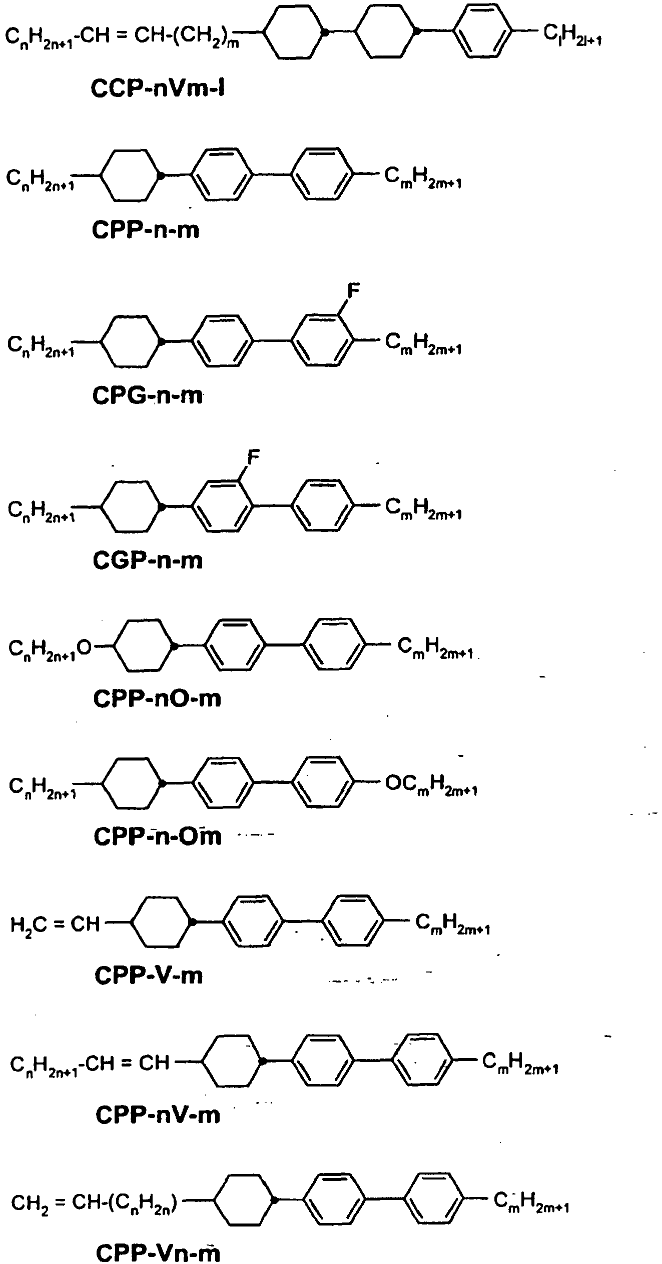

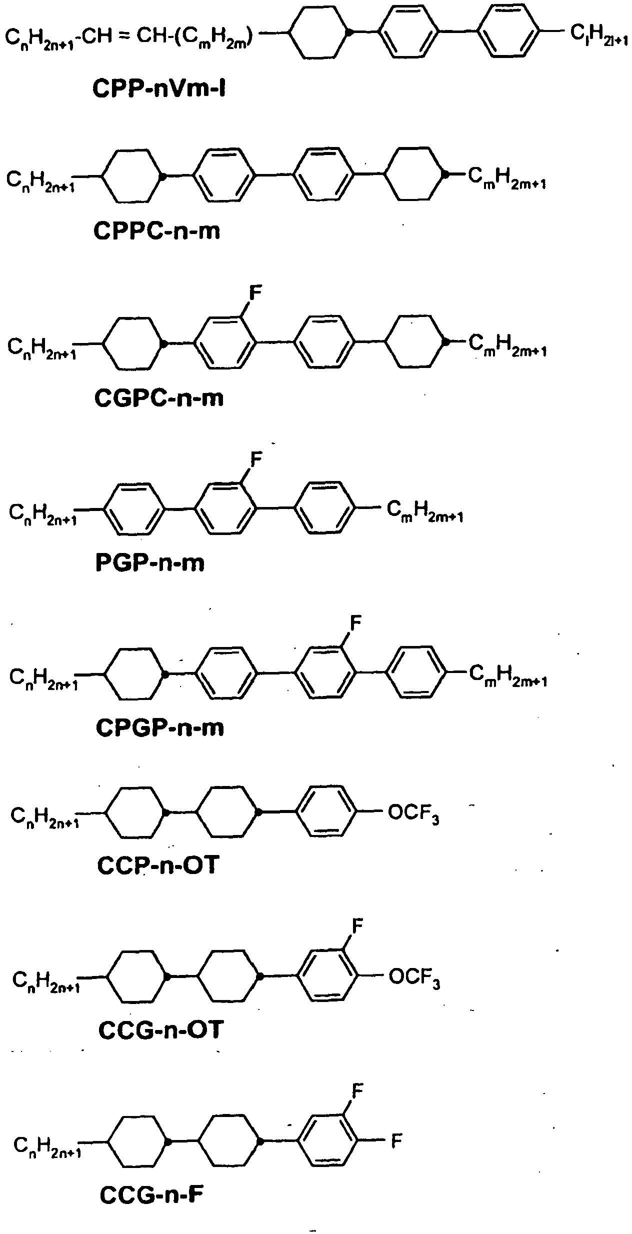

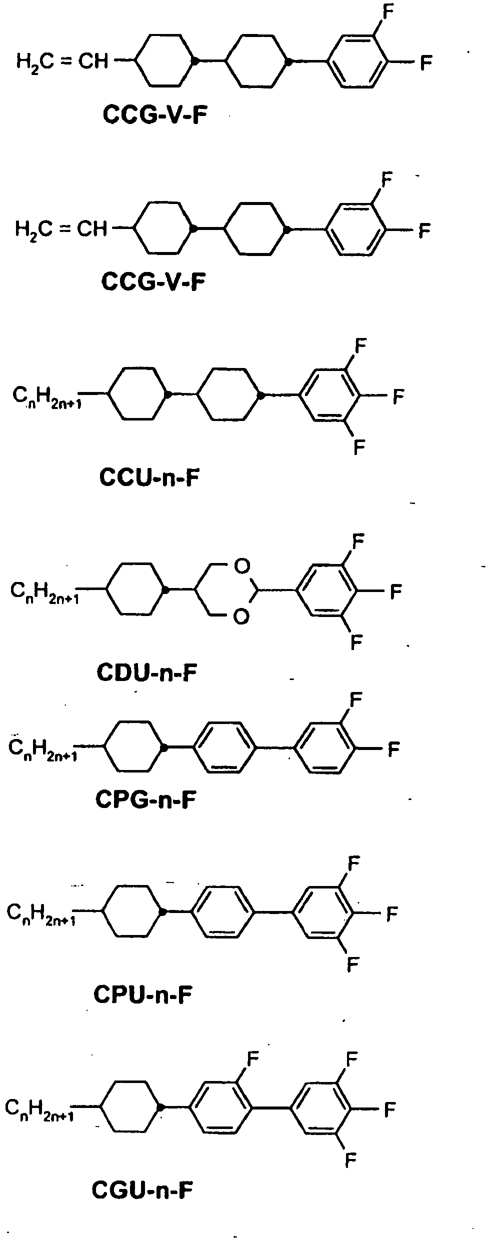

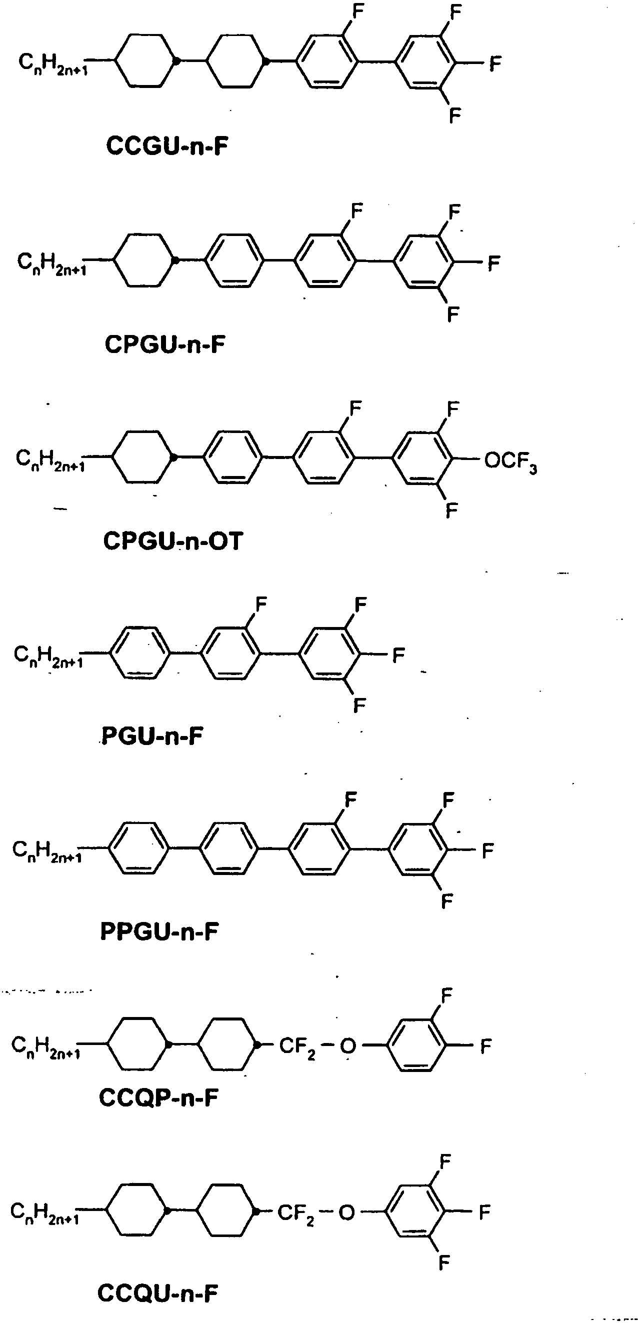

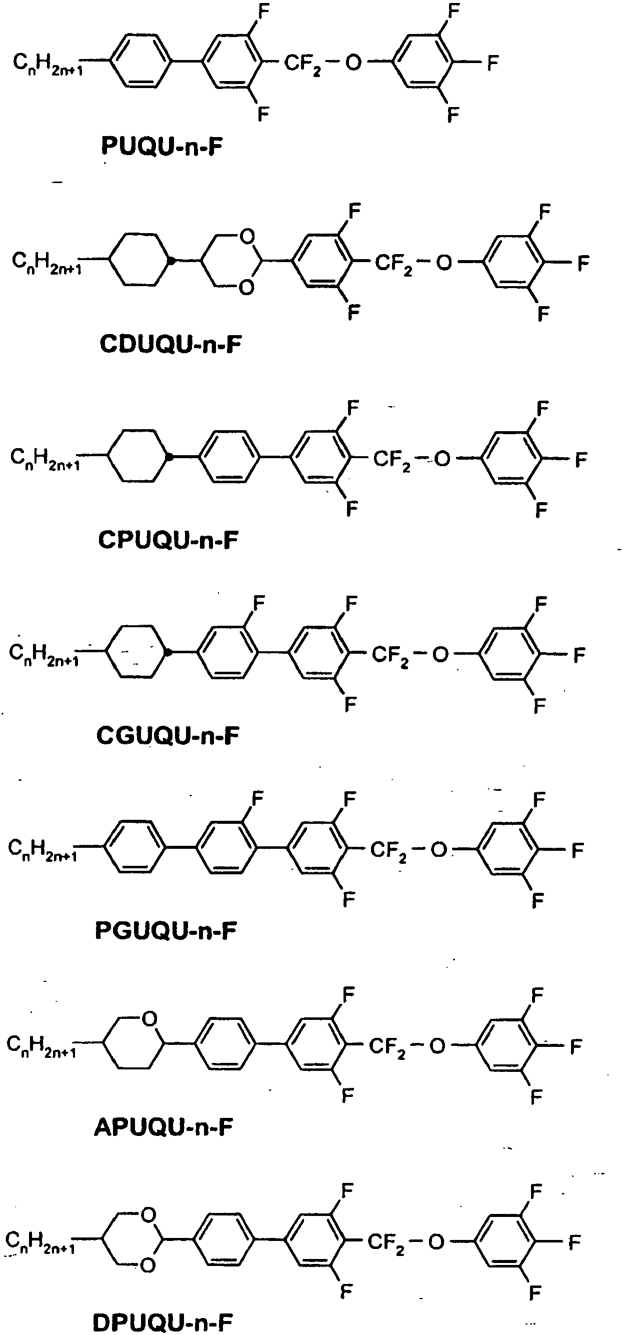

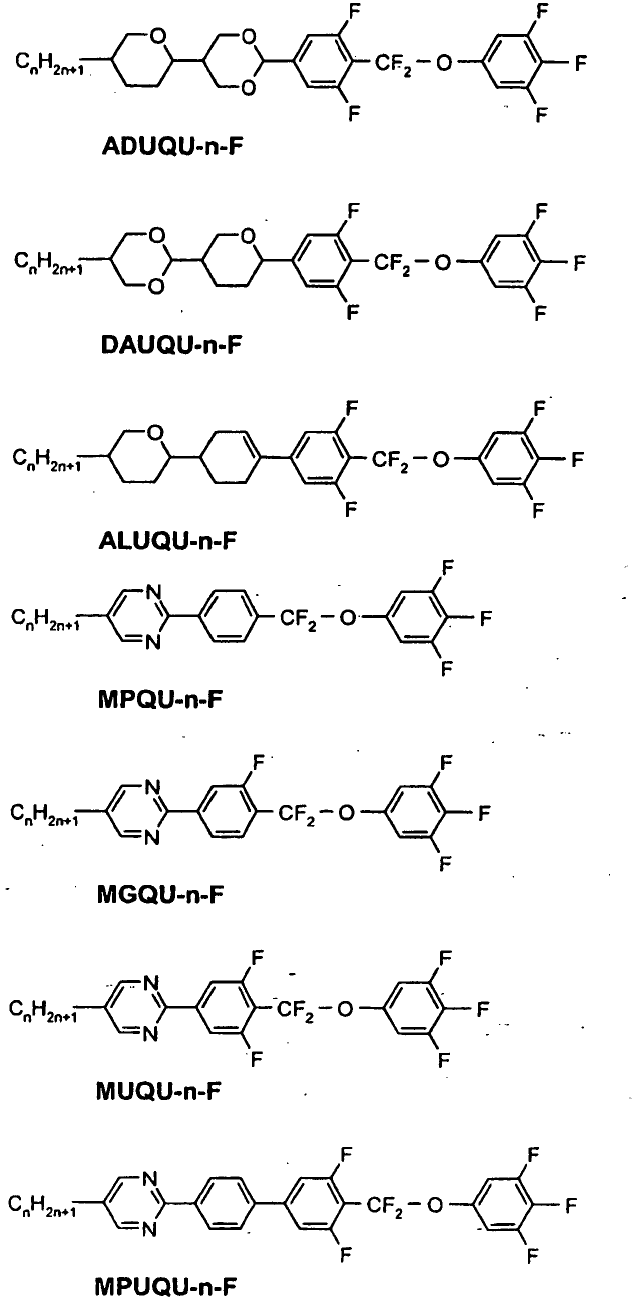

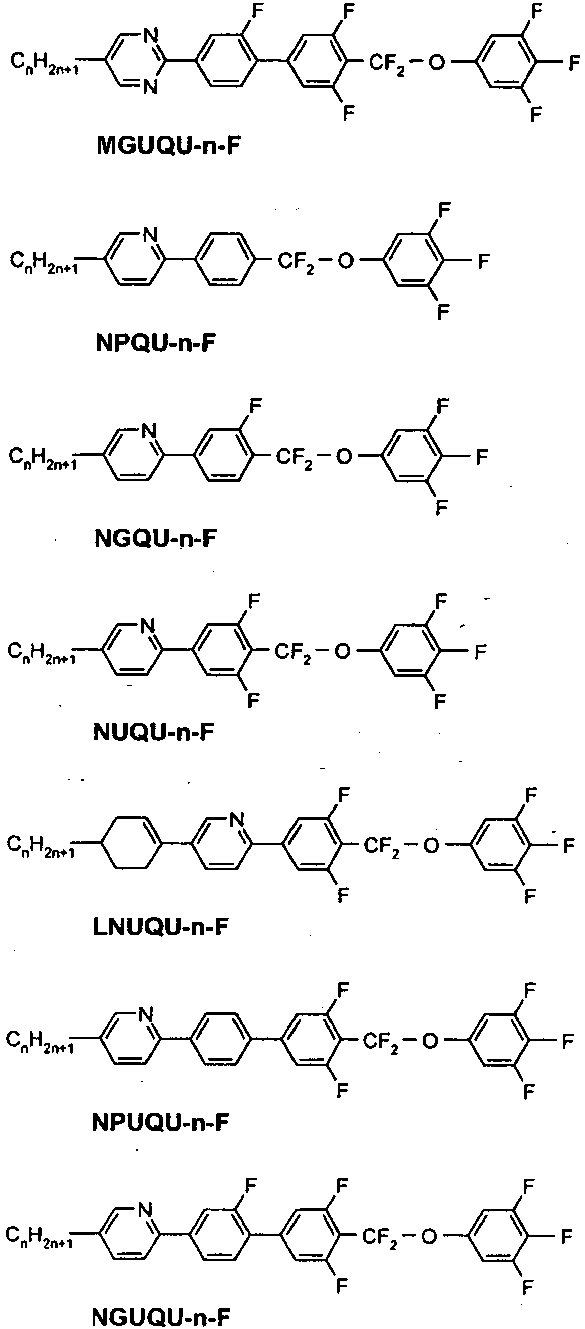

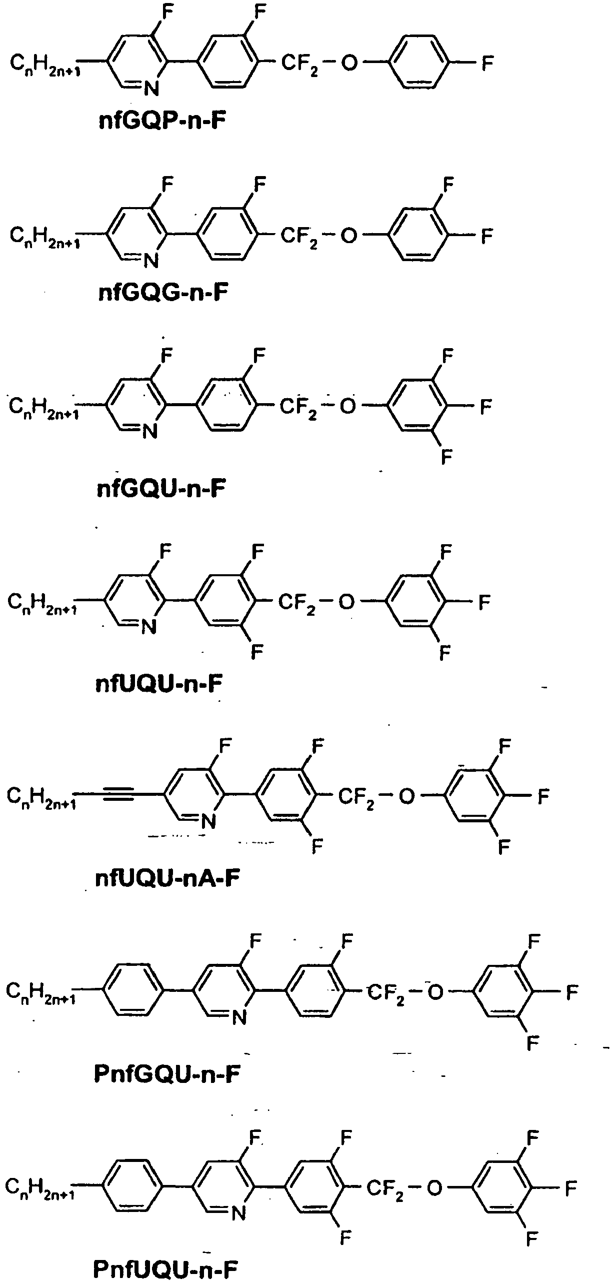

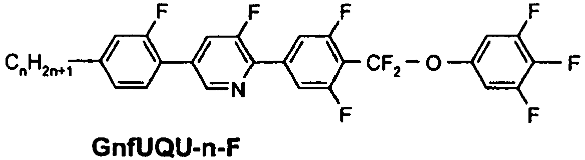

In der folgenden Tabelle, Tabelle E, sind Beispielverbindungen zusammengestellt, die in den mesogenen Medien gemäß der vorliegenden Erfindung als Stabilisator verwendet werden können.

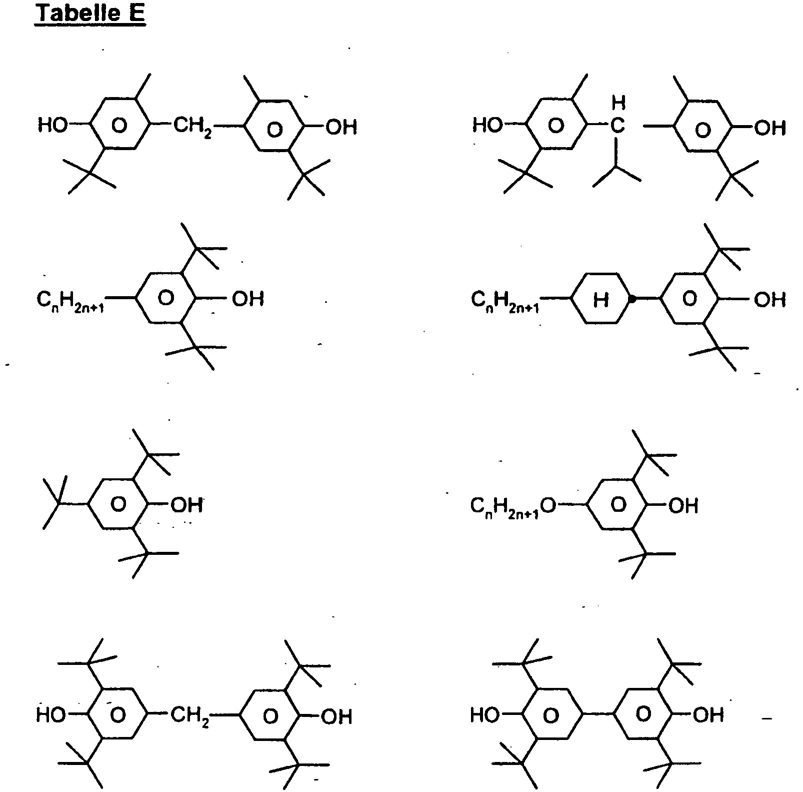

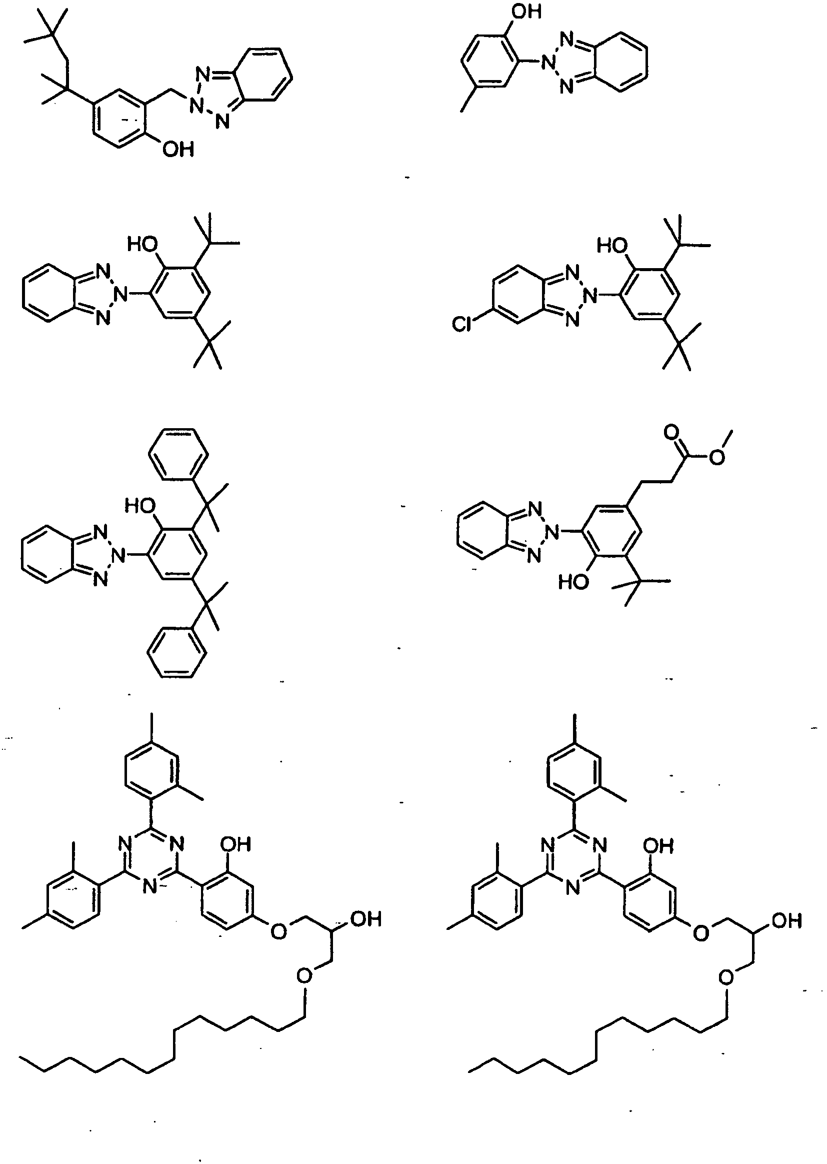

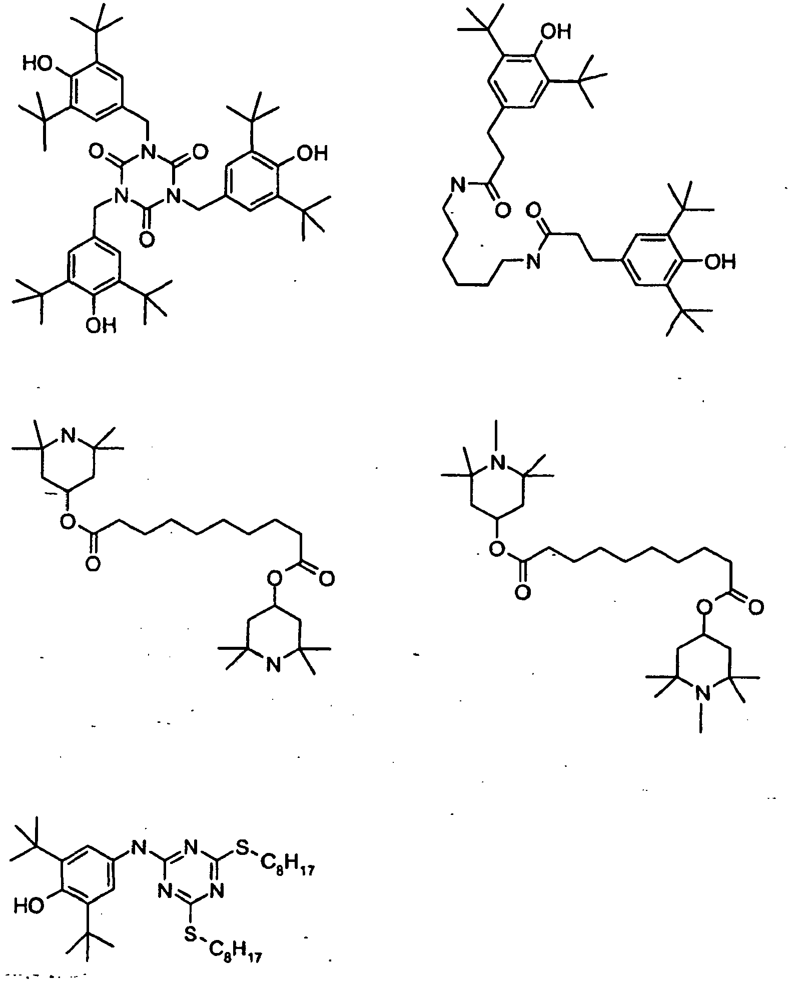

In einer bevorzugten Ausführungsform der vorliegenden Erfindung enthalten die mesogenen Medien eine oder mehrere Verbindungen ausgewählt aus der Gruppe der Verbindungen der Tabelle E.

In der folgenden Tabelle, Tabelle F, sind Beispielverbindungen zusammengestellt, die in den mesogenen Medien gemäß der vorliegenden Erfindung vorzugsweise als chirale Dotierstoffe verwendet werden können.

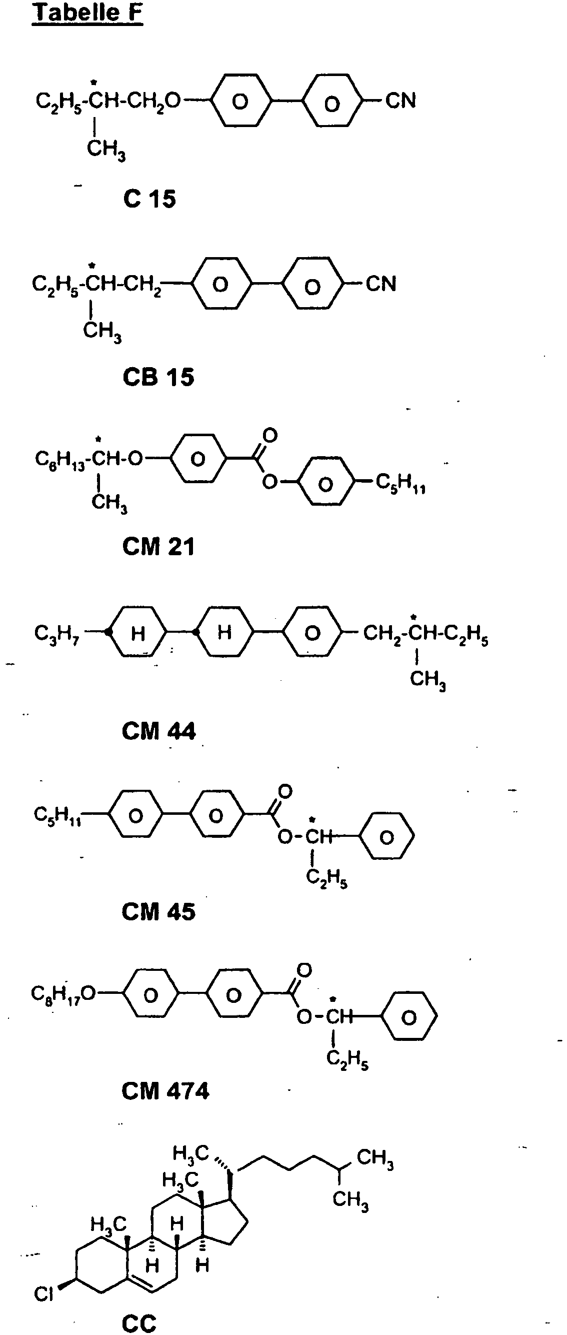

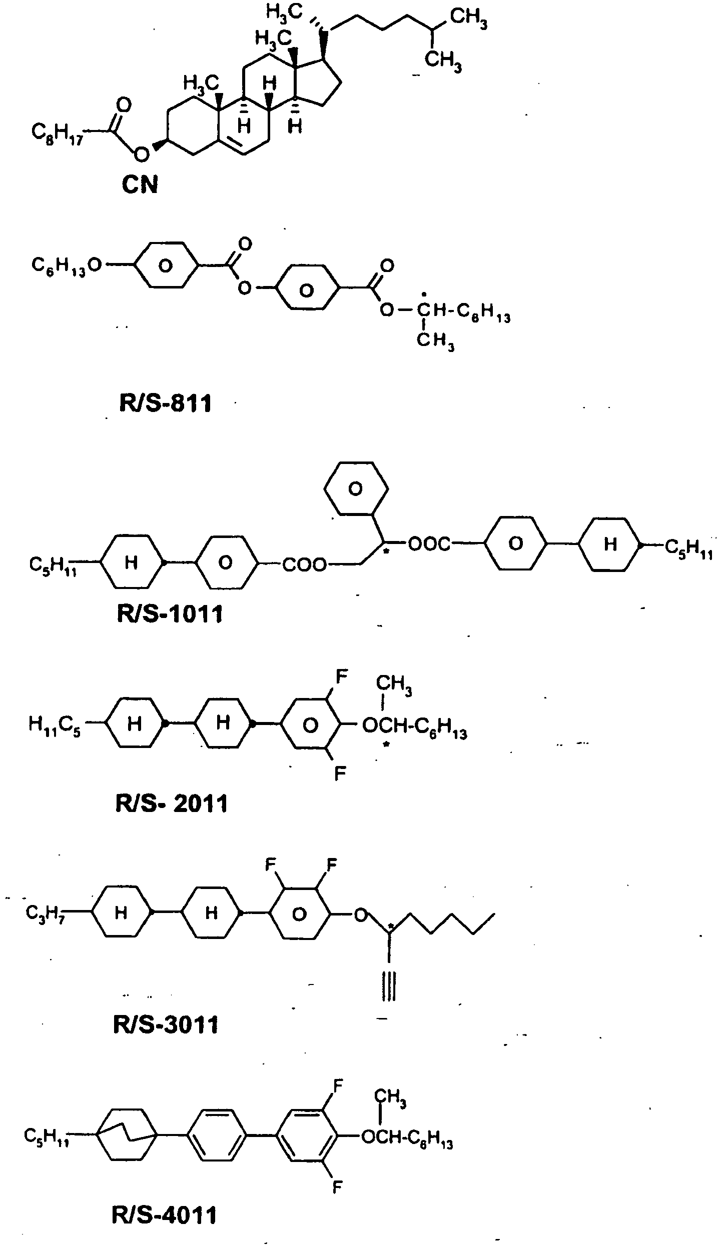

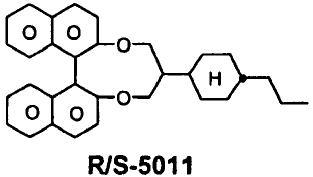

In einer bevorzugten Ausführungsform der vorliegenden Erfindung enthalten die mesogenen Medien eine oder mehrere Verbindungen ausgewählt aus der Gruppe der Verbindungen der Tabelle F.

Vorzugsweise enthalten die mesogenen Medien gemäß der vorliegenden Anmeldung zwei oder mehr, vorzugsweise vier oder mehr, Verbindungen ausgewählt aus der Gruppe bestehend aus den Verbindungen der obigen Tabellen.

Die Flüssigkristallmedien gemäß der vorliegenden Erfindung enthalten vorzugsweise
- sieben oder mehr, vorzugsweise acht oder mehr Verbindungen, vorzugsweise mit unterschiedlichen Formeln, ausgewählt aus der Gruppe - der Verbindungen der Tabelle D.

### Beispiele

Die folgenden Beispiele erläutern die vorliegende Erfindung, ohne sie in irgendeiner Weise zu beschränken.

Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

### Beispiel 1

Es wird eine Flüssigkristallmischung mit der Zusammensetzung und den Eigenschaften wie in der folgenden Tabelle angegeben hergestellt.

| Zusammensetzung | | | Physikalische Eigenschaften |
|---|---|---|---|
| Verbindung | | | |
| Nr. | Abkürzung | Konz. /% | |
| 1 | MUQU-3-F | 15,0 | |
| 2 | CCGU-3-F | 5,5 | |
| 3 | CC-3-V | 41,0 | |
| 4 | CC-3-V1 | 10,5 | |
| 5 | PP-1-2V1 | 3,0 | |
| 6 | CCP-V2-1 | 4,5 | |
| 7 | BCH-32 | 8,0 | |
| 8 | PGP-2-3 | 6,5 | |
| 9 | PGP-2-4 | 6.0 | |
| Σ | | 100,0 | |

Diese Mischung eignet sich sehr gut für im IPS- bzw. FFS-Modus betriebene Anzeigen.

### Beispiel 2

Es wird eine Flüssigkristallmischung mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 74,5 | °C |
| Nr. | Abkürzung | Konz. /% | | | |
| 1 | MUQU-3-F | 10,0 | nₑ (20 °C, 589,3 nm) | = 1,5899 | |
| 2 | CDU-2-F | 2,0 | Δn (20 °C, 589,3 nm) | = 0,1028 | |
| 3 | PGU-2-F | 3,0 | | | |
| 4 | APUQU-2-F | 7,5 | ε_{\|\|} (20 °C, 1 kHz) | = 10,6 | |
| 5 | APUQU-3-F | 2,5 | Δε (20 °C, 1 kHz) | = 7,4 | |
| 6 | CC-3-V | 48,5 | | | |
| 7 | CCP-V-1 | 15,0 | γ₁ (20 °C) | = 52 | mPa · s |
| 8 | PGP-2-3 | 5,0 | | | |
| 9 | PGP-2-4 | 5,0 | k₁ (20 °C) | = 12,2 | pN |
| 10 | CPPC-3-3 | 1,5 | k₃/k₁ (20 °C) | = 1,05 | |
| Σ | | 100,0 | | | |
| | | | V₀ (20 °C) | = 1,37 | V |

Diese Mischung eignet sich sehr gut für im IPS- bzw. FFS-Modus betriebene Anzeigen.

### Beispiel 3

Es wird eine Flüssigkristallmischung mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 74,0 | °C |
| Nr. | Abkürzung | Konz. /% | | | |
| 1 | MUQU-2-F | 5,0 | nₑ (20 °C, 589,3 nm) | = 1,5894 | |
| 2 | MUQU-3-F | 5,0 | Δn (20 °C, 589,3 nm) | = 0,1023 | |
| 3 | CDU-2-F | 2,0 | | | |
| 4 | PGU-2-F | 3,0 | ε_{\|\|} (20 °C, 1 kHz) | = 10,7 | |
| 5 | APUQU-2-F | 7,5 | Δε (20 °C, 1 kHz) | = 7,4 | |
| 6 | APUQU-3-F | 2,5 | | | |
| 7 | CC-3-V | 48,5 | γ₁ (20 °C) | = 52 | mPa · s |
| 8 | CCP-V-1 | 15,0 | | | |
| 9 | PGP-2-3 | 5,0 | k₁ (20 °C) | = 12,2 | pN |
| 10 | PGP-2-4 | 5,0 | k₃/k₁ (20 °C) | = 1,04 | |
| 11 | CPPC-3-3 | 1,5 | | | |
| Σ | | 100,0 | V₀ (20 °C) | = 1,35 | V |

Diese Mischung eignet sich sehr gut für im IPS- bzw. FFS-Modus betriebene Anzeigen.

### Beispiel 4

Es wird eine Flüssigkristallmischung mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I)) | = 74,5 | °C |
| Nr. | Abkürzung | Konz. /% | | | |
| 1 | MUQU-3-F | 9,0 | nₑ (20 °C, 589,3 nm) | = 1,5867 | |
| 2 | CDU-2-F | 6,0 | Δn (20 °C, 589,3 nm) | = 0,1021 | |
| 3 | APUQU-2-F | 8,0 | | | |
| 4 | APUQU-3-F | 7,0 | ε_{\|\|} (20 °C, 1 kHz) | = 12,1 | |
| 5 | CC-3-V | 49,5 | Δε (20 °C, 1 kHz) | = 8,6 | |
| 6- | CCP-V-1 | 6,0 | | | |
| 7 | PGP-2-3 | 6,0 | γ₁ (20 °C) | = 58 | mPa · s |
| 8 | PGP-2-4 | 5,0 | | | |
| 9 | CPPC-3-3 | 3.5 | k₁ (20 °C) | = 12,2 | pN |
| Σ | | 100.0 | k₃/k₁ (20 °C) | = 1,02 | |
| | | | V₀ (20 °C) | = 1,25 | V |

Diese Mischung eignet sich sehr gut für im IPS- bzw. FFS-Modus betriebene Anzeigen.

### Beispiel 5

Es wird eine Flüssigkristallmischung mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 74,5 | °C |
| Nr. | Abkürzung | Konz. /% | | | |
| 1 | MUQU-2-F | 4,0 | nₑ (20 °C, 589,3 nm) | = 1,5863 | |
| 2 | MUQU-3-F | 5,0 | Δn (20 °C, 589,3 nm) | = 0,1008 | |
| 3 | CDU-2-F | 6,0 | | | |
| 4 | APUQU-2-F | 8,0 | ε_{\|\|} (20 °C, 1 kHz) | = 12,2 | |
| 5 | APUQU-3-F | 7,0 | Δε (20 °C, 1 kHz) | = 8,7 | |
| 6 | CC-3-V | 49,5 | | | |
| 7 | CCP-V-1 | 6,0 | γ₁ (20 °C) | = 58 | mPa · s |
| 8 | PGP-2-3 | 6,0 | | | |
| 9 | PGP-2-4 | 5,0 | k₁ (20 °C) | = 12,1 | pN |
| 10 | CPP-C-3-3 | 3.5 | k₃/k₁ (20°C) | = 1,03 | |
| Σ | | 100,0 | | | |
| | | | V₀ (20 °C) | = 1,25 | V |

Diese Mischung eignet sich sehr gut für im IPS- bzw. FFS-Modus betriebene Anzeigen.

### Vergleichsbeispiel 1

Es wird eine Flüssigkristallmischung mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 79,0 | °C |
| Nr. | Abkürzung | Konz. /% | | | |
| 1 | MGUQU-5-F | 7,0 | nₑ (20 °C, 589,3 nm) | = 1,5959 | |
| 2 | CCP-2-OT | 2,00 | Δn (20 °C, 589,3 nm) | = 0,1103 | |
| 3 | CCP-3-OT | 8,0 | | | |
| 4 | PGU-2-F | 9,0 | ε_{\|\|} (20 °C, 1 kHz) | = 14,1 | |
| 5 | PGU-3-F | 2,0 | Δε (20 °C, 1 kHz) | = 10,6 | |
| 6 | PUQU-3-F | 18,0 | | | |
| 7 | CC-3-V | 22,0 | γ₁ (20 °C) | = 73 | mPa · s |
| 8 | CC-3-V1 | 12,0 | | | |
| 9 | CCP-V-1 | 11,0 | k₁ (20 °C) | = 12,8 | pN |
| 10 | CCP-V2-1 | 9,0 | k₃/k₁ (20 °C) | = 1,08 | |
| Σ | | 100,0 | V₀ (20 °C) | = 1,17 | V |

Diese Mischung eignet sich sehr gut für im IPS- bzw. FFS-Modus betriebene Anzeigen.

### Vergleichsbeispiel 2

Es wird eine Flüssigkristallmischung mit der Zusammensetzung und den Eigenschaften wie in der folgenden Tabelle angegeben hergestellt.

| Zusammensetzung | | | Physikalische Eigenschaften |
|---|---|---|---|
| Verbindung | | | |
| Nr. | Abkürzung | Konz. /% | |
| 1 | MPUQU-5-F | 7,0 | |
| 2 | CCP-2-OT | 2,00 | |
| 3 | CCP-3-OT | 8,0 | |
| 4 | PGU-2-F | 9,0 | |
| 5 | PGU-3-F | 2,0 | |
| 6 | PUQU-3-F | 18,0 | |
| 7 | CC-3-V | 22,0 | |
| 8 | CC-3-V1 | 12,0 | |
| 9 | CCP-V-1 | 11,0 | |
| 10 | CCP-V2-1 | 9.0 | |
| Σ | | 100.0 | |

Diese Mischung eignet sich sehr gut für im IPS- bzw. FFS-Modus betriebene Anzeigen.

### Vergleichsbeispiel 3

Es wird eine Flüssigkristallmischung mit der Zusammensetzung und den Eigenschaften wie in der folgenden Tabelle angegeben hergestellt.

| Zusammensetzung | | | Physikalische Eigenschaften |
|---|---|---|---|
| Verbindung | | | |
| Nr. | Abkürzung | Konz. /% | |
| 1 | NPQU-3-F | 15,0 | |
| 2 | CCGU-3-F | 5,5 | |
| 3 | CC-3-V | 41,0 | |
| 4 | CC-3-V1 | 10,5 | |
| 5 | PP-1-2V1 | 3,0 | |
| 6 | CCP-V2-1 | 4,5 | |
| 7 | BCH-32 | 8,0 | |
| 8 | PGP-2-3 | 6,5 | |
| 9 | PGP-2-4 | 6.0 | |
| Σ | | 100,0 | |

Diese Mischung eignet sich sehr gut für im IPS- bzw. FFS-Modus betriebene Anzeigen.

### Vergleichsbeispiel 4

Es wird eine Flüssigkristallmischung mit der Zusammensetzung und den Eigenschaften wie in der folgenden Tabelle angegeben hergestellt.

| Zusammensetzung | | | Physikalische Eigenschaften |
|---|---|---|---|
| Verbindung | | | |
| Nr. | Abkürzung | Konz. /% | |
| 1 | NPQU-2-F | 4,0 | |
| 2 | NPQU-3-F | 6,0 | |
| 3 | CDU-2-F | 2,0 | |
| 4 | PGU-2-F | 3,0 | |
| 5 | APUQU-2-F | 7,5 | |
| 6 | APUQU-3-F | 2,5 | |
| 7 | CC-3-V | 48,5 | |
| 8 | CCP-V-1 | 15,0 | |
| 9 | PGP-2-3 | 5,0 | |
| 10 | PGP-2-4 | 5,0 | |
| 11 | CPPC-3-3 | 1.5 | |
| Σ | | 100,0 | |

Diese Mischung eignet sich sehr gut für im IPS- bzw. FFS-Modus betriebene Anzeigen.

### Vergleichsbeispiel 5

Es wird eine Flüssigkristallmischung mit der Zusammensetzung und den Eigenschaften wie in der folgenden Tabelle angegeben hergestellt.

| Zusammensetzung | | | Physikalische Eigenschaften |
|---|---|---|---|
| Verbindung | | | |
| Nr. | Abkürzung | Konz. /% | |
| 1 | NUQU-1-F | 5,0 | |
| 2 | NUQU-2-F | 5,0 | |
| 3 | NUQU-3-F | 5,0 | |
| 4 | CCGU-3-F | 5,5 | |
| 5 | CC-3-V | 41,0 | |
| 6 | CC-3-V1 | 10,5 | |
| 7 | PP-1-2V1 | 3,0 | |
| 8 | CCP-V2-1 | 4,5 | |
| 9 | BCH-32 | 8,0 | |
| 10 | PGP-2-3 | 6,5 | |
| 11 | PGP-2-4 | 6.0 | |
| Σ | | 100,0 | |

Diese Mischung eignet sich sehr gut für im IPS- bzw. FFS-Modus betriebene Anzeigen.

### Vergleichsbeispiel 6

Es wird eine Flüssigkristallmischung mit der Zusammensetzung und den Eigenschaften wie in der folgenden Tabelle angegeben hergestellt.

| Zusammensetzung | | | Physikalische Eigenschaften |
|---|---|---|---|
| Verbindung | | | |
| Nr. | Abkürzung | Konz. /% | |
| 1 | NUQU-2-F | 3,0 | |
| 2 | NUQU-3-F | 7,0 | |
| 3 | CDU-2-F | 2,0 | |
| 4 | PGU-2-F | 3,0 | |
| 5 | APUQU-2-F | 7,5 | |
| 6 | APUQU-3-F | 2,5 | |
| 7 | CC-3-V | 48,5 | |
| 8 | CCP-V-1 | 15,0 | |
| 9 | PGP-2-3 | 5,0 | |
| 10 | PGP-2-4 | 5,0 | |
| 11 | CPPC-3-3 | 1.5 | |
| Σ | | 100,0 | |

Diese Mischung eignet sich sehr gut für im IPS- bzw. FFS-Modus betriebene Anzeigen.

### Vergleichsbeispiel 7

Es wird eine Flüssigkristallmischung mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 74,5 | °C |
| Nr. | Abkürzung | Konz. /% | | | |
| 1 | NUQU-3 | 16,5 | nₑ (20 °C, 589,3 nm) | = 1,5861 | |
| 2 | APUQU-2-F | 5,5 | Δn (20 °C, 589,3 nm) | = 0,1013 | |
| 3 | APUQU-3-F | 3,0 | | | |
| 4 | CC-3-V | 43,0 | ε_{\|\|} (20 °C, 1 kHz) | = 10,7 | |
| 5 | CC-3-V1 | 5,5 | Δε (20 °C, 1 kHz) | = 7,3 | |
| 6 | CCP-V-1 | 15,5 | | | |
| 7 | PGP-2-3 | 5,0 | γ₁ (20 °C) | = 54 | mPa · s |
| 8 | PGP-2-4 | 4,0 | | | |
| 9 | CPPC-3-3 | 2,0 | k₁ (20 °C) | = 12,5 | pN |
| Σ | | 100,0 | k₃/k₁ (20 °C) | = 1,06 | |
| | | | V₀ (20 °C) | = 1,39 | V |

Diese Mischung eignet sich sehr gut für im IPS- bzw. FFS-Modus betriebene Anzeigen.

### Vergleichsbeispiel 8

Es wird eine Flüssigkristallmischung mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 75,0 | °C |
| Nr. | Abkürzung | Konz. /% | | | |
| 1 | LNUQU-2-F | 4,5 | nₑ (20 °C, 589,3 nm) | = 1,5861 | |
| 2 | LNUQU-3-F | 4,0 | Δn (20 °C, 589,3 nm) | = 0,1008 | |
| 3 | PGU-2-F | 7,5 | | | |
| 4 | CCQU-3-F | 4,0 | ε_{\|\|} (20 °C, 1 kHz) | = 11,6 | |
| 5 | PUQU-3-F | 16,0 | Δε (20 °C, 1 kHz) | = 8,3 | |
| 6 | CC-3-V | 33,5 | | | |
| 7 | CC-3-V1 | 9,5 | γ₁ (20 °C) | = 58 | mPa · s |
| 8 | CCP-V-1 | 14,0 | | | |
| 9 | CCP-V2-1 | 7.0 | k₁ (20 °C) | = 12,3 | pN |
| Σ | | 100,0 | k₃/k₁ (20 °C) | = 1,13 | |
| | | | V₀ (20 °C) | = 1,28 | V |

Diese Mischung eignet sich sehr gut für im IPS- bzw. FFS-Modus betriebene Anzeigen.

### Vergleichsbeispiel 9

Es wird eine Flüssigkristallmischung mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 75,5 | °C |
| Nr. | Abkürzung | Konz. /% | | | |
| 1 | nfUQU-3-F | 4,5 | nₑ (20 °C, 589,3 nm) | = 1,5839 | |
| 2 | APUQU-2-F | 8,0 | Δn (20 °C, 589,3 nm) | = 0,1006 | |
| 3 | APUQU-3-F | 8,0 | | | |
| 4 | PGUQU-3-F | 8,0 | ε_{\|\|} (20 °C, 1 kHz) | = 13,3 | |
| 5 | CC-3-V | 49,0 | Δε (20 °C, 1 kHz) | = 9,8 | |
| 6 | CCP-V-1 | 15,0 | | | |
| 7 | PGP-2-3 | 4,0 | γ₁ (20 °C) | = 59 | mPa · s |
| Σ | | 100,0 | | | |
| | | | k₁ (20 °C) | = 11,8 | pN |
| | | | k₃/k₁ (20 °C) | = 1,16 | |
| | | | | | |
| | | | V₀ (20 °C) | = 1,16 | V |

Diese Mischung eignet sich sehr gut für im IPS- bzw. FFS-Modus betriebene Anzeigen.

### Vergleichsbeispiel 10

Es wird eine Flüssigkristallmischung mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 74,5 | °C |
| Nr. | Abkürzung | Konz. /% | | | |
| 1 | nfUQU-3-F | 6,0 | nₑ (20 °C, 589,3 nm) | = 1,5974 | |
| 2 | PGU-3-F | 2,0 | Δn (20 °C, 589,3 nm) | = 0,1112 | |
| 3 | APUQU-2-F | 8,0 | | | |
| 4 | APUQU-3-F | 7,0 | ε_{\|\|} (20 °C, 1 kHz) | = 13,0 | |
| 5 | PGUQU-3-F | 9,0 | Δε (20 °C, 1 kHz) | = 9,6 | |
| 6 | CC-3-V | 48,0 | | | |
| 7 | CCP-V-1 | 10,0 | γ₁ (20 °C) | = 60 | mPa · s |
| 8 | PGP-2-3 | 5,0 | | | |
| 9 | PGP-2-4 | 5.0 | k₁ (20 °C) | = 12,0 | pN |
| Σ | | 100.0 | k₃/k₁ (20 °C) | = 1,07 | |
| | | | V₀ (20 °C) | = 1,18 | V |

Diese Mischung eignet sich sehr gut für im IPS- bzw. FFS-Modus betriebene Anzeigen.

### Vergleichsbeispiel 11

Es wird eine Flüssigkristallmischung mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 74,0 | °C |
| Nr. | Abkürzung | Konz./% | | | |
| 1 | PnfGQU-3-F | 8,0 | nₑ (20 °C, 589,3 nm) | = 1,5947 | |
| 2 | PUQU-3-F | 8,0 | Δn (20°C, 589,3 nm) | = 0,1100 | |
| 3 | APUQU-2-F | 5,0 | | | |
| 4 | APUQU-3-F | 5,0 | ε_{\|\|} (20 °C, 1 kHz) | = 12,6 | |
| 5 | PGUQU-3-F | 7,0 | Δε (20 °C, 1 kHz) | = 9,2 | |
| 6 | CC-3-V | 50,0 | | | |
| 7 | CCP-V-1 | 10,0 | γ₁ (20 °C) | = 56 | mPa · s |
| 8 | PGP-2-3 | 4,0 | | | |
| 9 | PGP-2-4 | 3.0 | k₁ (20 °C) | = 12,1 | pN |
| Σ | | 100,0 | k₃/k₁ (20 °C) | = 1,12 | |
| | | | | | |
| | | | V₀ (20 °C) | = 1,19 | V |

Diese Mischung eignet sich sehr gut für im IPS- bzw. FFS-Modus betriebene Anzeigen.

### Vergleichsbeispiel 12

Es wird eine Flüssigkristallmischung mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 74,0 | °C |
| Nr. | Abkürzung | Konz. /% | | | |
| 1 | PnfUQU-3-F | 8,0 | nₑ (20 °C, 589,3 nm) | = 1,5951 | |
| 2 | PUQU-3-F | 6,0 | Δn (20 °C, 589,3 nm) | = 0,1095 | |
| 3 | APUQU-2-F | 4,0 | | | |
| 4 | APUQU-3-F | 5,0 | ε_{\|\|} (20 °C, 1 kHz) | = 12,4 | |
| 5 | PGUQU-3-F | 8,0 | Δε (20 °C, 1 kHz) | = 9,1 | |
| 6 | CC-3-V | 51,0 | | | |
| 7 | CCP-V-1 | 10,0 | γ₁ (20 °C) | = 55 | mPa · s |
| 8 | PGP-2-3 | 4,0 | | | |
| 9 | PGP-2-4 | 4.0 | k₁ (20 °C) | = 12,0 | pN |
| Σ | | 100,0 | k₃/k₁ (20 °C) | = 1,09 | |
| | | | | | |
| | | | V₀ (20 °C) | = 1,20 | V |

Diese Mischung eignet sich sehr gut für im IPS- bzw. FFS-Modus betriebene Anzeigen.

### Vergleichsbeispiel 13

Es wird eine Flüssigkristallmischung mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 73,5 | °C |
| Nr. | Abkürzung | onz. /% | | | |
| 1 | GnfUQU-3-F | 8,0 | nₑ (20 °C, 589,3 nm) | = 1,5955 | |
| 2 | PUQU-3-F | 5,0 | Δn (20 °C, 589,3 nm) | = 0,1098 | |
| 3 | APUQU-2-F | 5,0 | | | |
| 4 | APUQU-3-F | 4,0 | ε_{\|\|} (20 °C, 1 kHz) | = 12,3 | |
| 5 | PGUQU-3-F | 8,0 | Δε (20 °C, 1 kHz) | = 9,0 | |
| 6 | CC-3-V | 51,0 | | | |
| 7 | CCP-V-1 | 10,0 | γ₁ (20 °C) | = 55 | mPa · s |
| 8 | PGP-2-3 | 4,0 | | | |
| 9 | PGP-2-4 | 5,0 | k₁ (20 °C) | = 11,9 | pN |
| Σ | | 100,0 | k₃/k₁ (20 °C) | = 1,11 | |
| | | | | | |
| | | | V₀ (20 °C) | = 1,20 | V |

Diese Mischung eignet sich sehr gut für im IPS- bzw. FFS-Modus betriebene Anzeigen.

## Patentansprüche

1. Flüssigkristallmedium, **dadurch gekennzeichnet, dass** es
eine dielektrisch positive Komponente, Komponente A, enthaltend eine oder mehrere dielektrisch positive Verbindungen der Formel l'A-1d 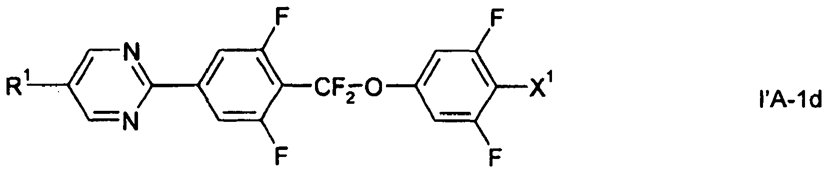 worin
R¹ Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeutet und
X¹ -CN, Halogen, halogeniertes Alkyl oder halogeniertes Alkoxy mit 1 bis 3 C-Atomen oder halogeniertes Alkenyl oder halogeniertes Alkenyloxy mit 2 oder 3 C-Atomen bedeutet,
enthält.

2. Flüssigkristallmedium nach Anspruch 1, **dadurch gekennzeichnet, dass** es eine oder mehrere positive Verbindungen der Formel l'A-1d, enthält, worin X¹ F, CF₃ oder OCF₃ bedeutet.

3. Flüssigkristallmedium nach Anspruch 1, **dadurch gekennzeichnet, dass** es eine oder mehrere positive Verbindungen der Formel l'A-1d, enthält, worin X¹ F bedeutet.

4. Flüssigkristallmedium nach einem oder mehreren der Ansprüche 1 bis 3, **dadurch gekennzeichnet, dass** es
eine zweite dielektrisch positive Komponente, Komponente B, enthaltend eine oder mehrere dielektrisch positive Verbindungen, vorzugsweise ausgewählt aus der Gruppe der Verbindungen der Formeln II und III 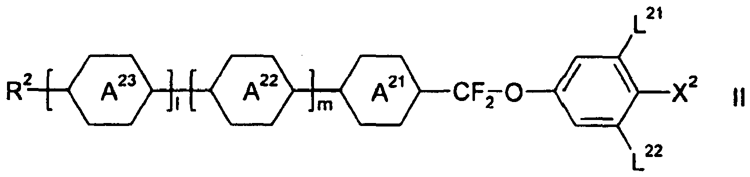 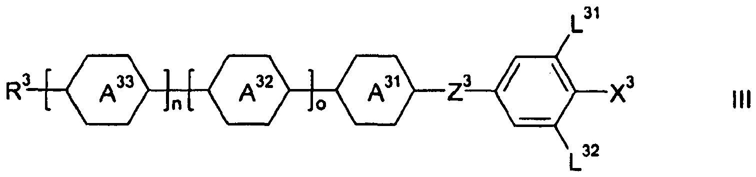 worin
R² und R³ unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten, 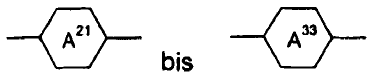 unabhängig voneinander 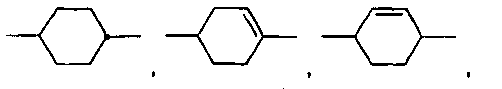 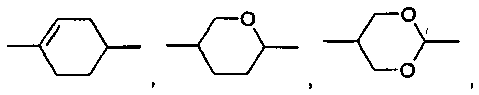 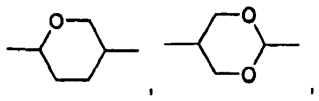 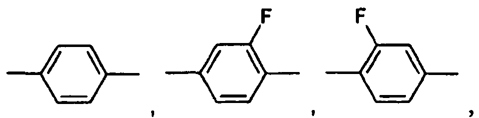 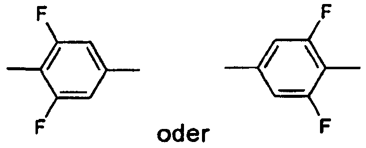 bedeuten
L²¹, L²², L³¹ und L³² unabhängig voneinander H oder F bedeuten,
X² und X³ unabhängig voneinander Halogen, halogeniertes Alkyl oder Alkoxy mit 1 bis 3 C-Atomen oder halogeniertes Alkenyl oder Alkenyloxy mit 2 oder 3 C-Atomen bedeuten,
Z³ -CH₂CH₂-, -CF₂CF₂-, -COO-, *trans-* -CH=CH-, *trans-* -CF=CF-, -CH₂O- oder eine Einfachbindung bedeutet und
l, m, n und o unabhängig voneinander 0 oder 1 bedeuten, enthält.

5. Flüssigkristallmedium nach einem oder mehreren der Ansprüche 1 bis 4, **dadurch gekennzeichnet, dass** es
eine dielektrisch neutrale Komponente, Komponente C, enthaltend eine oder mehrere dielektrisch neutrale Verbindungen der Formel IV 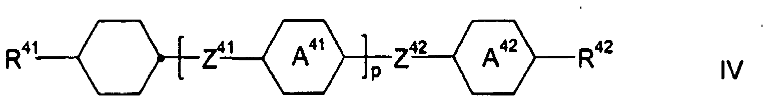 worin
R⁴¹ und R⁴² unabhängig voneinander die in Anspruch 4 unter Formel II für R² angegebene Bedeutung besitzen, 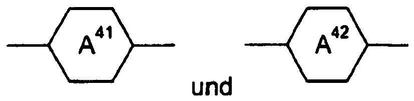 unabhängig voneinander und bei zweifachem Auftreten von 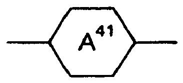 auch diese unabhängig voneinander 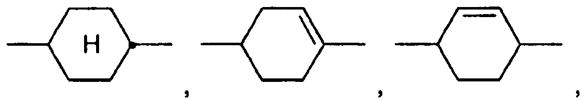 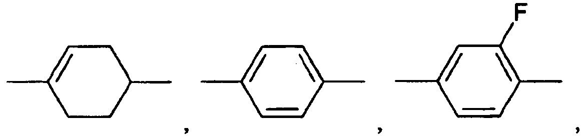 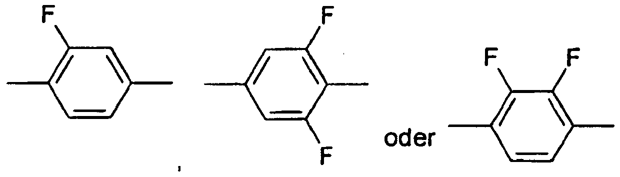 bedeuten,
Z⁴¹ und Z⁴² unabhängig voneinander und bei zweifachem Auftreten von Z⁴¹ auch diese unabhängig voneinander -CH₂CH₂-, -COO-, *trans-* -CH=CH-, *trans-* -CF=CF-, -CH₂O-, -CF₂O-, -C=C- oder eine Einfachbindung bedeuten und
p 0, 1 oder 2 bedeutet, enthält.

6. Flüssigkristallmedium nach einem oder mehreren der Ansprüche 1 bis 5, **dadurch gekennzeichnet, dass** die Konzentration der Komponente A im Medium im Bereich von 1 % bis 50 % liegt.

7. Flüssigkristallmedium nach einem oder mehreren der Ansprüche 4 bis 6, **dadurch gekennzeichnet, dass** es eine oder mehrere Verbindungen der Formel II wie in Anspruch 4 angegeben enthält.

8. Flüssigkristallmedium nach einem oder mehreren der Ansprüche 4 bis 7, **dadurch gekennzeichnet, dass** es eine oder mehrere Verbindungen der Formel III wie in Anspruch 4 angegeben enthält.

9. Flüssigkristallmedium nach einem oder mehreren der Ansprüche 5 bis 8, **dadurch gekennzeichnet, dass** es eine oder mehrere dielektrisch neutrale Verbindungen der Formel IV wie in Anspruch 5 angegeben enthält.

10. Flüssigkristallmedium nach einem oder mehreren der Ansprüche 1 bis 9, **dadurch gekennzeichnet, dass** es eine dielektrisch neutrale Komponente, Komponente D enthält, enthaltend eine oder mehrere dielektrisch neutrale Verbindungen der Formel VI 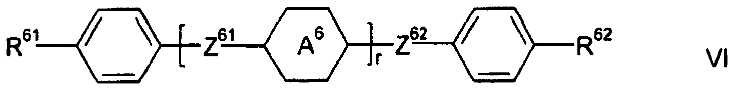 worin
R⁶¹ und R⁶² unabhängig voneinander die für R² unter Formel II in Anspruch 5 angegebene Bedeutung besitzen, 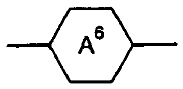 und bei zweifachem Auftreten bei jedem Auftreten unabhängig voneinander 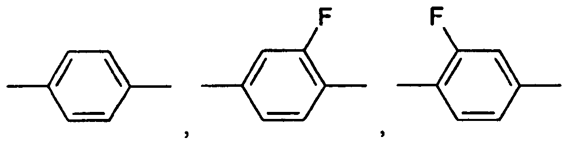 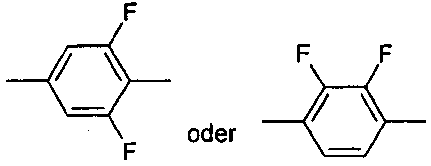 bedeutet,
Z⁶¹ und Z⁶² unabhängig voneinander und bei zweifachem Auftreten von Z⁶¹ auch diese unabhängig voneinander -CH₂CH₂-, -COO-, *trans*- -CH=CH-, *trans-* -CF=CF-, -CH₂O-, -CF₂O- oder eine Einfachbindung bedeuten und
r 0, 1 oder 2 bedeutet, enthält.

11. Flüssigkristallanzeige, **dadurch gekennzeichnet, dass** sie ein Flüssigkristallmedium nach einem oder mehreren der Ansprüche 1 bis 10 enthält.

12. Flüssigkristallanzeige nach Anspruch 11, **dadurch gekennzeichnet, dass** sie durch eine Aktivmatrix adressiert wird.

13. Verwendung eines Flüssigkristallmediums nach einem oder mehreren der Ansprüche 1 bis 10 in einer Flüssigkristallanzeige.

## Claims

1. Liquid-crystal medium, **characterised in that** it comprises
a dielectrically positive component, component A, comprising one or more dielectrically positive compounds of the formula l'A-1d 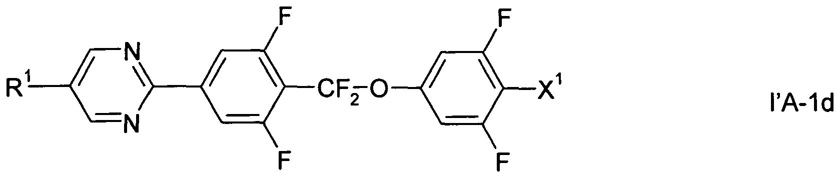 in which
R¹ denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, and
X¹ denotes -CN, halogen, halogenated alkyl or halogenated alkoxy having 1 to 3 C atoms or halogenated alkenyl or halogenated alkenyloxy having 2 or 3 C atoms.

2. Liquid-crystal medium according to Claim 1, **characterised in that** it comprises one or more dielectrically positive compounds of the formula l'A-1d in which X¹ denotes F, CF₃ or OCF₃.

3. Liquid-crystal medium according to Claim 1, **characterised in that** it comprises one or more dielectrically positive compounds of the formula l'A-1d in which X¹ denotes F.

4. Liquid-crystal medium according to one or more of Claims 1 to 3, **characterised in that** it comprises
a second dielectrically positive component, component B, comprising one or more dielectrically positive compounds, preferably selected from the group of the compounds of the formulae II and III 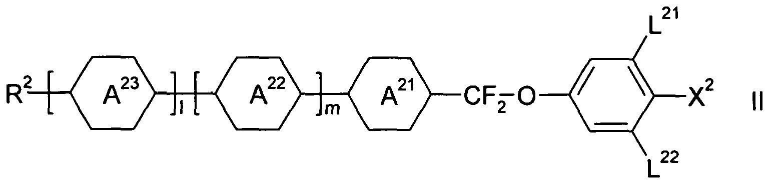 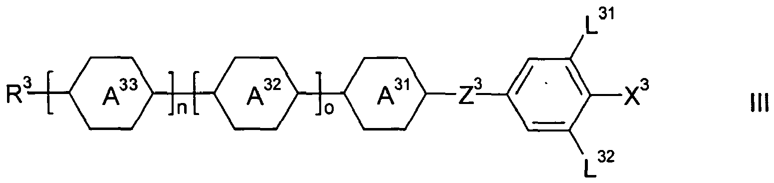 in which
R² and R³, independently of one another, denote alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, 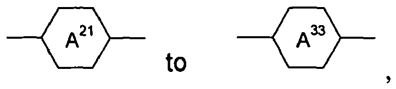 independently of one another, denote 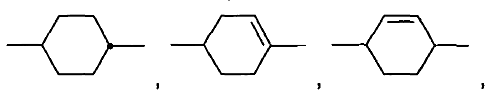 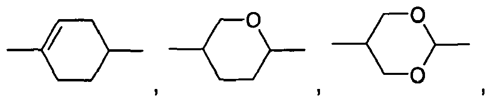 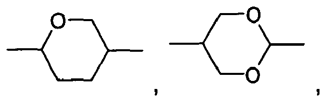 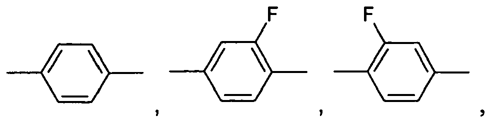 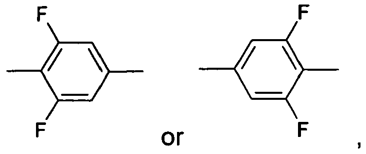
L²¹, L²², L³¹ and L³², independently of one another, denote H or F,
X² and X³, independently of one another, denote halogen, halogenated alkyl or alkoxy having 1 to 3 C atoms or halogenated alkenyl or alkenyloxy having 2 or 3 C atoms,
Z³ denotes -CH₂CH₂-, -CF₂CF₂-, -COO-, *trans*-CH=CH-, *trans*-CF=CF-, -CH₂O- or a single bond, and
l, m, n and o, independently of one another, denote 0 or 1.

5. Liquid-crystal medium according to one or more of Claims 1 to 4, **characterised in that** it comprises
a dielectrically neutral component, component C, comprising one or more dielectrically neutral compounds of the formula IV 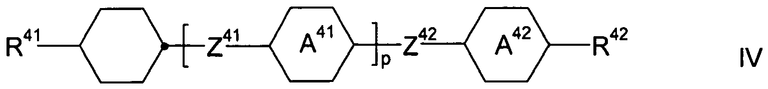 in which
R⁴¹ and R⁴², independently of one another, have the meaning indicated for R² under formula II in Claim 4, 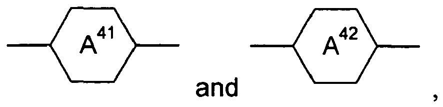 independently of one another and, in the case where 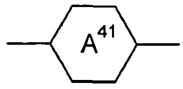 occurs twice, also these independently of one another, denote 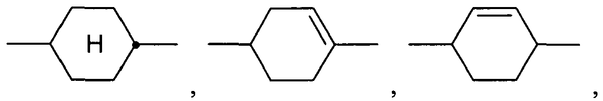 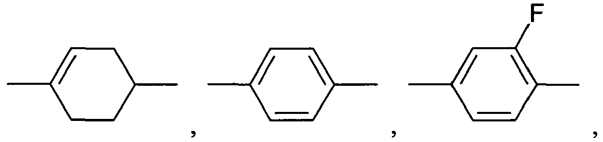 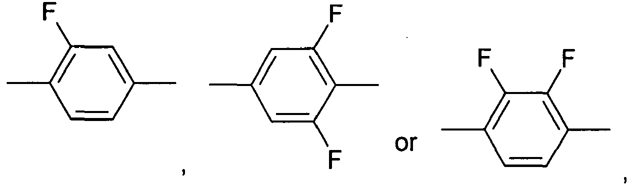
Z⁴¹ and Z⁴², independently of one another and, in the case where Z⁴¹ occurs twice, also these independently of one another, denote -CH₂CH₂-, -COO-, *trans-CH=CH-,* trans-CF=CF-, -CH₂O-, -CF₂O-, -C≡C- or a single bond, and
p denotes 0, 1 or 2.

6. Liquid-crystal medium according to one or more of Claims 1 to 5, **characterised in that** the concentration of component A in the medium is in the range from 1% to 50%.

7. Liquid-crystal medium according to one or more of Claims 4 to 6, **characterised in that** it comprises one or more compounds of the formula II as indicated in Claim 4.

8. Liquid-crystal medium according to one or more of Claims 4 to 7, **characterised in that** it comprises one or more compounds of the formula III as indicated in Claim 4.

9. Liquid-crystal medium according to one or more of Claims 5 to 8, **characterised in that** it comprises one or more dielectrically neutral compounds of the formula IV as indicated in Claim 5.

10. Liquid-crystal medium according to one or more of Claims 1 to 9, **characterised in that** it comprises a dielectrically neutral component, component D, comprising one or more dielectrically neutral compounds of the formula VI 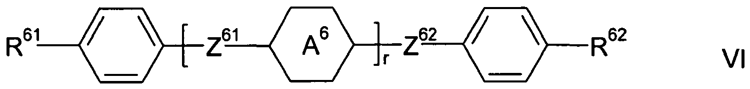 in which
R⁶¹ and R⁶², independently of one another, have the meaning indicated for R² under formula II in Claim 4, 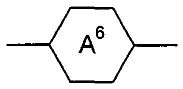 , and if it occurs twice, independently of one another on each occurrence, denotes 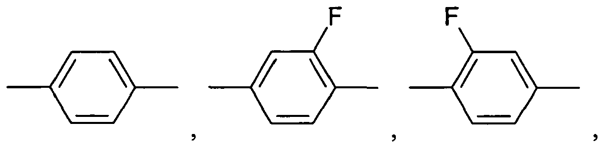 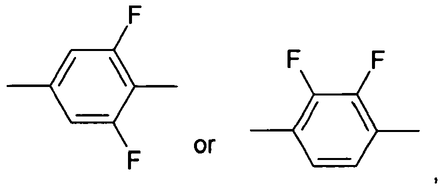
Z⁶¹ and Z⁶², independently of one another and, if Z⁶¹ occurs twice, also these independently of one another, denote -CH₂CH₂-, -COO-, *trans*-CH=CH-, *trans*-CF=CF-, -CH₂O-, -CF₂O- or a single bond, and
r denotes 0, 1 or 2.

11. Liquid-crystal display, **characterised in that** it contains a liquid-crystal medium according to one or more of Claims 1 to 10.

12. Liquid-crystal display according to Claim 11, **characterised in that** it is addressed by an active matrix.

13. Use of a liquid-crystal medium according to one or more of Claims 1 to 10 in a liquid-crystal display.

## Revendications

1. Milieu cristallin liquide, **caractérisé en ce qu'**il comprend
un composant diélectriquement positif, composant A, comprenant un ou plusieurs composés diélectriquement positifs de la formule l'A-1d 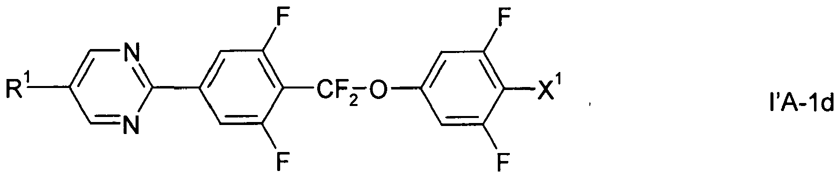 dans laquelle
R¹ représente alkyle, alcoxy, alkyle fluoré ou alcoxy fluoré comportant de 1 à 7 atomes de C, alkényle, alkényloxy, alcoxyalkyle ou alkényle fluoré comportant de 2 à 7 atomes de C, et
X¹ représente -CN, halogène, alkyle halogéné ou alcoxy halogéné comportant de 1 à 3 atomes de C ou alkényle halogéné ou alkényloxy halogéné comportant 2 ou 3 atomes de C.

2. Milieu cristallin liquide selon la revendication 1, **caractérisé en ce qu'**il comprend un ou plusieurs composés diélectriquement positifs de la formule l'A-1d dans laquelle X¹ représente F, CF₃ ou OCF₃.

3. Milieu cristallin liquide selon la revendication 1, **caractérisé en ce qu'**il comprend un ou plusieurs composés diélectriquement positifs de la formule l'A-1d dans laquelle X¹ représente F.

4. Milieu cristallin liquide selon une ou plusieurs des revendications 1 à 3, **caractérisé en ce qu'**il comprend
un second composant diélectriquement positif, composant B, comprenant un ou plusieurs composés diélectriquement positifs, de préférence choisis parmi le groupe des composés des formules II et III 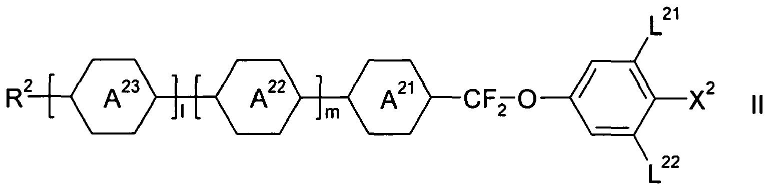 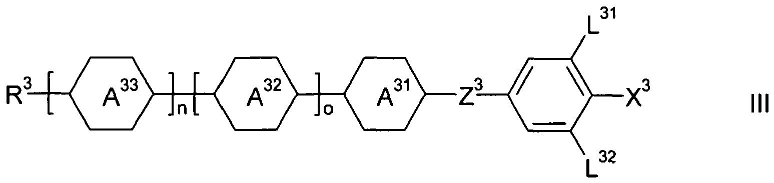 dans lesquelles
R² et R³ représentent, indépendamment l'un de l'autre, alkyle, alcoxy, alkyle fluoré ou alcoxy fluoré comportant de 1 à 7 atomes de C, alkényle, alkényloxy, alcoxyalkyle ou alkényle fluoré comportant de 2 à 7 atomes de C, 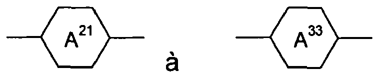 représentent, indépendamment les uns des autres 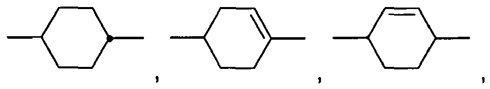 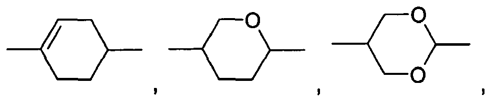 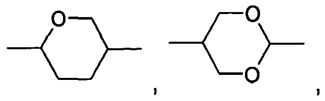 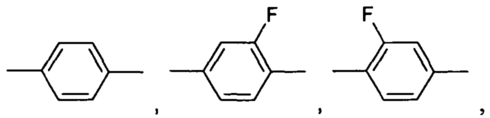 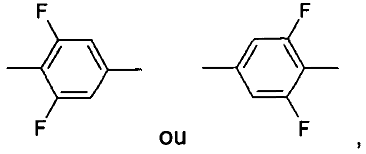
L²¹, L²², L³¹ et L³² représentent, indépendamment les uns des autres, H ou F,
X² et X³ représentent, indépendamment les uns des autres, halogène, alkyle ou alcoxy halogéné comportant de 1 à 3 atomes de C ou alkényle ou alkényloxy halogéné comportant 2 ou 3 atomes de C,
Z³ représente -CH₂CH₂-, -CF₂CF₂-, -COO-, *trans*-CH=CH-, *trans*-CF=CF-, -CH₂O- ou une liaison simple, et
l, m, n et o représentent, indépendamment les uns des autres, 0 ou 1.

5. Milieu cristallin liquide selon une ou plusieurs des revendications 1 à 4, **caractérisé en ce qu'**il comprend
un composant diélectriquement neutre, composant C, comprenant un ou plusieurs composés diélectriquement neutres de la formule IV 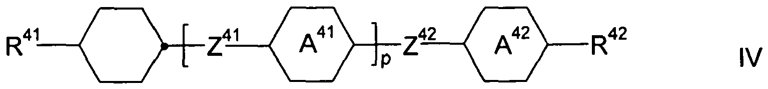 dans laquelle
R⁴¹ et R⁴² présentent, indépendamment l'un de l'autre, la signification indiquée pour R² au-dessous de la formule II selon la revendication 4, 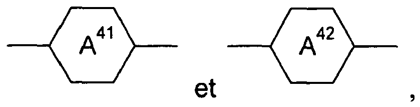 représentent, indépendamment l'un de l'autre, et, dans le cas où 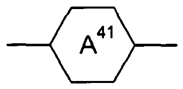 est selon deux occurrences, ces occurrences également indépendamment l'une de l'autre, 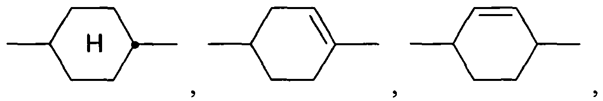 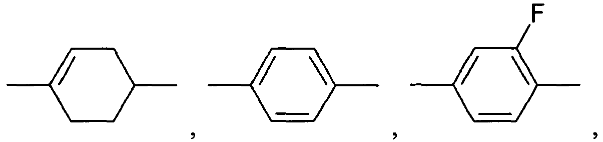 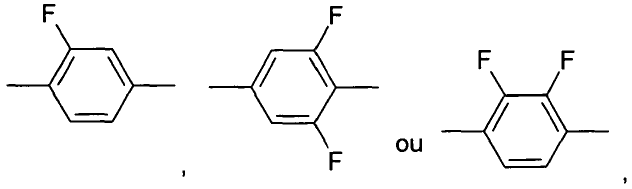 Z⁴¹ et Z⁴² représentent, indépendamment l'un de l'autre, et, dans le cas où Z⁴¹ est selon deux occurrences, ces occurrences également indépendamment l'une de l'autre, -CH₂CH₂-, -COO-, *trans*-CH=CH-, *trans-*CF=CF-, -CH₂O-, -CF₂O-, -C=C- ou une liaison simple, et
p représente 0, 1 ou 2.

6. Milieu cristallin liquide selon une ou plusieurs des revendications 1 à 5, **caractérisé en ce que** la concentration du composant A dans le milieu est dans la plage de 1% à 50%.

7. Milieu cristallin liquide selon une ou plusieurs des revendications 4 à 6, **caractérisé en ce qu'**il comprend un ou plusieurs composés de la formule II comme indiqué selon la revendication 4.

8. Milieu cristallin liquide selon une ou plusieurs des revendications 4 à 7, **caractérisé en ce qu'**il comprend un ou plusieurs composés de la formule III comme indiqué selon la revendication 4.

9. Milieu cristallin liquide selon une ou plusieurs des revendications 5 à 8, **caractérisé en ce qu'**il comprend un ou plusieurs composés diélectriquement neutres de la formule IV comme indique selon la revendication 5.

10. Milieu cristallin liquide selon une ou plusieurs des revendications 1 à 9, **caractérisé en ce qu'**il comprend un composant diélectriquement neutre, soit le composant D, comprenant un ou plusieurs composés diélectriquement neutres de la formule VI 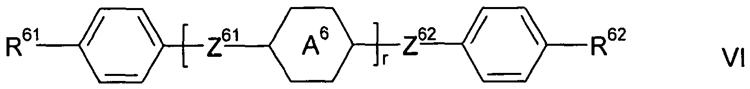 dans laquelle
R⁶¹ et R⁶² présentent, indépendamment l'un de l'autre, la signification indiquée pour R² au-dessous de la formule II selon la revendication 4, 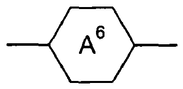 représente, et s'il est selon deux occurrences, ces occurrences indépendamment l'une de l'autre, 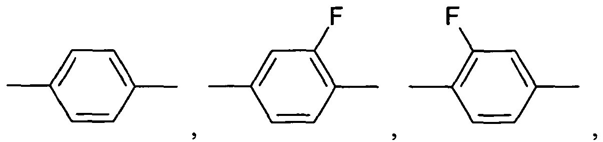 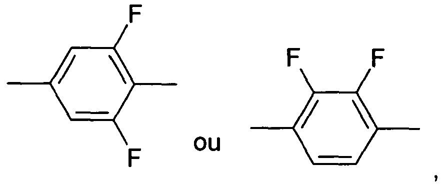
Z⁶¹ et Z⁶² représentent, indépendamment l'un de l'autre, et si Z⁶¹ est selon deux occurrences, ces occurrences également indépendamment l'une de l'autre, -CH₂CH₂-, -COO-, *trans-CH=CH-, trans-CF=CF-,* -CH₂O-, -CF₂O- ou une liaison simple, et
r représente 0, 1 ou 2.

11. Affichage à cristaux liquides, **caractérisé en ce qu'**il contient un milieu cristallin liquide selon une ou plusieurs des revendications 1 à 10.

12. Affichage à cristaux liquides selon la revendication 11, **caractérisé en ce qu'**il est adressé par matrice active.

13. Utilisation d'un milieu cristallin liquide selon une ou plusieurs des revendications 1 à 10 dans un affichage à cristaux liquides.
